# EUROPEAN PATENT APPLICATION

(11) **EP 4 380 273 A1**
(43) Date of publication of application: **05.06.2024**
(21) Application number: 22848438.2
(22) Date of filing: 22.07.2022
(51) Int. Cl.: H04W 72/04, H04L 5/00

(54) **INFORMATION TRANSMISSION METHOD AND COMMUNICATION APPARATUS**

(30) Priority: 26.07.2021 CN 202110844611; 05.11.2021 CN 202111307766
(71) Applicant: Huawei Technologies Co., Ltd., Shenzhen, Guangdong 518129 (CN)
(72) Inventor: LIU, Xiaoqing, Shenzhen, Guangdong 518129 (CN); ZHANG, Yongping, Shenzhen, Guangdong 518129 (CN); YU, Zheng, Shenzhen, Guangdong 518129 (CN); LI, Tie, Shenzhen, Guangdong 518129 (CN); GONG, Mingxin, Shenzhen, Guangdong 518129 (CN)
(74) Representative: Roth, Sebastian
(86) International application number: PCT/CN2022/107316
(87) International publication number: WO 2023/005833

(57) **Abstract**

This application provides an information transmission method and a communication apparatus. The method includes: A terminal device determines a first time resource, where the first time resource includes at least one time unit, and the first time resource is for sending a first reference signal RS. The terminal device determines a second time resource, where the second time resource includes at least one time unit, and the second time resource is for sending a second RS. There are K time units between the first time resource and the second time resource, and K is a natural number. K falls within a first value range, and a guard period GP between the first time resource and the second time resource includes a first quantity of time units. Alternatively, K falls within a second value range, and a GP does not exist. The terminal device sends the first RS on the first time resource, and sends the second RS on the second time resource. According to the foregoing method, in this application, a GP between different RSs is defined. This improves scheduling flexibility of a network device.

## Description

This application claims priorities to Chinese Patent Application No. 202110844611.4, filed with the China National Intellectual Property Administration on July 26, 2021 and entitled "INFORMATION TRANSMISSION METHOD AND COMMUNICATION APPARATUS", and to Chinese Patent Application No. 202111307766.0, filed with the China National Intellectual Property Administration on November 5, 2021 and entitled "INFORMATION TRANSMISSION METHOD AND COMMUNICATION APPARATUS", both of which are incorporated herein by reference in their entireties.

### TECHNICAL FIELD

This application relates to the field of communication technologies, and more specifically, to an information transmission method and a communication apparatus.

### BACKGROUND

In a 5th generation radio access system standard new radio (new radio, NR), a sounding reference signal (sounding reference signal, SRS) is used as a reference signal (reference signal, RS), and is sent by a terminal device to a network device to obtain quality information of a channel. Currently, the sounding reference signal supports four functions: codebook (codebook, CB)-based uplink transmission, non-codebook (non-codebook, NCB)-based uplink transmission, beam management (beam management, BM), and antenna switching (antenna switching, AS). Through SRS switching corresponding to the AS function, quality information of a downlink channel can be obtained by using channel reciprocity.

Due to a limitation of an antenna architecture of user equipment (user equipment, UE), for UE that does not support simultaneous sounding of all antennas, to obtain a full channel characteristic, transmission of a reference signal needs to be switched between available antennas. In this way, the UE can complete sounding of all the antennas within a period of time.

It is stipulated in an existing protocol that, in a same resource set in a same slot, all symbols between different SRS resources for AS are configured as a guard period (guard period, GP), and the UE does not transmit any other signal in the GP.

However, how to define a GP between different SRS resource sets and a GP between SRS resources in different slots, so that the GP meets a requirement in more scenarios is an urgent problem to be resolved currently.

### SUMMARY

This application provides an information transmission method and a communication apparatus. According to the method and the apparatus, in this application, a guard period between different reference signals can be defined, to improve scheduling flexibility of a network device.

According to a first aspect, an information transmission method is provided, including: A terminal device determines a first time resource, where the first time resource includes at least one time unit, and the first time resource is for sending a first reference signal RS. The terminal device determines a second time resource, where the second time resource includes at least one time unit, and the second time resource is for sending a second RS. There are K time units between the first time resource and the second time resource, and K is a natural number. When K falls within a first value range, a guard period GP between the first time resource and the second time resource includes a first quantity of time units. Alternatively, when K falls within a second value range, a GP between the first time resource and the second time resource does not exist. The terminal device sends the first RS on the first time resource, and sends the second RS on the second time resource.

It should be understood that, that the GP between the first time resource and the second time resource does not exist means that the GP is not configured between the first time resource and the second time resource, or the GP is not defined between the first time resource and the second time resource, or the GP between the first time resource and the second time resource includes zero time units.

It should be collectively noted herein that, in this application, the time units between the two time resources should be understood as follows: When the two time resources each include the at least one time unit, a time unit between the last time unit included in a previous time resource and the 1^{st} time unit included in a subsequent time resource constitutes an accurate meaning of the time unit between the two time resources in embodiments of this application.

According to the foregoing technical solution, in this application, a GP between different SRS resources in a same resource set is redefined, and a GP between different SRS resources in different resource sets is defined. In this way, the GPs can meet a requirement in another different scenario, to ensure that UE has sufficient duration to complete switching, and improve scheduling efficiency of a network device.

With reference to the first aspect, in some implementations of the first aspect, the first RS belongs to a first resource set, and the second RS belongs to a second resource set. The first resource set and the second resource set are different resource sets. Alternatively, the first RS and the second RS belong to a same resource set.

According to the foregoing technical solution, in this application, the GP between the different SRS resources in the same resource set is redefined, and the GP between the different SRS resources in the different resource sets is defined, so that the GPs can meet the requirement in the another different scenario. This can ensure that the UE has the sufficient time to complete switching, and improve scheduling flexibility and scheduling efficiency of the network device.

With reference to the first aspect, in some implementations of the first aspect, that K falls within a first value range means that a value of K is less than or equal to a first threshold; or that K falls within a second value range means that a value of K is greater than a first threshold, where the first threshold is a natural number.

According to the foregoing technical solution, in this application, a value relationship between the first threshold and a quantity of the time units between the first time resource and the second time resource is compared, so that the GP between the first time resource and the second time resource can be defined more flexibly. This can improve scheduling flexibility of the network device.

With reference to the first aspect, in some implementations of the first aspect, a value of the first quantity meets at least one of the following: The first quantity is a positive integer; or the first quantity is less than or equal to K.

According to the foregoing technical solution, in this application, GPs with different lengths can be defined based on different quantities of the time units between the first time resource and the second time resource, so that the different GPs can be determined for the different scenarios. This ensures that the UE has the sufficient duration to complete switching, and improves scheduling flexibility of the network device.

With reference to the first aspect, in some implementations of the first aspect, the method includes: The terminal device determines the GP based on K and the first threshold.

According to the foregoing technical solution, in this application, an association relationship can be established between a length of the GP and a transmission time interval of two adjacent reference signals. This can ensure that a GP between different SRS resource sets (or resources included in an SRS resource set) can be defined based on a relationship between the first threshold and the quantity of the time units between the first time resource and the second time resource, without causing a resource waste, thereby improving scheduling flexibility of the network device.

With reference to the first aspect, in some implementations of the first aspect, the method further includes: The terminal device sends first information to the network device, where the first information can indicate a reference value of the GP between two times of adjacent RS sending of the terminal device.

According to the foregoing technical solution, in this application, the UE can report, to the network device based on a GP requirement of the UE or a capability of the UE, a threshold or a condition for determining the GP, or report the length or a location of the GP to the network device. Therefore, in this application, a sufficient GP can be reserved for UE with a weak capability or a high GP requirement, to ensure the sufficient duration for antenna switching. A short GP can be reserved for UE with a strong capability or a low GP requirement, to ensure full utilization and scheduling flexibility of a resource.

Optionally, the first information is capability information reported by the terminal device. For example, the first information is information about whether the terminal device can send an RS on all symbols in one slot.

Specifically, when the terminal device can send the RS on all the symbols in the slot, a value of the GP between the two times of adjacent RS sending may be flexibly set, to improve scheduling flexibility of the network device. When the terminal device cannot send the RS on all the symbols in the slot, a value of the GP between two times of adjacent RS sending cannot be flexibly set.

According to the foregoing technical solution, in this application, whether the guard period needs to be reserved between the first time resource and the second time resource can be determined based on information about the location at which the RS can be sent and that is reported by the UE. If the UE can send the RS on all the symbols in the slot, when the first time resource and the second time resource belong to two consecutive slots, the first time resource may be adjacent to the second time resource. By configuring the guard period, it can be ensured that the UE has the sufficient duration to perform antenna switching. If the UE does not have a capability of sending the RS on all the symbols in the slot, that is, the UE can send the RS only on last six symbols, when the first time resource and the second time resource belong to two consecutive slots, there are at least eight symbols between the first time resource and the second time resource. In this case, the guard period does not need to be configured, and it can also be ensured that the UE has the sufficient duration to perform antenna switching. This reduces a limitation on data scheduling.

With reference to the first aspect, in some implementations of the first aspect, the method further includes: The terminal device receives first signaling, where the first signaling indicates the first threshold.

According to the foregoing technical solution, in this application, the network device can configure the first threshold based on a scheduling requirement, to support determining the length of the GP based on the scheduling requirement, so as to bring greater flexibility to scheduling by the network device.

With reference to the first aspect, in some implementations of the first aspect, the first threshold is a predefined value.

With reference to the first aspect, in some implementations of the first aspect, the first threshold is equal to 4.

The first threshold is determined as 4. In this way, in this application, compatibility with an existing protocol can be ensured, and a requirement on the existing protocol and the capability of the UE are slightly changed, to reduce a requirement on complexity of the UE.

With reference to the first aspect, in some implementations of the first aspect, the first threshold is configured by using a higher layer parameter.

With reference to the first aspect, in some implementations of the first aspect, the first threshold is one of values greater than 1 and less than or equal to 14.

According to a second aspect, an information transmission method is provided, including: A terminal device determines a first time resource, where the first time resource includes at least one time unit, and the first time resource is for sending a first RS. The terminal device determines a second time resource, where the second time resource includes at least one time unit, and the second time resource is for sending a second RS. There are K time units between the first time resource and the second time resource, and K is a natural number. K falls within a first value range, and a guard period GP between the first time resource and the second time resource includes a first quantity of time units; and/or K falls within a second value range, and a GP between the first time resource and the second time resource does not exist. The terminal device sends the first RS on the first time resource, and sends the second RS on the second time resource.

It should be understood that, that the GP between the first time resource and the second time resource does not exist means that the GP is not configured between the first time resource and the second time resource, or the GP is not defined between the first time resource and the second time resource, or the GP between the first time resource and the second time resource includes zero time units.

It should be collectively noted herein that, in this application, the time units between the two time resources should be understood as follows: When the two time resources each include the at least one time unit, a time unit between the last time unit included in a previous time resource and the 1^{st} time unit included in a subsequent time resource constitutes an accurate meaning of the time unit between the two time resources in embodiments of this application.

According to the foregoing technical solution, in this application, a GP between different SRS resources in a same resource set is redefined, and a GP between different SRS resources in different resource sets is defined. In this way, the GPs can meet a requirement in another different scenario, to ensure that UE has sufficient duration to complete switching, and improve scheduling efficiency of a network device.

With reference to the second aspect, in some implementations of the second aspect, the first RS belongs to a first resource set, and the second RS belongs to a second resource set. The first resource set and the second resource set are different resource sets. Alternatively, the first RS and the second RS belong to a same resource set.

With reference to the second aspect, in some implementations of the second aspect, if the first RS belongs to the first resource set, the second RS belongs to the second resource set, and the first resource set and the second resource set are the different resource sets, the first time resource is the last time unit occupied by the first resource set, and the second time resource is the 1^{st} time unit occupied by the second resource set. The first time resource is before the second time resource.

According to the foregoing technical solution, in this application, the GP between the different SRS resources in the same resource set is redefined, and the GP between the different SRS resources in the different resource sets is defined, so that the GPs can meet the requirement in the another different scenario. This can ensure that the UE has the sufficient time to complete switching, and improve scheduling flexibility and scheduling efficiency of the network device.

With reference to the second aspect, in some implementations of the second aspect, the first time resource belongs to a first slot, and the second time resource belongs to a second slot. The first slot and the second slot are two different slots. Alternatively, the first slot and the second slot are two consecutive slots. Alternatively, the first slot and the second slot are two inconsecutive slots. Alternatively, the first slot and the second slot are two same slots.

According to the foregoing technical solution, in this application, a GP between SRS resources in two different and consecutive slots is defined, so that the guard period can meet the requirement in the another different scenario. This can ensure that the UE has the sufficient duration to complete switching, and improve scheduling flexibility and scheduling efficiency of the network device.

With reference to the second aspect, in some implementations of the second aspect, that K falls within a first value range means that a value of K is less than or equal to a first threshold; or that K falls within a second value range means that a value of K is greater than a first threshold, where the first threshold is a natural number.

According to the foregoing technical solution, in this application, a value relationship between the first threshold and a quantity of the time units between the first time resource and the second time resource is compared, so that the GP between the first time resource and the second time resource can be defined more flexibly. This can improve scheduling flexibility of the network device.

With reference to the second aspect, in some implementations of the second aspect, the first threshold is a predefined value. Alternatively, the first threshold is a value configured by using a higher layer parameter.

With reference to the second aspect, in some implementations of the second aspect, the first threshold is associated with a U value. For example, the first threshold is equal to U, where the value of U is 1 or 2.

It should be understood that the U value means a minimum quantity of time units included in the GP when the GP is configured between the first time resource and the second time resource. In other words, when the GP is configured between the first time resource and the second time resource, a quantity of minimum time units included in the GP is equal to U.

Alternatively, a minimum interval between the first time resource and the second time resource is equal to U symbols. Optionally, the value of U is associated with a value of a subcarrier spacing. For example, U=1 when the subcarrier spacing is 15 kHz, 30 kHz, 60 kHz, or another value less than 120 kHz. For another example, U=2 when the subcarrier spacing is 120 kHz or a value greater than 120 kHz.

Optionally, the U value is not limited to 1 or 2, and may alternatively be another value.

With reference to the second aspect, in some implementations of the second aspect, the first threshold is equal to 8.

The first threshold is predefined as 8. In this way, in this application, when the first time resource and the second time resource respectively belong to two slots, it can be stipulated that, when the quantity of the time units between the first time resource and the second time resource is less than or equal to 8, the GP between the first time resource and the second time resource is configured. When the quantity of the time units between the first time resource and the second time resource is greater than 8, the GP between the first time resource and the second time resource is not configured. In this way, it can be ensured that the UE has the sufficient duration to perform antenna switching, and no additional limitation is imposed on data scheduling, to ensure backward compatibility of this solution. An existing protocol and a requirement on a capability of the UE are slightly changed, to reduce a requirement on complexity of the UE.

With reference to the second aspect, in some implementations of the second aspect, the first threshold is equal to U+y, where y is a positive integer, and a value of U is 1 or 2.

With reference to the second aspect, in some implementations of the second aspect, the first threshold is equal to 2U, where a value of U is 1 or 2.

With reference to the second aspect, in some implementations of the second aspect, that K falls within a first value range means that a value of K is less than or equal to a third threshold; or that K falls within a second value range means that a value of K is greater than a fourth threshold, where the third threshold and the fourth threshold are natural numbers. For example, the fourth threshold is greater than the third threshold.

Optionally, the third threshold and/or the fourth threshold are/is associated with the U value. For example, the third threshold is equal to U. Alternatively, the fourth threshold is greater than U.

It should be noted that, when K is greater than the third threshold and less than or equal to the fourth threshold, the GP may or may not be configured between the first time resource and the second time resource.

For example, when K is greater than the third threshold and less than or equal to the fourth threshold, and the first time resource and the second time resource belong to different and consecutive slots, the GP exists between the first time resource and the second time resource. For another example, when K is greater than the third threshold and less than or equal to the fourth threshold, and the first time resource and the second time resource belong to inconsecutive slots, the GP does not exist between the first time resource and the second time resource.

According to the foregoing technical solution, in this application, a value relationship between the third threshold, the fourth threshold, and a quantity of the time units between the first time resource and the second time resource is compared, so that the GP between the first time resource and the second time resource can be defined more flexibly. This can improve scheduling flexibility of the network device.

With reference to the second aspect, in some implementations of the second aspect, the third threshold is a predefined value, or the third threshold is a value configured by using a higher layer parameter; and/or the fourth threshold is a predefined value, or the fourth threshold is a value configured by using a higher layer parameter.

With reference to the second aspect, in some implementations of the second aspect, a value of the first quantity meets at least one of the following: The first quantity is a positive integer; or the first quantity is less than or equal to K.

With reference to the second aspect, in some implementations of the second aspect, the third threshold is equal to 13; and/or the fourth threshold is equal to 26.

According to the foregoing technical solution, the third threshold is equal to 13. This can ensure that the guard period exists between the first time resource and the second time resource when the first time resource and the second time resource belong to a same slot or belong to the different and consecutive slots, thereby ensuring that the UE has the sufficient duration to perform antenna switching. In addition, when the first time resource and the second time resource belong to the inconsecutive slots, whether to configure the guard period is not limited. This can reduce a limitation on data scheduling, and when the UE meets a switching condition and a performance requirement, ensures that no additional limitation is caused to data scheduling. The fourth threshold is equal to 26. This can ensure that, when the first time resource and the second time resource belong to the different and inconsecutive slots, because an interval between the first time resource and the second time resource is large enough, the guard period between the first time resource and the second time resource does not exist, thereby ensuring that no additional limitation is caused to data scheduling when the UE meets the switching condition and the performance requirement.

With reference to the second aspect, in some implementations of the second aspect, the method includes: The terminal device determines the GP based on K and the first threshold; or the terminal device determines the GP based on K, the third threshold, and the fourth threshold.

According to the foregoing technical solution, in this application, an association relationship can be established between a length of the GP and a transmission time interval of two adjacent reference signals. This can ensure that a GP between different SRS resource sets (or resources included in an SRS resource set) can be defined based on a relationship between the first threshold and the quantity of the time units between the first time resource and the second time resource, without causing a resource waste, thereby improving scheduling flexibility of the network device.

With reference to the second aspect, in some implementations of the second aspect, a value of the first quantity meets at least one of the following: The first quantity is a positive integer; or the first quantity is less than or equal to K.

According to the foregoing technical solution, in this application, GPs with different lengths can be defined based on different quantities of the time units between the first time resource and the second time resource, so that the different GPs can be determined for the different scenarios. This ensures that the UE has the sufficient duration to complete switching, and improves scheduling flexibility of the network device.

With reference to the second aspect, in some implementations of the second aspect, the method further includes: The terminal device receives first signaling, where the first signaling indicates the first threshold. Alternatively, the terminal device receives first signaling, where the first signaling indicates the third threshold and/or the fourth threshold.

According to the foregoing technical solution, in this application, the network device can configure the first threshold or configure the third threshold and/or the fourth threshold based on a scheduling requirement, to support determining the length of the GP based on the scheduling requirement, so as to bring greater flexibility to scheduling by the network device.

With reference to the second aspect, in some implementations of the second aspect, the method further includes: The terminal device sends fourth information, where the fourth information indicates the first threshold; or the terminal device sends fourth information, where the fourth information indicates the third threshold and/or the fourth threshold.

Optionally, the fourth information can be for determining the first threshold. Alternatively, the fourth information can be for determining the third threshold and/or the fourth threshold.

According to the foregoing technical solution, in this application, the UE can report, to the network device based on a GP requirement of the UE or a capability of the UE, a threshold or a condition for determining the GP. Therefore, in this application, a sufficient GP can be reserved for UE with a weak capability or a high GP requirement, to ensure the sufficient duration for antenna switching. A short GP can be reserved for UE with a strong capability or a low GP requirement, to ensure full utilization and scheduling flexibility of a resource.

Optionally, the fourth information is capability information reported by the terminal device. For example, the fourth information is information about whether the terminal device can send an RS on all symbols in one slot.

According to the foregoing technical solution, in this application, whether the guard period needs to be reserved between the first time resource and the second time resource can be determined based on information about a location at which the RS can be sent and that is reported by the UE. If the UE can send the RS on all the symbols in the slot, when the first time resource and the second time resource belong to the two consecutive slots, the first time resource may be adjacent to the second time resource. By configuring the guard period, it can be ensured that the UE has the sufficient duration to perform antenna switching. If the UE does not have a capability of sending the RS on all the symbols in the slot, that is, the UE can send the RS only on last six symbols, when the first time resource and the second time resource belong to the two consecutive slots, there are at least eight symbols between the first time resource and the second time resource. In this case, the guard period does not need to be configured, and it can also be ensured that the UE has the sufficient duration to perform antenna switching. This reduces a limitation on data scheduling.

According to a third aspect, an information transmission method is provided, including: A terminal device determines a first time resource, where the first time resource includes at least one time unit, and the first time resource is for sending a first RS. The terminal device determines a second time resource, where the second time resource includes at least one time unit, and the second time resource is for sending a second RS. There are K time units between the first time resource and the second time resource, and K is a natural number. The first time resource and the second time resource belong to two consecutive slots, and a guard period GP between the first time resource and the second time resource includes a third quantity of time units; and/or the first time resource and the second time resource belong to two inconsecutive slots, and a GP between the first time resource and the second time resource does not exist. The terminal device sends the first RS on the first time resource, and sends the second RS on the second time resource.

It should be understood that consecutive slots are equivalent to adjacent slots. That the first time resource and the second time resource belong to the two consecutive slots means being equivalent to that a slot in which the first time resource is located is adjacent to a slot in which the second time resource is located, or being equivalent to that the first RS and the second RS are transmitted in adjacent slots.

According to the foregoing technical solution, when the first time resource and the second time resource belong to the two consecutive slots, in this application, a GP between different SRS resources in a same resource set is redefined, or a GP between different SRS resources in different resource sets is defined, so that the GP can ensure that UE has sufficient duration to complete switching. When the first time resource and the second time resource belong to the two inconsecutive slots, in this application, the GP between the first time resource and the second time resource is not configured. In this way, in this application, an existing time interval between the first time resource and the second time resource can be used, to ensure that the UE has the sufficient duration to complete switching. When the first time resource and the second time resource belong to the two inconsecutive slots, the interval between the two time resources is large, and data scheduling is allowed between the two time resources. However, duration used by the UE to perform antenna switching is short, and impact on data scheduling performance is small. Therefore, scheduling efficiency of the network device can be improved.

With reference to the third aspect, in some implementations of the third aspect, the first time resource and the second time resource belong to the two consecutive slots, and K falls within a first value range, and the guard period GP between the first time resource and the second time resource includes the third quantity of time units; and/or K falls within a second value range, and the guard period GP between the first time resource and the second time resource includes a fourth quantity of time units.

Specifically, a value of the third quantity is equal to K, and a value of the fourth quantity is less than K.

Optionally, the value of the fourth quantity is equal to U, where a value of U is 1 or 2.

With reference to the third aspect, in some implementations of the third aspect, that K falls within a first value range means that a value of K is less than or equal to a first threshold; or that K falls within a second value range means that a value of K is greater than a first threshold, where the first threshold is a natural number.

With reference to the third aspect, in some implementations of the third aspect, the first threshold is a predefined value; or the first threshold is a value configured by using a higher layer parameter.

With reference to the third aspect, in some implementations of the third aspect, the first threshold is equal to 4.

The first threshold is determined as 4. In this way, in this application, compatibility with an existing protocol can be ensured, and a requirement on the existing protocol and a capability of the UE are slightly changed, to reduce a requirement on complexity of the UE.

With reference to the third aspect, in some implementations of the third aspect, the first threshold is equal to 8.

The first threshold is predefined as 8. In this way, in this application, it is stipulated that, when a quantity of the time units between the first time resource and the second time resource is less than or equal to 8, the GP between the first time resource and the second time resource is configured. When the quantity of the time units between the first time resource and the second time resource is greater than 8, the GP between the first time resource and the second time resource is not configured. In this way, it can be ensured that the UE has the sufficient duration to perform antenna switching, and no additional limitation is imposed on data scheduling, to ensure backward compatibility of this solution. The existing protocol and a requirement on a capability of the UE are slightly changed, to reduce a requirement on complexity of the UE.

With reference to the third aspect, in some implementations of the third aspect, the first threshold is associated with the U value. For example, the first threshold is equal to U+y; or the first threshold is 4, where y is a positive integer, and a value of U is 1 or 2.

It should be understood that the U value means a minimum quantity of time units included in the GP when the GP is configured between the first time resource and the second time resource. In other words, when the GP is configured between the first time resource and the second time resource, a quantity of minimum time units included in the GP is equal to U.

Alternatively, a minimum interval between the first time resource and the second time resource is equal to U symbols. Optionally, the value of U is associated with a value of a subcarrier spacing. For example, U=1 when the subcarrier spacing is 15 kHz, 30 kHz, 60 kHz, or another value less than 120 kHz. For another example, U=2 when the subcarrier spacing is 120 kHz or a value greater than 120 kHz.

Optionally, the U value is not limited to 1 or 2, and may alternatively be another value.

It should be understood that, that the first threshold is equal to U+y means that the first threshold is greater than U, and a difference between the first threshold and U is y.

For example, the first threshold is U+y, where y is a positive integer. For example, y=0, y=1, y=2, or y=3. For example, if U=1, and y=3, the first threshold is 4. Alternatively, if U=2, and y=2, the first threshold is 4. Alternatively, if U=2, and y=0, the first threshold is 2. A value of y is predefined, or a value of y is configured by using a higher layer parameter. For example, y=0.

With reference to the third aspect, in some implementations of the third aspect, the first threshold is equal to 2U, where the value of U is 1 or 2.

With reference to the third aspect, in some implementations of the third aspect, a value of the first quantity meets at least one of the following: The first quantity is a positive integer; or the first quantity is less than or equal to K.

With reference to the third aspect, in some implementations of the third aspect, the method further includes: The terminal device sends fourth information, where the fourth information indicates the first threshold.

Optionally, the fourth information can be for determining the first threshold.

According to the foregoing technical solution, in this application, the UE can report, to the network device based on a GP requirement of the UE or the capability of the UE, a threshold or a condition for determining the GP. Therefore, in this application, a sufficient GP can be reserved for UE with a weak capability or a high GP requirement, to ensure the sufficient duration for antenna switching. A short GP can be reserved for UE with a strong capability or a low GP requirement, to ensure full utilization and scheduling flexibility of a resource.

Optionally, the fourth information is capability information reported by the terminal device. For example, the fourth information is information about whether the terminal device can send an RS on all symbols in one slot.

According to the foregoing technical solution, in this application, whether the guard period needs to be reserved between the first time resource and the second time resource can be determined based on information about a location at which the RS can be sent and that is reported by the UE. If the UE can send the RS on all the symbols in the slot, when the first time resource and the second time resource belong to the two consecutive slots, the first time resource may be adjacent to the second time resource. By configuring the guard period, it can be ensured that the UE has the sufficient duration to perform antenna switching. If the UE does not have a capability of sending the RS on all the symbols in the slot, that is, the UE can send the RS only on last six symbols, when the first time resource and the second time resource belong to the two consecutive slots, there are at least eight symbols between the first time resource and the second time resource. In this case, the guard period does not need to be configured, and it can also be ensured that the UE has the sufficient duration to perform antenna switching. This reduces a limitation on data scheduling.

According to a fourth aspect, an information transmission method is provided, including: A terminal device determines a first time resource, where the first time resource includes at least one time unit, and the first time resource is for sending a first RS. The terminal device determines a second time resource, where the second time resource includes at least one time unit, and the second time resource is for sending a second RS. There are K time units between the first time resource and the second time resource, and K is a natural number. K falls within a first value range, and a guard period GP between the first time resource and the second time resource includes a fifth quantity of time units; and/or K falls within a second value range, and a guard period GP between the first time resource and the second time resource includes a sixth quantity of time units; and/or K falls within a third value range, and a GP between the first time resource and the second time resource does not exist, where the fifth quantity and the sixth quantity are natural numbers. The terminal device sends the first RS on the first time resource, and sends the second RS on the second time resource.

Specifically, when K falls within the first value range, a data scheduling requirement is low. In this application, data is not allowed to be sent on any symbol between the two resources, to ensure that UE reserves sufficient duration to perform antenna switching. When K falls within the second value range, a data scheduling requirement is high. In this application, data is allowed to be sent on some symbols between the two resources, and the GP is defined, to ensure that UE reserves sufficient duration to perform antenna switching, and ensure data transmission performance. When K falls within the third value range, a distance between the two RSs is long enough. In this application, the terminal device performs antenna switching, and data is allowed to be sent on any symbol between the two resources. This can ensure that data scheduling is not limited, and ensure that a data transmission performance loss caused by antenna switching is small.

According to the foregoing technical solution, in this application, a GP between different SRS resources in a same resource set is redefined based on a time domain location relationship between the first time resource and the second time resource, and a GP between different SRS resources in different resource sets is defined. In this way, the GPs can meet a requirement in another different scenario, to ensure that the UE has the sufficient duration to complete switching, and improve scheduling efficiency of a network device.

With reference to the fourth aspect, in some implementations of the fourth aspect, the first RS belongs to a first resource set, and the second RS belongs to a second resource set. The first resource set and the second resource set are different resource sets. Alternatively, the first RS and the second RS belong to a same resource set.

With reference to the fourth aspect, in some implementations of the fourth aspect, that K falls within a first value range means that a value of K is less than or equal to a first threshold; that K falls within a second value range means that a value of K is greater than a first threshold, and the value of K is less than or equal to a fifth threshold; or that K falls within a third value range means that a value of K is greater than a fifth threshold, where the first threshold and the fifth threshold are natural numbers.

With reference to the fourth aspect, in some implementations of the fourth aspect, the first threshold is a predefined value, or the first threshold is a value configured by using a higher layer parameter; and/or the fifth threshold is a predefined value, or the fifth threshold is a value configured by using a higher layer parameter.

With reference to the fourth aspect, in some implementations of the fourth aspect, the first threshold and/or the fifth threshold are/is associated with a value of U. For example, the first threshold is equal to U+y, where y is a positive integer, and the value of U is 1 or 2; or the first threshold is equal to 4; or the first threshold is equal to 8.

It should be understood that the U value means a minimum quantity of time units included in the GP when the GP is configured between the first time resource and the second time resource. In other words, when the GP is configured between the first time resource and the second time resource, a quantity of minimum time units included in the GP is equal to U.

Alternatively, a minimum interval between the first time resource and the second time resource is equal to U symbols. Optionally, the value of U is associated with a value of a subcarrier spacing. For example, U=1 when the subcarrier spacing is 15 kHz, 30 kHz, 60 kHz, or another value less than 120 kHz. For another example, U=2 when the subcarrier spacing is 120 kHz or a value greater than 120 kHz.

Optionally, the U value is not limited to 1 or 2, and may alternatively be another value.

It should be understood that a specific value of the first threshold may be set in the foregoing manner, that is, equal to U+y, or may be set in any manner. This is not specifically limited in embodiments of this application.

With reference to the fourth aspect, in some implementations of the fourth aspect, the first threshold is equal to 2U, where a value of U is 1 or 2.

With reference to the fourth aspect, in some implementations of the fourth aspect, a value of the first quantity meets at least one of the following: The first quantity is a positive integer; or the first quantity is less than or equal to K.

With reference to the fourth aspect, in some implementations of the fourth aspect, the fifth threshold is equal to 8; or the fifth threshold is equal to 14; or the fifth threshold is equal to 26.

Specifically, when the fifth threshold is 8, in this application, when the first time resource and the second time resource respectively belong to two slots, that the GP between the first time resource and the second time resource is configured when a quantity of the time units between the first time resource and the second time resource is less than or equal to 8 is defined, to ensure backward compatibility. According to a stipulation for a 1T4R aperiodic SRS in Rel-15/16 protocol, when a minimum interval between two resource sets is eight symbols, a GP is not defined between two resource sets in two slots. Therefore, the fifth threshold is defined as 8. In this way, an existing protocol and a requirement on a capability of the UE are slightly changed, to reduce a requirement on complexity of the UE. When the fifth threshold is 14, in this application, a guard period between two resource sets in two consecutive slots is defined, and a guard period between two resource sets in inconsecutive slots is not defined. A minimum distance between two inconsecutive slots is 14. Therefore, the fifth threshold is defined as 14. This can ensure that there are at least 14 symbols between the two resource sets. To be specific, the sufficient duration is reserved between the two resource sets to perform antenna switching. When the fifth threshold is 26, in this application, a guard period between two resource sets in two consecutive slots is defined, and a guard period between two resource sets in inconsecutive slots is not defined. A maximum distance between the two consecutive slots is 26. Therefore, the fifth threshold is defined as 26. This can ensure that there are at least 26 symbols between the two resource sets. To be specific, the sufficient duration is reserved to perform antenna switching.

With reference to the fourth aspect, in some implementations of the fourth aspect, the fifth quantity is equal to K, and the sixth quantity is equal to U, where a value of U is 1 or 2.

Optionally, the sixth quantity is less than or equal to the fifth quantity. For example, the time units between the first time resource and the second time resource are five symbols, the fifth quantity is equal to 5, and the sixth quantity is equal to 1 or 2.

With reference to the fourth aspect, in some implementations of the fourth aspect, the method includes: The terminal device determines the GP based on K, the first threshold, and the fifth threshold.

According to the foregoing technical solution, in this application, an association relationship can be established between a length of the GP and a transmission time interval of two adjacent reference signals. This can ensure that a GP between different SRS resource sets (or resources included in an SRS resource set) can be defined based on a relationship between the first threshold, the fifth threshold, and the quantity of the time units between the first time resource and the second time resource, without causing a resource waste, thereby improving scheduling flexibility of the network device when it is ensured that the UE has the sufficient duration to perform antenna switch.

With reference to the fourth aspect, in some implementations of the fourth aspect, the method further includes: The terminal device receives first signaling, where the first signaling indicates the first threshold. Alternatively, the terminal device receives first signaling, where the first signaling indicates the first threshold and/or the fifth threshold.

According to the foregoing technical solution, in this application, the network device can configure the first threshold and/or the fifth threshold based on a scheduling requirement, to support determining the length of the GP based on the scheduling requirement, so as to bring greater flexibility to scheduling by the network device.

With reference to the fourth aspect, in some implementations of the fourth aspect, the method further includes: The terminal device sends fourth information, where the fourth information indicates the first threshold; or the terminal device sends fourth information, where the fourth information indicates the first threshold and/or the fifth threshold.

Optionally, the fourth information can be for determining the first threshold. Alternatively, the fourth information can be for determining the first threshold and/or the fifth threshold.

According to the foregoing technical solution, in this application, the UE can report, to the network device based on a GP requirement of the UE or the capability of the UE, a threshold or a condition for determining the GP. Therefore, in this application, a sufficient GP can be reserved for UE with a weak capability or a high GP requirement, to ensure the sufficient duration for antenna switching. A short GP can be reserved for UE with a strong capability or a low GP requirement, to ensure full utilization and scheduling flexibility of a resource.

Optionally, the fourth information is capability information reported by the terminal device. For example, the fourth information is information about whether the terminal device can send an RS on all symbols in one slot.

According to the foregoing technical solution, in this application, whether the guard period needs to be reserved between the first time resource and the second time resource can be determined based on information about a location at which the RS can be sent and that is reported by the UE. If the UE can send the RS on all the symbols in the slot, when the first time resource and the second time resource belong to the two consecutive slots, the first time resource may be adjacent to the second time resource. By configuring the guard period, it can be ensured that the UE has the sufficient duration to perform antenna switching. If the UE does not have a capability of sending the RS on all the symbols in the slot, that is, the UE can send the RS only on last six symbols, when the first time resource and the second time resource belong to two consecutive slots, there are at least eight symbols between the first time resource and the second time resource. In this case, the guard period does not need to be configured, and it can also be ensured that the UE has the sufficient duration to perform antenna switching. This reduces a limitation on data scheduling.

According to a fifth aspect, an information transmission method is provided, including: A terminal device determines a third time resource, where the third time resource includes at least one time unit, and the third time resource is for sending a third reference signal RS. The terminal device determines a fourth time resource, where the fourth time resource includes at least one time unit, and the fourth time resource is for sending a fourth RS. A guard period GP between the third time resource and the fourth time resource includes Z time units, and Z is a natural number. The GP meets at least one of the following: A quantity of the time units included in the GP is predefined or configured by using signaling; a location of the GP is configured by using signaling; or a location of the GP is related to the third time resource and the fourth time resource. The terminal device sends the third RS on the third time resource, and sends the fourth RS on the fourth time resource.

It should be understood that the location of the GP is configured by using the signaling. The signaling herein is higher layer configuration information, for example, an RRC message. Alternatively, the signaling herein is MAC CE signaling.

It should be understood that a value of Z is predefined, or is indicated by higher layer parameter information, or is indicated by downlink control information. The higher layer parameter information or the downlink control information may be determined based on information reported by UE.

According to the foregoing technical solutions, in this application, it can be ensured that there is sufficient switching duration between SRSs for antenna switching. In addition, the GP does not occupy excessive time units. This provides greater scheduling flexibility for a network device.

With reference to the fifth aspect, in some implementations of the fifth aspect, the third RS belongs to a third resource set, and the fourth RS belongs to a fourth resource set. The third resource set and the fourth resource set are different resource sets. Alternatively, the third RS and the fourth RS belong to a same resource set.

In this application, a GP between two resource sets is defined, and a GP between different SRS resources in a same resource set is defined. This can meet requirements in different scenarios, and improve scheduling flexibility of the network device.

With reference to the fifth aspect, in some implementations of the fifth aspect, when Z is 1, the Z time units are adjacent to the third time resource. Alternatively, there are M time units between the Z time units and the third time resource. Alternatively, the Z time units are adjacent to the fourth time resource. Alternatively, there are N time units between the Z time units and the fourth time resource. N and M are natural numbers, and N and M are predefined or configured by using signaling.

A length and the location of the GP are determined in the foregoing signaling configuration or predefined manner. In this application, scheduling flexibility of the network device can be improved.

With reference to the fifth aspect, in some implementations of the fifth aspect, if Z is greater than or equal to 2, and the Z time units are adjacent time units, the 1^{st} time unit in the Z time units is adjacent to the third time resource. Alternatively, there are L time units between the 1^{st} time unit in the Z time units and the third time resource. Alternatively, the last time unit in the Z time units is adjacent to the fourth time resource. Alternatively, there are Y time units between the last time unit in the Z time units and the fourth time resource. Both L and Y are natural numbers, and L and Y are predefined or configured by using signaling.

A length and the location of the GP are determined in the foregoing signaling configuration or predefined manner. In this application, scheduling flexibility of the network device can be improved.

With reference to the fifth aspect, in some implementations of the fifth aspect, the method further includes: The terminal device sends second information to the network device, where the second information indicates a reference value of the GP between two times of adjacent RS sending of the terminal device.

According to the foregoing technical solution, in this application, the UE can report, to the network device based on a GP requirement of the UE or a capability of the UE, a threshold or a condition for determining the GP, or report the length or the location of the GP to the network device. Therefore, in this application, a sufficient GP can be reserved for UE with a weak capability or a high GP requirement, to ensure sufficient duration for antenna switching. A short GP can be reserved for UE with a strong capability or a low GP requirement, to ensure full utilization and scheduling flexibility of a resource.

According to a sixth aspect, an information transmission method is provided, including: A network device determines a first time resource, where the first time resource includes at least one time unit, and the first time resource is for sending a first reference signal RS. The network device determines a second time resource, where the second time resource includes at least one time unit, and the second time resource is for sending a second RS. There are K time units between the first time resource and the second time resource, and K is a natural number. When K falls within a first value range, a guard period GP between the first time resource and the second time resource includes a first quantity of time units. Alternatively, when K falls within a second value range, a GP between the first time resource and the second time resource does not exist. The network device receives the first RS on the first time resource, and receives the second RS on the second time resource.

With reference to the sixth aspect, in some implementations of the sixth aspect, the first RS belongs to a first resource set, and the second RS belongs to a second resource set. The first resource set and the second resource set are different resource sets. Alternatively, the first RS and the second RS belong to a same resource set.

With reference to the sixth aspect, in some implementations of the sixth aspect, that K falls within a first value range means that a value of K is less than or equal to a first threshold; or that K falls within a second value range means that a value of K is greater than a first threshold, where the first threshold is a natural number.

With reference to the sixth aspect, in some implementations of the sixth aspect, a value of the first quantity meets at least one of the following: The first quantity is a positive integer; or the first quantity is less than or equal to K.

With reference to the sixth aspect, in some implementations of the sixth aspect, the method includes: The network device determines the GP based on K and the first threshold.

With reference to the sixth aspect, in some implementations of the sixth aspect, the method further includes: The network device receives first information from a terminal device, where the first information can indicate a reference value of the GP between two times of adjacent RS sending of the terminal device.

With reference to the sixth aspect, in some implementations of the sixth aspect, the method further includes: sending first signaling, where the first signaling indicates the first threshold.

With reference to the sixth aspect, in some implementations of the sixth aspect, the first threshold is a predefined value.

With reference to the sixth aspect, in some implementations of the sixth aspect, the first threshold is equal to 4.

With reference to the sixth aspect, in some implementations of the sixth aspect, the first threshold is configured by using a higher layer parameter.

With reference to the sixth aspect, in some implementations of the sixth aspect, the first threshold is one of values greater than 1 and less than or equal to 14.

According to a seventh aspect, an information transmission method is provided, including: A network device determines a first time resource, where the first time resource includes at least one time unit, and the first time resource is for sending a first RS. The network device determines a second time resource, where the second time resource includes at least one time unit, and the second time resource is for sending a second RS. There are K time units between the first time resource and the second time resource, and K is a natural number. K falls within a first value range, and a guard period GP between the first time resource and the second time resource includes a first quantity of time units; and/or K falls within a second value range, and a GP between the first time resource and the second time resource does not exist. The network device sends the first RS on the first time resource, and sends the second RS on the second time resource.

With reference to the seventh aspect, in some implementations of the seventh aspect, the first RS belongs to a first resource set, and the second RS belongs to a second resource set. The first resource set and the second resource set are different resource sets. Alternatively, the first RS and the second RS belong to a same resource set.

With reference to the seventh aspect, in some implementations of the seventh aspect, if the first RS belongs to the first resource set, and the second RS belongs to the second resource set, and the first resource set and the second resource set are different resource sets, the first time resource is the last time unit occupied by the first resource set, and the second time resource is the 1^{st} time unit occupied by the second resource set. The first time resource is before the second time resource.

With reference to the seventh aspect, in some implementations of the seventh aspect, the first time resource belongs to a first slot, and the second time resource belongs to a second slot. The first slot and the second slot are two different slots. Alternatively, the first slot and the second slot are two consecutive slots. Alternatively, the first slot and the second slot are two inconsecutive slots. Alternatively, the first slot and the second slot are two same slots.

With reference to the seventh aspect, in some implementations of the seventh aspect, that K falls within a first value range means that a value of K is less than or equal to a first threshold; or that K falls within a second value range means that a value of K is greater than a first threshold, where the first threshold is a natural number.

With reference to the seventh aspect, in some implementations of the seventh aspect, the first threshold is a predefined value; or the first threshold is a value configured by using a higher layer parameter.

With reference to the seventh aspect, in some implementations of the seventh aspect, the first threshold is associated with a U value. For example, the first threshold is equal to U, where the value of U is 1 or 2.

With reference to the seventh aspect, in some implementations of the seventh aspect, the first threshold is equal to 8.

With reference to the seventh aspect, in some implementations of the seventh aspect, that K falls within a first value range means that a value of K is less than or equal to a third threshold; or that K falls within a second value range means that a value of K is greater than a fourth threshold, where the third threshold and the fourth threshold are natural numbers. For example, the fourth threshold is greater than the third threshold.

With reference to the seventh aspect, in some implementations of the seventh aspect, the third threshold is a predefined value, or the third threshold is a value configured by using a higher layer parameter; and/or the fourth threshold is a predefined value, or the fourth threshold is a value configured by using a higher layer parameter.

With reference to the seventh aspect, in some implementations of the seventh aspect, the third threshold is equal to 13; and/or the fourth threshold is equal to 26.

With reference to the seventh aspect, in some implementations of the seventh aspect, the first threshold is equal to U+y, where y is a positive integer, and a value of U is 1 or 2.

With reference to the seventh aspect, in some implementations of the seventh aspect, the first threshold is equal to 2U, where a value of U is 1 or 2.

With reference to the seventh aspect, in some implementations of the seventh aspect, a value of the first quantity meets at least one of the following: The first quantity is a positive integer; or the first quantity is less than or equal to K.

With reference to the seventh aspect, in some implementations of the seventh aspect, the method includes: The network device determines the GP based on K and the first threshold; or the network device determines the GP based on K, the third threshold, and the fourth threshold.

With reference to the seventh aspect, in some implementations of the seventh aspect, a value of the first quantity meets at least one of the following: The first quantity is a positive integer; or the first quantity is less than or equal to K.

With reference to the seventh aspect, in some implementations of the seventh aspect, the method further includes: The network device sends first signaling, where the first signaling indicates the first threshold. Alternatively, the network device sends first signaling, where the first signaling indicates the third threshold and/or the fourth threshold.

With reference to the seventh aspect, in some implementations of the seventh aspect, the method further includes: The network device receives fourth information, where the fourth information indicates the first threshold. Alternatively, the network device receives fourth information, where the fourth information indicates the third threshold and/or the fourth threshold.

Optionally, the fourth information can be for determining the first threshold. Alternatively, the fourth information can be for determining the third threshold and/or the fourth threshold.

According to an eighth aspect, an information transmission method is provided, including: A network device determines a first time resource, where the first time resource includes at least one time unit, and the first time resource is for sending a first RS. The network device determines a second time resource, where the second time resource includes at least one time unit, and the second time resource is for sending a second RS. There are K time units between the first time resource and the second time resource, and K is a natural number. The first time resource and the second time resource belong to two consecutive slots, and a guard period GP between the first time resource and the second time resource includes a third quantity of time units; and/or the first time resource and the second time resource belong to two inconsecutive slots, and a GP between the first time resource and the second time resource does not exist. The network device sends the first RS on the first time resource, and sends the second RS on the second time resource.

With reference to the eighth aspect, in some implementations of the eighth aspect, the first time resource and the second time resource belong to the two consecutive slots, K falls within a first value range, and the guard period GP between the first time resource and the second time resource includes the third quantity of time units; and/or K falls within a second value range, and the guard period GP between the first time resource and the second time resource includes a fourth quantity of time units.

With reference to the eighth aspect, in some implementations of the eighth aspect, that K falls within a first value range means that a value of K is less than or equal to a first threshold; or that K falls within a second value range means that a value of K is greater than a first threshold, where the first threshold is a natural number.

With reference to the eighth aspect, in some implementations of the eighth aspect, the first threshold is a predefined value; or the first threshold is a value configured by using a higher layer parameter.

With reference to the eighth aspect, in some implementations of the eighth aspect, the first threshold is equal to 4.

With reference to the eighth aspect, in some implementations of the eighth aspect, the first threshold is equal to 8.

With reference to the eighth aspect, in some implementations of the eighth aspect, the first threshold is associated with a U value. For example, the first threshold is equal to U+y; or the first threshold is 4, where y is a positive integer, and the value of U is 1 or 2.

With reference to the eighth aspect, in some implementations of the eighth aspect, the method further includes: The network device receives fourth information, where the fourth information indicates the first threshold.

Optionally, the fourth information can be for determining the first threshold.

Optionally, the fourth information is capability information reported by a terminal device. For example, the fourth information is information about whether the terminal device can send an RS on all symbols in one slot.

With reference to the eighth aspect, in some implementations of the eighth aspect, the first threshold is equal to 2U, where a value of U is 1 or 2.

With reference to the eighth aspect, in some implementations of the eighth aspect, a value of the first quantity meets at least one of the following: The first quantity is a positive integer; or the first quantity is less than or equal to K.

According to a ninth aspect, an information transmission method is provided, including: A network device determines a first time resource, where the first time resource includes at least one time unit, and the first time resource is for sending a first RS. The network device determines a second time resource, where the second time resource includes at least one time unit, and the second time resource is for sending a second RS. There are K time units between the first time resource and the second time resource, and K is a natural number. K falls within a first value range, and a guard period GP between the first time resource and the second time resource includes a fifth quantity of time units; and/or K falls within a second value range, and a guard period GP between the first time resource and the second time resource includes a sixth quantity of time units; and/or K falls within a third value range, and a GP between the first time resource and the second time resource does not exist, where the fifth quantity and the sixth quantity are natural numbers. The network device sends the first RS on the first time resource, and sends the second RS on the second time resource.

With reference to the ninth aspect, in some implementations of the ninth aspect, the first RS belongs to a first resource set, and the second RS belongs to a second resource set. The first resource set and the second resource set are different resource sets. Alternatively, the first RS and the second RS belong to a same resource set.

With reference to the ninth aspect, in some implementations of the ninth aspect, that K falls within a first value range means that a value of K is less than or equal to a first threshold; that K falls within a second value range means that a value of K is greater than a first threshold, and the value of K is less than or equal to a fifth threshold; or that K falls within a third value range means that a value of K is greater than a fifth threshold, where the first threshold and the fifth threshold are natural numbers.

With reference to the ninth aspect, in some implementations of the ninth aspect, the first threshold is a predefined value, or the first threshold is a value configured by using a higher layer parameter; and/or the fifth threshold is a predefined value, or the fifth threshold is a value configured by using a higher layer parameter.

With reference to the ninth aspect, in some implementations of the ninth aspect, the first threshold and/or the fifth threshold are/is associated with a value of U. For example, the first threshold is equal to U+y, where y is a positive integer, and the value of U is 1 or 2; or the first threshold is equal to 4; or the first threshold is equal to 8.

With reference to the ninth aspect, in some implementations of the ninth aspect, the fifth threshold is equal to 8; or the fifth threshold is equal to 14; or the fifth threshold is equal to 26.

With reference to the ninth aspect, in some implementations of the ninth aspect, a value of the first quantity meets at least one of the following: The first quantity is equal to K. The third quantity is equal to U, where a value of U is 1 or 2.

With reference to the ninth aspect, in some implementations of the ninth aspect, the fifth quantity is equal to K, and the sixth quantity is equal to U, where a value of U is 1 or 2.

Optionally, the sixth quantity is less than or equal to the fifth quantity. For example, the time units between the first time resource and the second time resource are five symbols, the fifth quantity is equal to 5, and the sixth quantity is equal to 1 or 2.

With reference to the ninth aspect, in some implementations of the ninth aspect, the method includes: The network device determines the GP based on K, the first threshold, and the fifth threshold.

With reference to the ninth aspect, in some implementations of the ninth aspect, the method further includes: The network device sends first signaling, where the first signaling indicates the first threshold. Alternatively, the network device sends first signaling, where the first signaling indicates the first threshold and/or the fifth threshold.

With reference to the ninth aspect, in some implementations of the ninth aspect, the method further includes: The network device receives fourth information, where the fourth information indicates the first threshold. Alternatively, the network device receives fourth information, where the fourth information indicates the first threshold and/or the fifth threshold.

Optionally, the fourth information can be for determining the first threshold. Alternatively, the fourth information can be for determining the first threshold and/or the fifth threshold.

Optionally, the fourth information is capability information reported by a terminal device. For example, the fourth information is information about whether the terminal device can send an RS on all symbols in one slot.

With reference to the ninth aspect, in some implementations of the ninth aspect, the first threshold is equal to 2U, where a value of U is 1 or 2.

With reference to the ninth aspect, in some implementations of the ninth aspect, a value of the first quantity meets at least one of the following: The first quantity is a positive integer; or the first quantity is less than or equal to K.

According to a tenth aspect, an information transmission method is provided, including: A network device determines a third time resource, where the third time resource includes at least one time unit, and the third time resource is for sending a third reference signal RS. The network device determines a fourth time resource, where the fourth time resource includes at least one time unit, and the fourth time resource is for sending a fourth RS; a guard period GP between the third time resource and the fourth time resource includes Z time units, and Z is a natural number. The GP meets at least one of the following: A quantity of the time units included in the GP is predefined or configured by using signaling; a location of the GP is configured by using signaling; or a location of the GP is related to the third time resource and the fourth time resource. The network device receives the third RS on the third time resource, and receives the fourth RS on the fourth time resource.

With reference to the tenth aspect, in some implementations of the tenth aspect, the third RS belongs to a third resource set, and the fourth RS belongs to a fourth resource set. The third resource set and the fourth resource set are different resource sets. Alternatively, the third RS and the fourth RS belong to a same resource set.

With reference to the tenth aspect, in some implementations of the tenth aspect, when Z is 1 Z time, the units are adjacent to the third time resource. Alternatively, there are M time units between the Z time units and the third time resource. Alternatively, the Z time units are adjacent to the fourth time resource. Alternatively, there are N time units between the Z time units and the fourth time resource. N and M are natural numbers, and N and M are predefined or configured by using signaling.

With reference to the tenth aspect, in some implementations of the tenth aspect, if Z is greater than or equal to 2, and the Z time units are adjacent time units, the 1^{st} time unit in the Z time units is adjacent to the third time resource. Alternatively, there are L time units between the 1^{st} time unit in the Z time units and the third time resource. Alternatively, the last time unit in the Z time units is adjacent to the fourth time resource. Alternatively, there are Y time units between the last time unit in the Z time units and the fourth time resource. Both L and Y are natural numbers, and L and Y are predefined or configured by using signaling.

With reference to the tenth aspect, in some implementations of the tenth aspect, the method further includes: The network device receives second information from a terminal device, where the second information indicates a reference value of the GP between two times of adjacent RS sending of the terminal device.

According to an eleventh aspect, an information transmission method is provided, including: A terminal device determines a fifth time resource, where the fifth time resource includes at least one time unit, and the fifth time resource corresponds to a fifth RS resource set. The terminal device determines a sixth time resource, where the sixth time resource includes at least one time unit, and the sixth time resource corresponds to a sixth RS resource set. Both the fifth time resource and the sixth time resource are included in a first slot. The terminal device determines, based on a quantity of time units between the fifth time resource and the sixth time resource, whether the first slot is an available slot of the fifth RS resource set and the sixth RS resource set. Alternatively, the fifth time resource is included in a first slot, and the sixth time resource is included in a second slot. The terminal device determines, based on a quantity of time units between the fifth time resource and the sixth time resource, whether the first slot is an available slot of the fifth RS source set, and whether the second slot is an available slot of the sixth RS resource set. The first slot is before the second slot.

According to the foregoing technical solution, in this application, an available slot is further stipulated. This can ensure that a time interval for sending two or more SRS resource sets meets a GP requirement, thereby ensuring that UE has sufficient duration to perform antenna switching.

With reference to the eleventh aspect, in some implementations of the eleventh aspect, that the terminal device determines, based on a quantity of time units between the fifth time resource and the sixth time resource, whether the first slot is an available slot of the fifth resource set and the sixth resource set, and/or whether the first slot is an available slot of the fifth source set, and whether the second slot is an available slot of the sixth resource set includes: The first slot is the available slot of the fifth resource set and the sixth resource set, and the quantity of time units between the fifth time resource and the sixth time resource is greater than or equal to a second threshold; or the first slot is the available slot of the fifth resource set, the second slot is the available slot of the sixth resource set, and the quantity of time units between the fifth time resource and the sixth time resource is greater than or equal to a second threshold; or the first slot is the available slot of the fifth resource set, the second slot is not the available slot of the sixth resource set, and the quantity of time units between the fifth time resource and the sixth time resource is less than a second threshold; or the first slot is not the available slot of the fifth resource set, the second slot is the available slot of the sixth resource set, and the quantity of time units between the fifth time resource and the sixth time resource is less than a second threshold; or the first slot is an available slot of one of the fifth resource set and the sixth resource set, and the quantity of time units between the fifth time resource and the sixth time resource is less than a second threshold.

According to the foregoing technical solution, in this application, the available slot is further stipulated. This can ensure that the time interval for sending the two or more SRS resource sets meets the GP requirement, thereby ensuring that the UE has the sufficient duration to perform antenna switching. More specifically, this can ensure the available slot, thereby complete sending of a resource set.

With reference to the eleventh aspect, in some implementations of the eleventh aspect, the first slot includes the fifth time resource and the sixth time resource.

With reference to the eleventh aspect, in some implementations of the eleventh aspect, the first slot is the available slot of the fifth resource set and the sixth resource set; or the first slot is the available slot of the one of the fifth resource set and the sixth resource set.

With reference to the eleventh aspect, in some implementations of the eleventh aspect, when first DCI for triggering the fifth resource set is before second DCI for triggering the sixth resource set, the first slot is the available slot of the fifth resource set, but is not the available slot of the sixth resource set.

With reference to the eleventh aspect, in some implementations of the eleventh aspect, if the first slot is the available slot of the fifth resource set, but is not the available slot of the sixth RS resource set, the fifth time resource is before the sixth time resource.

With reference to the eleventh aspect, in some implementations of the eleventh aspect, when a fifth RS is before a sixth RS, the fifth RS is the 1^{st} RS of the fifth resource set, the sixth RS is the 1^{st} RS of the sixth resource set, and the first slot is the available slot of the fifth resource set, but is not the available slot of the sixth resource set.

With reference to the eleventh aspect, in some implementations of the eleventh aspect, the method includes: The terminal device does not send the fifth resource set and the sixth resource set in the first slot; or the terminal device sends the fifth resource set but does not send the sixth resource set in the first slot; or the terminal device sends the fifth resource set in the first slot, and sends the sixth resource set in a third slot. The first slot is before the third slot.

With reference to the eleventh aspect, in some implementations of the eleventh aspect, the first slot includes the fifth time resource, and the second slot includes the sixth time resource.

With reference to the eleventh aspect, in some implementations of the eleventh aspect, when first DCI for triggering the fifth resource set is before second DCI for triggering the sixth resource set, the first slot is the available slot of the fifth resource set, and the second slot is not the available slot of the sixth resource set.

With reference to the eleventh aspect, in some implementations of the eleventh aspect, if the first slot is the available slot of the fifth resource set, and the second slot is not the available slot of the sixth resource set, the fifth time resource is before the sixth time resource.

With reference to the eleventh aspect, in some implementations of the eleventh aspect, when a fifth RS is before a sixth RS, the fifth RS is the 1^{st} RS of the fifth resource set, the sixth RS is the 1^{st} RS of the sixth resource set, the first slot is the available slot of the fifth resource set, and the second slot is not the available slot of the sixth resource set.

With reference to the eleventh aspect, in some implementations of the eleventh aspect, the first slot is the available slot of the fifth resource set, and the second slot is the available slot of the sixth resource set; or the first slot is the available slot of the fifth resource set, and the second slot is not the available slot of the sixth resource set; or the first slot is not the available slot of the fifth resource set, and the second slot is the available slot of the sixth resource set.

With reference to the eleventh aspect, in some implementations of the eleventh aspect, the method includes: The terminal device sends the fifth resource set in the first slot, and sends the sixth resource set in the second slot, where the second slot is the available slot of the sixth resource set; or the terminal device does not send the fifth resource set and the sixth resource set in the first slot; or the terminal device sends the fifth resource set but does not send the sixth resource set in the first slot.

With reference to the eleventh aspect, in some implementations of the eleventh aspect, the second threshold meets at least one of the following: The second threshold is related to a quantity of time units included in a GP; the second threshold is predefined, or is configured by using a higher layer parameter; or a value of the second threshold is an integer greater than or equal to 0 and less than 5.

It should be understood that the second threshold is related to the quantity of time units included in the GP. The second threshold may be predefined, or may be configured by using the higher layer parameter.

Specifically, the value of the second threshold may be 1, 2, or 0. In this case, the value of the second threshold can be set in a specific case. This is not specifically limited in this application.

According to the foregoing technical solution, in this application, the available slot is further stipulated. This can ensure that the time interval for sending the two or more SRS resource sets meets the GP requirement, thereby ensuring that the UE has the sufficient duration to perform antenna switching. In addition, an SRS sending manner used when the time interval between the two or more SRS resource sets does not meet the GP requirement is stipulated. This ensures that the two or more SRS resource sets can be separately sent in a proper slot.

According to a twelfth aspect, an information transmission method is provided, including: A terminal device determines a seventh time resource, where the seventh time resource includes at least one time unit, and the seventh time resource is for sending a seventh resource set. The terminal device determines an eighth time resource, where the eighth time resource includes at least one time unit, and the eighth time resource is for sending an eighth resource set. A quantity of time units between the seventh time resource and the eighth time resource is greater than or equal to a second threshold. The terminal device sends the seventh resource set on the seventh time resource, and sends the eighth resource set on the eighth time resource.

With reference to the twelfth aspect, in some implementations of the twelfth aspect, the second threshold meets at least one of the following: The second threshold is related to a quantity of time units included in a GP; the second threshold is predefined, or is configured by using a higher layer parameter; or a value of the second threshold is an integer greater than or equal to 0 and less than 5.

With reference to the twelfth aspect, in some implementations of the twelfth aspect, both the seventh resource set and the eighth resource set are sent in a first slot.

With reference to the twelfth aspect, in some implementations of the twelfth aspect, both the seventh time resource and the eighth time resource are included in a first slot.

With reference to the twelfth aspect, in some implementations of the twelfth aspect, the seventh resource set is sent in a first slot, and the eighth resource set is sent in a second slot. The first slot is before the second slot.

With reference to the twelfth aspect, in some implementations of the twelfth aspect, the seventh time resource is included in a first slot, and the eighth time resource is included in a second slot. The first slot is before the second slot.

With reference to the twelfth aspect, in some implementations of the twelfth aspect, the seventh resource set and the eighth resource set meet at least one of the following: The seventh time resource is before the eighth time resource; third DCI for triggering the seventh resource set is before fourth DCI for triggering the eighth resource set; or a seventh RS is the 1^{st} RS of the seventh resource set, an eighth RS is the 1^{st} RS of the eighth resource set, and the seventh RS is before the eighth RS.

With reference to the twelfth aspect, in some implementations of the twelfth aspect, when the seventh RS is before the eighth RS, the seventh RS is the 1^{st} RS of the seventh resource set, and the eighth RS is the 1^{st} RS of the eighth resource set, the first slot is an available slot of the seventh resource set, but is not an available slot of the eighth resource set, and the second slot is the available slot of the eighth resource set.

With reference to the twelfth aspect, in some implementations of the twelfth aspect, if the first slot is the available slot of the seventh resource set, but is not the available slot of the eighth resource set, the seventh time resource is before the eighth time resource, and the second slot is the available slot of the eighth resource set.

With reference to the twelfth aspect, in some implementations of the twelfth aspect, when the third DCI for triggering the seventh resource set is before the fourth DCI for triggering the eighth resource set, the first slot is the available slot of the seventh resource set, but is not the available slot of the eighth resource set, and the second slot is the available slot of the eighth resource set.

According to a thirteenth aspect, an information transmission method is provided, including: A terminal device receives second signaling from a network device, where the second signaling includes an indication of a quantity N of reference signal RS resource sets that can be configured for the terminal device. The terminal device determines, based on the second signaling, the quantity N of RS resource sets that can be configured for the terminal device, where the indication of N is a value of N, a minimum value of N, or a maximum value of N.

Optionally, the second signaling further indicates the minimum value of N.

Optionally, the terminal device determines the minimum value of the quantity N of reference signal RS resource sets that can be configured for the terminal device, where the minimum value of N corresponds to (or is associated with) a characteristic parameter.

Optionally, the terminal device determines a value range of the quantity N of reference signal RS resource sets that can be configured for the terminal device, where the value range of N corresponds to (or is associated with) a characteristic parameter.

Optionally, the terminal device receives configuration information from the network device, where the configuration information includes indication information of N; and determines a value, a value range, or a minimum value of N based on the configuration information.

The characteristic parameter includes at least one of the following parameters: a combination of a transmit antenna and a receive antenna, a quantity of transmit antennas, a quantity of receive antennas, a quantity of antenna ports, a quantity of receive channels, a quantity of transmit channels, a start location of an SRS resource mapping, a value range of a start location of an SRS resource mapping, a quantity of symbols of an SRS resource mapping, a value range of a quantity of symbols of an SRS resource mapping, a repetition factor of an SRS resource mapping, or a value range of a repetition factor of an SRS resource mapping.

It should be understood that, for different terminal device capabilities and/or different antenna switching configurations, minimum values of N are different.

According to the foregoing technical solution, in this application, it can be ensured that required resources are allocated to UE with different capabilities or configurations in a plurality of resource sets. This can ensure that more slots meet a requirement for sending an SRS to perform antenna switching, thereby improving scheduling flexibility of the network device.

With reference to the thirteenth aspect, in some implementations of the thirteenth aspect, N is applicable to all terminal devices.

With reference to the thirteenth aspect, in some implementations of the thirteenth aspect, N is applicable to some terminal devices.

According to the foregoing technical solution, in this application, different minimum values of N are stipulated for UE having different characteristic parameters, or the network device indicates different minimum values of N for UE with different characteristic parameters. This can ensure that required resources are allocated to the UE with the different UE capabilities or the different characteristic parameters in the plurality of resource sets, and ensure that more slots are available for a single resource set, that is, ensure that the more slots meet the requirement for sending the SRS, thereby improving scheduling flexibility.

According to a fourteenth aspect, an information transmission method is provided, including: A network device determines second signaling, where the second signaling includes an indication of a quantity N of reference signal RS resource sets that can be configured for a terminal device. The network device sends the second signaling to the terminal device, where the indication of N is a value of N or a minimum value of N.

Optionally, the second signaling further indicates the minimum value of N.

Optionally, the network device determines (or configures) the minimum value of N, where the minimum value of N corresponds to (or is associated with) a characteristic parameter.

Optionally, the network device sends, to UE, the minimum value of N configured by the network device.

Optionally, the network device determines (or configures) a value range of N, where the value range of N corresponds to (or is associated with) a characteristic parameter.

Optionally, the network device sends, to UE, the value range of N configured by the network device.

The characteristic parameter includes at least one of the following parameters: a combination of a transmit antenna and a receive antenna, a quantity of transmit antennas, a quantity of receive antennas, a quantity of antenna ports, a quantity of receive channels, a quantity of transmit channels, a start location of an SRS resource mapping, a value range of a start location of an SRS resource mapping, a quantity of symbols of an SRS resource mapping, a value range of a quantity of symbols of an SRS resource mapping, a repetition factor of an SRS resource mapping, or a value range of a repetition factor of an SRS resource mapping.

According to the foregoing technical solution, in this application, it can be ensured that required resources are allocated to UE with different capabilities or configurations in a plurality of resource sets. This can ensure that more slots meet a requirement for sending an SRS to perform antenna switching, thereby improving scheduling flexibility of the network device.

With reference to the fourteenth aspect, in some implementations of the fourteenth aspect, N is applicable to all terminal devices.

With reference to the fourteenth aspect, in some implementations of the fourteenth aspect, N is applicable to some terminal devices.

According to the foregoing technical solution, in this application, different minimum values of N are stipulated for UE having different characteristic parameters, or the network device indicates different minimum values of N for terminal devices with different characteristic parameters. This can ensure that required resources are allocated to terminal devices with different UE capabilities or the different characteristic parameters in the plurality of resource sets, and ensure that more slots are available for a single resource set, that is, ensure that the more slots meet the requirement for sending the SRS, thereby improving scheduling flexibility.

According to a fifteenth aspect, a communication apparatus is provided, including: a processing unit, configured to determine a first time resource, where the first time resource includes at least one time unit, and the first time resource is for sending a first reference signal RS; the processing unit is further configured to determine a second time resource, where the second time resource includes at least one time unit, and the second time resource is for sending a second RS; there are K time units between the first time resource and the second time resource, and K is a natural number; and K falls within a first value range, and a guard period GP between the first time resource and the second time resource includes a first quantity of time units; or K falls within a second value range, and a GP between the first time resource and the second time resource does not exist; and a transceiver unit, configured to: send the first RS on the first time resource, and send the second RS on the second time resource.

With reference to the fifteenth aspect, in some implementations of the fifteenth aspect, the first RS belongs to a first resource set, and the second RS belongs to a second resource set. The first resource set and the second resource set are different resource sets. Alternatively, the first RS and the second RS belong to a same resource set.

With reference to the fifteenth aspect, in some implementations of the fifteenth aspect, that K falls within a first value range means that a value of K is less than or equal to a first threshold; or that K falls within a second value range means that a value of K is greater than a first threshold, where the first threshold is a natural number.

With reference to the fifteenth aspect, in some implementations of the fifteenth aspect, a value of the first quantity meets at least one of the following: The first quantity is a positive integer; or the first quantity is less than or equal to K.

With reference to the fifteenth aspect, in some implementations of the fifteenth aspect, the processing unit is further configured to determine the GP based on K and the first threshold.

With reference to the fifteenth aspect, in some implementations of the fifteenth aspect, the transceiver unit is further configured to send first information to a network device, where the first information indicates a reference value of the GP between two times of adjacent RS sending of the terminal device.

With reference to the fifteenth aspect, in some implementations of the fifteenth aspect, the transceiver unit is further configured to receive first signaling, where the first signaling indicates the first threshold.

With reference to the fifteenth aspect, in some implementations of the fifteenth aspect, the first threshold is a predefined value.

With reference to the fifteenth aspect, in some implementations of the fifteenth aspect, the first threshold is equal to 4.

With reference to the fifteenth aspect, in some implementations of the fifteenth aspect, the first threshold is configured by using a higher layer parameter.

With reference to the fifteenth aspect, in some implementations of the fifteenth aspect, the first threshold is one of values greater than 1 and less than or equal to 14.

According to a sixteenth aspect, a communication apparatus is provided, including: a processing unit, configured to determine a first time resource, where the first time resource includes at least one time unit, and the first time resource is for sending a first RS; the processing unit is further configured to determine a second time resource, where the second time resource includes at least one time unit, and the second time resource is for sending a second RS; there are K time units between the first time resource and the second time resource, and K is a natural number; and K falls within a first value range, and a guard period GP between the first time resource and the second time resource includes a first quantity of time units; and/or K falls within a second value range, and a GP between the first time resource and the second time resource does not exist; and a transceiver unit, configured to: send the first RS on the first time resource, and send the second RS on the second time resource.

With reference to the sixteenth aspect, in some implementations of the sixteenth aspect, the first RS belongs to a first resource set, and the second RS belongs to a second resource set. The first resource set and the second resource set are different resource sets. Alternatively, the first RS and the second RS belong to a same resource set.

With reference to the sixteenth aspect, in some implementations of the sixteenth aspect, if the first RS belongs to the first resource set, and the second RS belongs to the second resource set, and the first resource set and the second resource set are different resource sets, the first time resource is the last time unit occupied by the first resource set, and the second time resource is the 1^{st} time unit occupied by the second resource set. The first time resource is before the second time resource.

With reference to the sixteenth aspect, in some implementations of the sixteenth aspect, the first time resource belongs to a first slot, and the second time resource belongs to a second slot. The first slot and the second slot are two different slots. Alternatively, the first slot and the second slot are two consecutive slots. Alternatively, the first slot and the second slot are two inconsecutive slots. Alternatively, the first slot and the second slot are two same slots.

With reference to the sixteenth aspect, in some implementations of the sixteenth aspect, that K falls within a first value range means that a value of K is less than or equal to a first threshold; or that K falls within a second value range means that a value of K is greater than a first threshold, where the first threshold is a natural number.

With reference to the sixteenth aspect, in some implementations of the sixteenth aspect, the first threshold is a predefined value; or the first threshold is a value configured by using a higher layer parameter.

With reference to the sixteenth aspect, in some implementations of the sixteenth aspect, the first threshold is associated with a U value. For example, the first threshold is equal to U, where the value of U is 1 or 2.

With reference to the sixteenth aspect, in some implementations of the sixteenth aspect, the first threshold is equal to 8.

With reference to the sixteenth aspect, in some implementations of the sixteenth aspect, the first threshold is associated with a U value. For example, the first threshold is equal to U+y, where y is a positive integer, and the value of U is 1 or 2.

With reference to the sixteenth aspect, in some implementations of the sixteenth aspect, the first threshold is equal to 2U, where a value of U is 1 or 2.

With reference to the sixteenth aspect, in some implementations of the sixteenth aspect, that K falls within a first value range means that a value of K is less than or equal to a third threshold; or that K falls within a second value range means that a value of K is greater than a fourth threshold, where the third threshold and the fourth threshold are natural numbers, and the fourth threshold is greater than the third threshold.

With reference to the sixteenth aspect, in some implementations of the sixteenth aspect, the third threshold is a predefined value, or the third threshold is a value configured by using a higher layer parameter; and/or the fourth threshold is a predefined value, or the fourth threshold is a value configured by using a higher layer parameter.

With reference to the sixteenth aspect, in some implementations of the sixteenth aspect, a value of the first quantity meets at least one of the following: The first quantity is a positive integer; or the first quantity is less than or equal to K.

With reference to the sixteenth aspect, in some implementations of the sixteenth aspect, the third threshold is equal to 13; and/or the fourth threshold is equal to 26.

With reference to the sixteenth aspect, in some implementations of the sixteenth aspect, the processing unit is further configured to determine the GP based on K and the first threshold, or is further configured to determine the GP based on K, the third threshold, and the fourth threshold.

With reference to the sixteenth aspect, in some implementations of the sixteenth aspect, a value of the first quantity meets at least one of the following: The first quantity is a positive integer; or the first quantity is less than or equal to K.

With reference to the sixteenth aspect, in some implementations of the sixteenth aspect, the transceiver unit is further configured to: receive first signaling, where the first signaling indicates the first threshold; or is further configured to receive first signaling, where the first signaling indicates the third threshold and/or the fourth threshold.

With reference to the sixteenth aspect, in some implementations of the sixteenth aspect, the transceiver unit is further configured to receive fourth information, where the fourth information indicates the first threshold; or is further configured to receive fourth information, where the fourth information indicates the third threshold and/or the fourth threshold.

Optionally, the fourth information can be for determining the first threshold. Alternatively, the fourth information can be for determining the third threshold and/or the fourth threshold.

According to a seventeenth aspect, a communication apparatus is provided, including: a processing unit, configured to determine a first time resource, where the first time resource includes at least one time unit, and the first time resource is for sending a first RS; the processing unit is further configured to determine a second time resource, where the second time resource includes at least one time unit, and the second time resource is for sending a second RS; there are K time units between the first time resource and the second time resource, and K is a natural number; and the first time resource and the second time resource belong to two consecutive slots, and a guard period GP between the first time resource and the second time resource includes a third quantity of time units; and/or the first time resource and the second time resource belong to two inconsecutive slots, and a GP between the first time resource and the second time resource does not exist; and a transceiver unit, configured to: send the first RS on the first time resource, and send the second RS on the second time resource.

With reference to the seventeenth aspect, in some implementations of the seventeenth aspect, the first time resource and the second time resource belong to the two consecutive slots, K falls within a first value range, and the guard period GP between the first time resource and the second time resource includes the third quantity of time units; and/or K falls within a second value range, and the guard period GP between the first time resource and the second time resource includes a fourth quantity of time units.

Specifically, a value of the third quantity is equal to K, and a value of the fourth quantity is less than K.

Optionally, the value of the fourth quantity is equal to U, where a value of U is 1 or 2.

With reference to the seventeenth aspect, in some implementations of the seventeenth aspect, that K falls within a first value range means that a value of K is less than or equal to a first threshold; or that K falls within a second value range means that a value of K is greater than a first threshold, where the first threshold is a natural number.

With reference to the seventeenth aspect, in some implementations of the seventeenth aspect, the first threshold is a predefined value; or the first threshold is a value configured by using a higher layer parameter.

With reference to the seventeenth aspect, in some implementations of the seventeenth aspect, the first threshold is equal to 4.

With reference to the seventeenth aspect, in some implementations of the seventeenth aspect, the first threshold is equal to 8.

With reference to the seventeenth aspect, in some implementations of the seventeenth aspect, the first threshold is associated with a U value. For example, the first threshold is equal to U+y; or the first threshold is 4, where y is a positive integer, and the value of U is 1 or 2.

With reference to the seventeenth aspect, in some implementations of the seventeenth aspect, the first threshold is equal to 2U, where a value of U is 1 or 2.

With reference to the seventeenth aspect, in some implementations of the seventeenth aspect, a value of the first quantity meets at least one of the following: The first quantity is a positive integer; or the first quantity is less than or equal to K.

With reference to the seventeenth aspect, in some implementations of the seventeenth aspect, the transceiver unit is further configured to send fourth information, where the fourth information indicates the first threshold.

Optionally, the fourth information can be for determining the first threshold.

Optionally, the fourth information is capability information reported by a terminal device. For example, the fourth information is information about whether the terminal device can send an RS on all symbols in one slot.

According to an eighteenth aspect, a communication apparatus is provided, including: a processing unit, configured to determine a first time resource, where the first time resource includes at least one time unit, and the first time resource is for sending a first RS; the processing unit is further configured to determine a second time resource, where the second time resource includes at least one time unit, and the second time resource is for sending a second RS; there are K time units between the first time resource and the second time resource, and K is a natural number; K falls within a first value range, and a guard period GP between the first time resource and the second time resource includes a fifth quantity of time units; and/or K falls within a second value range, and a guard period GP between the first time resource and the second time resource includes a sixth quantity of time units; and/or K falls within a third value range, and a GP between the first time resource and the second time resource does not exist, where the fifth quantity and the sixth quantity are natural numbers; and a transceiver unit, configured to: send the first RS on the first time resource, and send the second RS on the second time resource.

With reference to the eighteenth aspect, in some implementations of the eighteenth aspect, the first RS belongs to a first resource set, and the second RS belongs to a second resource set. The first resource set and the second resource set are different resource sets. Alternatively, the first RS and the second RS belong to a same resource set.

With reference to the eighteenth aspect, in some implementations of the eighteenth aspect, that K falls within a first value range means that a value of K is less than or equal to a first threshold; that K falls within a second value range means that a value of K is greater than a first threshold, and the value of K is less than or equal to a fifth threshold; or that K falls within a third value range means that a value of K is greater than a fifth threshold, where the first threshold and the fifth threshold are natural numbers.

With reference to the eighteenth aspect, in some implementations of the eighteenth aspect, the first threshold is a predefined value, or the first threshold is a value configured by using a higher layer parameter; and/or the fifth threshold is a predefined value, or the fifth threshold is a value configured by using a higher layer parameter.

With reference to the eighteenth aspect, in some implementations of the eighteenth aspect, the first threshold and/or the fifth threshold are/is associated with a value of U. For example, the first threshold is equal to U+y, where y is a positive integer, and the value of U is 1 or 2; or the first threshold is equal to 4; or the first threshold is equal to 8.

With reference to the eighteenth aspect, in some implementations of the eighteenth aspect, the fifth threshold is equal to 8; or the fifth threshold is equal to 14; or the fifth threshold is equal to 26.

With reference to the eighteenth aspect, in some implementations of the eighteenth aspect, the fifth quantity is equal to K, and the sixth quantity is equal to U, where a value of U is 1 or 2.

With reference to the eighteenth aspect, in some implementations of the eighteenth aspect, the first threshold is equal to 2U, where a value of U is 1 or 2.

With reference to the eighteenth aspect, in some implementations of the eighteenth aspect, a value of the first quantity meets at least one of the following: The first quantity is a positive integer; or the first quantity is less than or equal to K.

With reference to the eighteenth aspect, in some implementations of the eighteenth aspect, the fifth quantity is equal to K, and the sixth quantity is equal to U, where a value of U is 1 or 2.

Optionally, the sixth quantity is less than or equal to the fifth quantity. For example, the time units between the first time resource and the second time resource are five symbols, the fifth quantity is equal to 5, and the sixth quantity is equal to 1 or 2.

With reference to the eighteenth aspect, in some implementations of the eighteenth aspect, the processing unit is further configured to determine the GP based on K, the first threshold, and the fifth threshold.

With reference to the eighteenth aspect, in some implementations of the eighteenth aspect, the transceiver unit is further configured to: receive first signaling, where the first signaling indicates the first threshold; or receive first signaling, where the first signaling indicates the first threshold and/or the fifth threshold.

With reference to the eighteenth aspect, in some implementations of the eighteenth aspect, the transceiver unit is further configured to: send fourth information, where the fourth information indicates the first threshold; or send fourth information, where the fourth information indicates the first threshold and/or the fifth threshold.

Optionally, the fourth information can be for determining the first threshold. Alternatively, the fourth information can be for determining the first threshold and/or the fifth threshold.

Optionally, the fourth information is capability information reported by a terminal device. For example, the fourth information is information about whether the terminal device can send an RS on all symbols in one slot.

According to a nineteenth aspect, a communication apparatus is provided, including: a processing unit, configured to determine a third time resource, where the third time resource includes at least one time unit, and the third time resource is for sending a third reference signal RS; the processing unit is further configured to determine a fourth time resource, where the fourth time resource includes at least one time unit, and the fourth time resource is for sending a fourth RS; a guard period GP between the third time resource and the fourth time resource includes Z time units, and Z is a natural number; and the GP meets at least one of the following: A quantity of the time units included in the GP is predefined or configured by using signaling; a location of the GP is configured by using signaling; or a location of the GP is related to the third time resource and the fourth time resource; and a transceiver unit, configured to: send the third RS on the third time resource, and send the fourth RS on the fourth time resource.

With reference to the nineteenth aspect, in some implementations of the nineteenth aspect, the third RS belongs to a third resource set, and the fourth RS belongs to a fourth resource set. The third resource set and the fourth resource set are different resource sets. Alternatively, the third RS and the fourth RS belong to a same resource set.

With reference to the nineteenth aspect, in some implementations of the nineteenth aspect, Z is 1, and the Z time units are adjacent to the third time resource. Alternatively, there are M time units between the Z time units and the third time resource. Alternatively, the Z time units are adjacent to the fourth time resource. Alternatively, there are N time units between the Z time units and the fourth time resource. N and M are natural numbers, and N and M are predefined or configured by using signaling.

With reference to the nineteenth aspect, in some implementations of the nineteenth aspect, Z is greater than or equal to 2, the Z time units are adjacent time units, and the 1^{st} time unit in the Z time units is adjacent to the third time resource. Alternatively, there are L time units between the 1^{st} time unit in the Z time units and the third time resource. Alternatively, the last time unit in the Z time units is adjacent to the fourth time resource. Alternatively, there are Y time units between the last time unit in the Z time units and the fourth time resource. Both L and Y are natural numbers, and L and Y are predefined or configured by using signaling.

With reference to the nineteenth aspect, in some implementations of the nineteenth aspect, the transceiver unit is further configured to send second information to a network device, where the second information indicates a reference value of the GP between two times of adjacent RS sending of the terminal device.

According to a twentieth aspect, a communication apparatus is provided, including: a processing unit, configured to determine a first time resource, where the first time resource includes at least one time unit, and the first time resource is for sending a first reference signal RS; the processing unit is further configured to determine a second time resource, where the second time resource includes at least one time unit, and the second time resource is for sending a second RS; there are K time units between the first time resource and the second time resource, and K is a natural number; and K falls within a first value range, and a guard period GP between the first time resource and the second time resource includes a first quantity of time units; or K falls within a second value range, and a GP between the first time resource and the second time resource does not exist; and a transceiver unit, configured to: receive the first RS on the first time resource, and receive the second RS on the second time resource.

With reference to the twentieth aspect, in some implementations of the twentieth aspect, the first RS belongs to a first resource set, and the second RS belongs to a second resource set. The first resource set and the second resource set are different resource sets. Alternatively, the first RS and the second RS belong to a same resource set.

With reference to the twentieth aspect, in some implementations of the twentieth aspect, that K falls within a first value range means that a value of K is less than or equal to a first threshold; or that K falls within a second value range means that a value of K is greater than a first threshold, where the first threshold is a natural number.

With reference to the twentieth aspect, in some implementations of the twentieth aspect, a value of the first quantity meets at least one of the following: The first quantity is a positive integer; or the first quantity is less than or equal to K.

With reference to the twentieth aspect, in some implementations of the twentieth aspect, the processing unit is further configured to determine the GP based on K and the first threshold.

With reference to the twentieth aspect, in some implementations of the twentieth aspect, the transceiver unit is further configured to receive first information from a terminal device, where the first information indicates a reference value of the GP between two times of adjacent RS sending of the terminal device.

With reference to the twentieth aspect, in some implementations of the twentieth aspect, the transceiver unit is further configured to send first signaling, where the first signaling indicates the first threshold.

With reference to the twentieth aspect, in some implementations of the twentieth aspect, the first threshold is a predefined value.

With reference to the twentieth aspect, in some implementations of the twentieth aspect, the first threshold is equal to 4.

With reference to the twentieth aspect, in some implementations of the twentieth aspect, the first threshold is configured by using a higher layer parameter.

With reference to the twentieth aspect, in some implementations of the twentieth aspect, the first threshold is one of values greater than 1 and less than or equal to 14.

According to a twenty-first aspect, a communication apparatus is provided, including: a processing unit, configured to determine a first time resource, where the first time resource includes at least one time unit, and the first time resource is for sending a first RS; the processing unit is further configured to determine a second time resource, where the second time resource includes at least one time unit, and the second time resource is for sending a second RS; there are K time units between the first time resource and the second time resource, and K is a natural number; and K falls within a first value range, and a guard period GP between the first time resource and the second time resource includes a first quantity of time units; and/or K falls within a second value range, and a GP between the first time resource and the second time resource does not exist; and a transceiver unit, configured to: send the first RS on the first time resource, and send the second RS on the second time resource.

With reference to the twenty-first aspect, in some implementations of the twenty-first aspect, the first RS belongs to a first resource set, and the second RS belongs to a second resource set. The first resource set and the second resource set are different resource sets. Alternatively, the first RS and the second RS belong to a same resource set.

With reference to the twenty-first aspect, in some implementations of the twenty-first aspect, if the first RS belongs to the first resource set, the second RS belongs to the second resource set, and the first resource set and the second resource set are the different resource sets, the first time resource is the last time unit occupied by the first resource set, and the second time resource is the 1^{st} time unit occupied by the second resource set. The first time resource is before the second time resource.

With reference to the twenty-first aspect, in some implementations of the twenty-first aspect, the first time resource belongs to a first slot, and the second time resource belongs to a second slot. The first slot and the second slot are two different slots. Alternatively, the first slot and the second slot are two consecutive slots. Alternatively, the first slot and the second slot are two inconsecutive slots. Alternatively, the first slot and the second slot are two same slots.

With reference to the twenty-first aspect, in some implementations of the twenty-first aspect, that K falls within a first value range means that a value of K is less than or equal to a first threshold; or that K falls within a second value range means that a value of K is greater than a first threshold, where the first threshold is a natural number.

With reference to the twenty-first aspect, in some implementations of the twenty-first aspect, the first threshold is a predefined value; or the first threshold is a value configured by using a higher layer parameter.

With reference to the twenty-first aspect, in some implementations of the twenty-first aspect, the first threshold is associated with a U value. For example, the first threshold is equal to U, where the value of U is 1 or 2.

With reference to the twenty-first aspect, in some implementations of the twenty-first aspect, the first threshold is equal to 8.

With reference to the twenty-first aspect, in some implementations of the twenty-first aspect, the first threshold is equal to U+y, where y is a positive integer, and a value of U is 1 or 2.

With reference to the twenty-first aspect, in some implementations of the twenty-first aspect, the first threshold is equal to 2U, and a value of U is 1 or 2.

With reference to the twenty-first aspect, in some implementations of the twenty-first aspect, a value of the first quantity meets at least one of the following: The first quantity is a positive integer; or the first quantity is less than or equal to K.

With reference to the twenty-first aspect, in some implementations of the twenty-first aspect, that K falls within a first value range means that a value of K is less than or equal to a third threshold; or that K falls within a second value range means that a value of K is greater than a fourth threshold, where the third threshold and the fourth threshold are natural numbers, and the fourth threshold is greater than the third threshold.

With reference to the twenty-first aspect, in some implementations of the twenty-first aspect, the third threshold is a predefined value, or the third threshold is a value configured by using a higher layer parameter; and/or the fourth threshold is a predefined value, or the fourth threshold is a value configured by using a higher layer parameter.

With reference to the twenty-first aspect, in some implementations of the twenty-first aspect, the third threshold is equal to 13; and/or the fourth threshold is equal to 26.

With reference to the twenty-first aspect, in some implementations of the twenty-first aspect, the processing unit is further configured to determine the GP based on K and the first threshold, or is further configured to determine the GP based on K, the third threshold, and the fourth threshold.

With reference to the twenty-first aspect, in some implementations of the twenty-first aspect, a value of the first quantity meets at least one of the following: The first quantity is a positive integer; or the first quantity is less than or equal to K.

With reference to the twenty-first aspect, in some implementations of the twenty-first aspect, the transceiver unit is further configured to send first signaling, where the first signaling indicates the first threshold; or is further configured to send first signaling, where the first signaling indicates the third threshold and/or the fourth threshold.

With reference to the twenty-first aspect, in some implementations of the twenty-first aspect, the transceiver unit is further configured to receive fourth information, where the fourth information indicates the first threshold; or is further configured to receive fourth information, where the fourth information indicates the third threshold and/or the fourth threshold.

Optionally, the fourth information can be for determining the first threshold. Alternatively, the fourth information can be for determining the third threshold and/or the fourth threshold.

Optionally, the fourth information is capability information reported by a terminal device. For example, the fourth information is information about whether the terminal device can send an RS on all symbols in one slot.

According to a twenty-second aspect, a communication apparatus is provided, including: a processing unit, configured to determine a first time resource, where the first time resource includes at least one time unit, and the first time resource is for sending a first RS; the processing unit is further configured to determine a second time resource, where the second time resource includes at least one time unit, and the second time resource is for sending a second RS; there are K time units between the first time resource and the second time resource, and K is a natural number; and the first time resource and the second time resource belong to two consecutive slots, and a guard period GP between the first time resource and the second time resource includes a third quantity of time units; and/or the first time resource and the second time resource belong to two inconsecutive slots, and a GP between the first time resource and the second time resource does not exist; and a transceiver unit, configured to: send the first RS on the first time resource, and send the second RS on the second time resource.

With reference to the twenty-second aspect, in some implementations of the twenty-second aspect, the first time resource and the second time resource belong to the two consecutive slots, K falls within a first value range, and the guard period GP between the first time resource and the second time resource includes the third quantity of time units; and/or K falls within a second value range, and the guard period GP between the first time resource and the second time resource includes a fourth quantity of time units.

With reference to the twenty-second aspect, in some implementations of the twenty-second aspect, that K falls within a first value range means that a value of K is less than or equal to a first threshold; or that K falls within a second value range means that a value of K is greater than a first threshold, where the first threshold is a natural number.

With reference to the twenty-second aspect, in some implementations of the twenty-second aspect, the first threshold is a predefined value; or the first threshold is a value configured by using a higher layer parameter.

With reference to the twenty-second aspect, in some implementations of the twenty-second aspect, the first threshold is equal to 4.

With reference to the twenty-second aspect, in some implementations of the twenty-second aspect, the first threshold is equal to 8.

With reference to the twenty-second aspect, in some implementations of the twenty-second aspect, the first threshold is associated with a U value. For example, the first threshold is equal to U+y; or the first threshold is 4, where y is a positive integer, and the value of U is 1 or 2.

With reference to the twenty-second aspect, in some implementations of the twenty-second aspect, the first threshold is equal to 2U, and a value of U is 1 or 2.

With reference to the twenty-second aspect, in some implementations of the twenty-second aspect, a value of the first quantity meets at least one of the following: The first quantity is a positive integer; or the first quantity is less than or equal to K.

With reference to the twenty-second aspect, in some implementations of the twenty-second aspect, the transceiver unit is further configured to receive fourth information, where the fourth information indicates the first threshold.

Optionally, the fourth information can be for determining the first threshold.

Optionally, the fourth information is capability information reported by a terminal device. For example, the fourth information is information about whether the terminal device can send an RS on all symbols in one slot.

According to a twenty-third aspect, a communication apparatus is provided, including: a processing unit, configured to determine a first time resource, where the first time resource includes at least one time unit, and the first time resource is for sending a first RS; the processing unit is further configured to determine a second time resource, where the second time resource includes at least one time unit, and the second time resource is for sending a second RS; there are K time units between the first time resource and the second time resource, and K is a natural number; and K falls within a first value range, and a guard period GP between the first time resource and the second time resource includes a fifth quantity of time units; and/or K falls within a second value range, and a guard period GP between the first time resource and the second time resource includes a sixth quantity of time units; and/or K falls within a third value range, and a GP between the first time resource and the second time resource does not exist, where the first quantity and the third quantity are natural numbers; and a transceiver unit, configured to: send the first RS on the first time resource, and send the second RS on the second time resource.

With reference to the twenty-third aspect, in some implementations of the twenty-third aspect, the first RS belongs to a first resource set, and the second RS belongs to a second resource set. The first resource set and the second resource set are different resource sets. Alternatively, the first RS and the second RS belong to a same resource set.

With reference to the twenty-third aspect, in some implementations of the twenty-third aspect, that K falls within a first value range means that a value of K is less than or equal to a first threshold; that K falls within a second value range means that a value of K is greater than a first threshold, and the value of K is less than or equal to a fifth threshold; or that K falls within a third value range means that a value of K is greater than a fifth threshold, where the first threshold and the fifth threshold are natural numbers.

With reference to the twenty-third aspect, in some implementations of the twenty-third aspect, the first threshold is a predefined value, or the first threshold is a value configured by using a higher layer parameter; and/or the fifth threshold is a predefined value, or the fifth threshold is a value configured by using a higher layer parameter.

With reference to the twenty-third aspect, in some implementations of the twenty-third aspect, the first threshold and/or the fifth threshold are/is associated with a value of U. For example, the first threshold is equal to U+y, where y is a positive integer, and the value of U is 1 or 2; or the first threshold is equal to 4; or the first threshold is equal to 8.

With reference to the twenty-third aspect, in some implementations of the twenty-third aspect, the first threshold is equal to 2U, where a value of U is 1 or 2.

With reference to the twenty-third aspect, in some implementations of the twenty-third aspect, a value of the first quantity meets at least one of the following: The first quantity is a positive integer; or the first quantity is less than or equal to K.

With reference to the twenty-third aspect, in some implementations of the twenty-third aspect, the fifth threshold is equal to 8; or the fifth threshold is equal to 14; or the fifth threshold is equal to 26.

With reference to the twenty-third aspect, in some implementations of the twenty-third aspect, a value of the first quantity meets at least one of the following: The first quantity is equal to K. The third quantity is equal to U, where a value of U is 1 or 2.

With reference to the twenty-third aspect, in some implementations of the twenty-third aspect, the fifth quantity is equal to K, and the sixth quantity is equal to U, where a value of U is 1 or 2.

Optionally, the sixth quantity is less than or equal to the fifth quantity. For example, the time units between the first time resource and the second time resource are five symbols, the fifth quantity is equal to 5, and the sixth quantity is equal to 1 or 2.

With reference to the twenty-third aspect, in some implementations of the twenty-third aspect, the processing unit is further configured to determine the GP based on K, the first threshold, and the fifth threshold.

With reference to the twenty-third aspect, in some implementations of the twenty-third aspect, the transceiver unit is further configured to: send first signaling, where the first signaling indicates the first threshold; or send first signaling, where the first signaling indicates the first threshold and/or the fifth threshold.

With reference to the twenty-third aspect, in some implementations of the twenty-third aspect, the transceiver unit is further configured to: receive fourth information, where the fourth information indicates the first threshold; or receive fourth information, where the fourth information indicates the first threshold and/or the fifth threshold.

Optionally, the fourth information can be for determining the first threshold. Alternatively, the fourth information can be for determining the first threshold and/or the fifth threshold.

Optionally, the fourth information is capability information reported by a terminal device. For example, the fourth information is information about whether the terminal device can send an RS on all symbols in one slot.

According to a twenty-fourth aspect, a communication apparatus is provided, including: a processing unit, configured to determine a third time resource, where the third time resource includes at least one time unit, and the third time resource is for sending a third reference signal RS; the processing unit is further configured to determine a fourth time resource, where the fourth time resource includes at least one time unit, and the fourth time resource is for sending a fourth RS; a guard period GP between the third time resource and the fourth time resource includes Z time units, and Z is a natural number; and the GP meets at least one of the following: A quantity of the time units included in the GP is predefined or configured by using signaling; a location of the GP is configured by using signaling; or a location of the GP is related to the third time resource and the fourth time resource; and a transceiver unit, configured to: receive the third RS on the third time resource, and receive the fourth RS on the fourth time resource.

With reference to the twenty-fourth aspect, in some implementations of the twenty-fourth aspect, the third RS belongs to a third resource set, and the fourth RS belongs to a fourth resource set. The third resource set and the fourth resource set are different resource sets. Alternatively, the third RS and the fourth RS belong to a same resource set.

With reference to the twenty-fourth aspect, in some implementations of the twenty-fourth aspect, Z is 1, and the Z time units are adjacent to the third time resource. Alternatively, there are M time units between the Z time units and the third time resource. Alternatively, the Z time units are adjacent to the fourth time resource. Alternatively, there are N time units between the Z time units and the fourth time resource. N and M are natural numbers, and N and M are predefined or configured by using signaling.

With reference to the twenty-fourth aspect, in some implementations of the twenty-fourth aspect, Z is greater than or equal to 2, the Z time units are adjacent time units, and the 1^{st} time unit in the Z time units is adjacent to the third time resource. Alternatively, there are L time units between the 1^{st} time unit in the Z time units and the third time resource. Alternatively, the last time unit in the Z time units is adjacent to the fourth time resource. Alternatively, there are Y time units between the last time unit in the Z time units and the fourth time resource. Both L and Y are natural numbers, and L and Y are predefined or configured by using signaling.

With reference to the twenty-fourth aspect, in some implementations of the twenty-fourth aspect, the transceiver unit is further configured to receive second information from a terminal device, where the second information indicates a reference value of the GP between two times of adjacent RS sending of the terminal device.

According to a twenty-fifth aspect, a communication apparatus is provided, including: a processing unit, configured to determine a fifth time resource, where the fifth time resource includes at least one time unit, and the fifth time resource corresponds to a fifth resource set. The processing unit is further configured to determine a sixth time resource, where the sixth time resource includes at least one time unit, and the sixth time resource corresponds to a sixth resource set. Both the fifth time resource and the sixth time resource are included in a first slot. The processing unit is further configured to determine, based on a quantity of time units between the fifth time resource and the sixth time resource, whether the first slot is an available slot of the fifth resource set and the sixth resource set, and/or whether the first slot is an available slot of the fifth source set, and whether the second slot is an available slot of the sixth resource set. Alternatively, the fifth time resource is included in a first slot, and the sixth time resource is included in a second slot. The processing unit is further configured to determine, based on a quantity of time units between the fifth time resource and the sixth time resource, whether the first slot is an available slot of the fifth resource set, and whether a second slot is an available slot of the sixth resource set. The first slot is before the second slot.

With reference to the twenty-fifth aspect, in some implementations of the twenty-fifth aspect, the first slot is the available slot of the fifth resource set and the sixth resource set, and the quantity of time units between the fifth time resource and the sixth time resource is greater than or equal to a second threshold. Alternatively, the first slot is the available slot of the fifth resource set, the second slot is the available slot of the sixth resource set, and the quantity of time units between the fifth time resource and the sixth time resource is greater than or equal to a second threshold. Alternatively, the first slot is the available slot of the fifth resource set, the second slot is not the available slot of the sixth resource set, and the quantity of time units between the fifth time resource and the sixth time resource is less than a second threshold. Alternatively, the first slot is not the available slot of the fifth resource set, the second slot is the available slot of the sixth resource set, and the quantity of time units between the fifth time resource and the sixth time resource is less than a second threshold. Alternatively, the first slot is an available slot of one of the fifth resource set and the sixth resource set, and the quantity of time units between the fifth time resource and the sixth time resource is less than a second threshold.

With reference to the twenty-fifth aspect, in some implementations of the twenty-fifth aspect, the first slot includes the fifth time resource and the sixth time resource.

With reference to the twenty-fifth aspect, in some implementations of the twenty-fifth aspect, the first slot is the available slot of the fifth resource set and the sixth resource set; or the first slot is the available slot of the one of the fifth resource set and the sixth resource set.

With reference to the twenty-fifth aspect, in some implementations of the twenty-fifth aspect, when first DCI for triggering the fifth resource set is before second DCI for triggering the sixth resource set, the first slot is the available slot of the fifth resource set, but is not the available slot of the sixth resource set.

With reference to the twenty-fifth aspect, in some implementations of the twenty-fifth aspect, if the first slot is the available slot of the fifth resource set, but is not the available slot of the sixth resource set, the fifth time resource is before the sixth time resource.

With reference to the twenty-fifth aspect, in some implementations of the twenty-fifth aspect, when a fifth RS is before a sixth RS, the fifth RS is the 1^{st} RS of the fifth resource set, the sixth RS is the 1^{st} RS of the sixth resource set, and the first slot is the available slot of the fifth resource set, but is not the available slot of the sixth resource set.

With reference to the twenty-fifth aspect, in some implementations of the twenty-fifth aspect, a transceiver unit is configured to skip sending the fifth resource set and the sixth resource set in the first slot. Alternatively, a transceiver unit is configured to send the fifth resource set but skip sending the sixth resource set in the first slot. Alternatively, a transceiver unit is configured to: send the fifth resource set in the first slot, and send the sixth resource set in a third slot. The first slot is before the third slot.

With reference to the twenty-fifth aspect, in some implementations of the twenty-fifth aspect, the first slot includes the fifth time resource, and the second slot includes the sixth time resource.

With reference to the twenty-fifth aspect, in some implementations of the twenty-fifth aspect, when first DCI for triggering the fifth resource set is before second DCI for triggering the sixth resource set, the first slot is the available slot of the fifth resource set, and the second slot is not the available slot of the sixth RS resource set.

With reference to the twenty-fifth aspect, in some implementations of the twenty-fifth aspect, if the first slot is the available slot of the fifth resource set, and the second slot is not the available slot of the sixth resource set, the fifth time resource is before the sixth time resource.

With reference to the twenty-fifth aspect, in some implementations of the twenty-fifth aspect, when a fifth RS is before a sixth RS, the fifth RS is the 1^{st} RS of the fifth resource set, the sixth RS is the 1^{st} RS of the sixth resource set, the first slot is the available slot of the fifth resource set, and the second slot is not the available slot of the sixth resource set.

With reference to the twenty-fifth aspect, in some implementations of the twenty-fifth aspect, the first slot is the available slot of the fifth resource set, and the second slot is the available slot of the sixth resource set; or the first slot is the available slot of the fifth resource set, and the second slot is not the available slot of the sixth resource set; or the first slot is not the available slot of the fifth resource set, and the second slot is the available slot of the sixth resource set.

With reference to the twenty-fifth aspect, in some implementations of the twenty-fifth aspect, the transceiver unit is configured to: send the fifth resource set in the first slot, and send the sixth resource set in the second slot, where the second slot is the available slot of the sixth resource set. Alternatively, the transceiver unit is configured to: skip sending the fifth resource set and the sixth resource set in the first slot. Alternatively, the transceiver unit is configured to: send the fifth resource set and skip sending the sixth resource set in the first slot.

With reference to the twenty-fifth aspect, in some implementations of the twenty-fifth aspect, the second threshold meets at least one of the following: The second threshold is related to a quantity of time units included in a GP; the second threshold is predefined, or is configured by using a higher layer parameter; or a value of the second threshold is an integer greater than or equal to 0 and less than 5.

It should be understood that the second threshold is related to the quantity of time units included in the GP. The second threshold may be predefined, or may be configured by using the higher layer parameter.

Specifically, the value of the second threshold may be 1, 2, or 0. In this case, the value of the second threshold can be set in a specific case. This is not specifically limited in this application.

According to a twenty-sixth aspect, a communication apparatus is provided, including: a processing unit, configured to determine a seventh time resource, where the seventh time resource includes at least one time unit, and the seventh time resource corresponds to a seventh resource set; the processing unit is further configured to determine an eighth time resource, where the eighth time resource includes at least one time unit, and the eighth time resource corresponds to an eighth resource set; and a quantity of time units between the seventh time resource and the eighth time resource is greater than or equal to a second threshold; and a transceiver unit, configured to: send the seventh resource set on the seventh time resource, and send the eighth resource set on the eighth time resource.

With reference to the twenty-sixth aspect, in some implementations of the twenty-sixth aspect, the second threshold meets at least one of the following: The second threshold is related to a quantity of time units included in a GP; the second threshold is predefined, or is configured by using a higher layer parameter; or a value of the second threshold is an integer greater than or equal to 0 and less than 5.

With reference to the twenty-sixth aspect, in some implementations of the twenty-sixth aspect, both the seventh resource set and the eighth resource set are sent in a first slot.

With reference to the twenty-sixth aspect, in some implementations of the twenty-sixth aspect, both the seventh time resource and the eighth time resource are included in a first slot.

With reference to the twenty-sixth aspect, in some implementations of the twenty-sixth aspect, the seventh resource set is sent in a first slot, and the eighth resource set is sent in a second slot. The first slot is before the second slot.

With reference to the twenty-sixth aspect, in some implementations of the twenty-sixth aspect, the seventh resource set is sent in a first slot, and the eighth resource set is sent in a second slot. The first slot is before the second slot.

With reference to the twenty-sixth aspect, in some implementations of the twenty-sixth aspect, the seventh resource set and the eighth resource set meet at least one of the following: The seventh time resource is before the eighth time resource; third DCI for triggering the seventh resource set is before fourth DCI for triggering the eighth resource set; or a seventh RS is the 1^{st} RS of the seventh resource set, an eighth RS is the 1^{st} RS of the eighth resource set, and the seventh RS is before the eighth RS.

With reference to the twenty-sixth aspect, in some implementations of the twenty-sixth aspect, when the seventh RS is before the eighth RS, the seventh RS is the 1^{st} RS of the seventh resource set, and the eighth RS is the 1^{st} RS of the eighth resource set, the first slot is an available slot of the seventh resource set, but is not an available slot of the eighth resource set, and the second slot is the available slot of the eighth resource set.

With reference to the twenty-sixth aspect, in some implementations of the twenty-sixth aspect, if the first slot is the available slot of the seventh resource set, but is not the available slot of the eighth resource set, the seventh time resource is before the sixth time resource, and the second slot is the available slot of the eighth resource set.

With reference to the twenty-sixth aspect, in some implementations of the twenty-sixth aspect, when the third DCI for triggering the seventh resource set is before the fourth DCI for triggering the eighth resource set, the first slot is the available slot of the seventh resource set, but is not the available slot of the eighth resource set, and the second slot is the available slot of the eighth resource set.

According to a twenty-seventh aspect, a communication apparatus is provided, including: a receiving unit, configured to receive second signaling from a network device, where the second signaling includes an indication of a quantity N of reference signal RS resource sets that can be configured for a terminal device; and a processing unit, configured to determine, based on the second signaling, the quantity N of RS resource sets that can be configured for the terminal device, where the indication of N is a value of N or a minimum value of N.

Optionally, the second signaling further indicates the minimum value of N.

Optionally, the processing unit is further configured to determine the minimum value of the quantity N of reference signal RS resource sets that can be configured for the terminal device, where the minimum value of N corresponds to (or is associated with) a characteristic parameter.

Optionally, the processing unit is further configured to determine a value range of the quantity N of reference signal RS resource sets that can be configured for the terminal device, where the value range of N corresponds to (or is associated with) a characteristic parameter.

Optionally, the transceiver unit is further configured to receive configuration information from the network device, where the configuration information includes indication information of N. The processing unit is further configured to determine the value range, the minimum value, or the value of N based on the configuration information.

The characteristic parameter includes at least one of the following parameters: a combination of a transmit antenna and a receive antenna, a quantity of transmit antennas, a quantity of receive antennas, a quantity of antenna ports, a quantity of receive channels, a quantity of transmit channels, a start location of an SRS resource mapping, a value range of a start location of an SRS resource mapping, a quantity of symbols of an SRS resource mapping, a value range of a quantity of symbols of an SRS resource mapping, a repetition factor of an SRS resource mapping, or a value range of a repetition factor of an SRS resource mapping.

With reference to the twenty-seventh aspect, in some implementations of the twenty-seventh aspect, N is applicable to all terminal devices.

With reference to the twenty-seventh aspect, in some implementations of the twenty-seventh aspect, N is applicable to some terminal devices.

According to a twenty-eighth aspect, a communication apparatus is provided, including: a processing unit, configured to determine second signaling, where the second signaling includes an indication of a quantity N of reference signal RS resource sets that can be configured for a terminal device; and a transceiver unit, configured to send the second signaling to the terminal device, where the indication of N is a value of N, a minimum value of N, or a maximum value of N.

Optionally, the second signaling further indicates the minimum value of N.

Optionally, the processing unit is further configured to determine (or configure) the minimum value of N, where the minimum value of N corresponds to (or is associated with) a characteristic parameter.

Optionally, the transceiver unit is further configured to send, to UE, the minimum value of N configured by the transceiver unit.

Optionally, the processing unit is further configured to determine (or configure) the value range of N, where the value range of N corresponds to (or is associated with) a characteristic parameter.

Optionally, the transceiver unit is further configured to send, to UE, the value range of N configured by a network device.

The characteristic parameter includes at least one of the following parameters: a combination of a transmit antenna and a receive antenna, a quantity of transmit antennas, a quantity of receive antennas, a quantity of antenna ports, a quantity of receive channels, a quantity of transmit channels, a start location of an SRS resource mapping, a value range of a start location of an SRS resource mapping, a quantity of symbols of an SRS resource mapping, a value range of a quantity of symbols of an SRS resource mapping, a repetition factor of an SRS resource mapping, or a value range of a repetition factor of an SRS resource mapping.

With reference to the twenty-eighth aspect, in some implementations of the twenty-eighth aspect, N is applicable to all terminal devices.

With reference to the twenty-eighth aspect, in some implementations of the twenty-eighth aspect, N is applicable to some terminal devices.

According to a twenty-ninth aspect, a communication apparatus is provided, including a processor and a memory. The processor is coupled to the memory, and the memory is configured to store a computer program. The processor is configured to execute the computer program stored in the memory, to enable the communication apparatus to perform the communication method according to any one of the first aspect and the possible implementations of the first aspect, or to enable the communication apparatus to perform the communication method according to any one of the second aspect and the possible implementations of the second aspect, or to enable the communication apparatus to perform the communication method according to any one of the third aspect and the possible implementations of the third aspect, or to enable the communication apparatus to perform the communication method according to any one of the fourth aspect and the possible implementations of the fourth aspect, or to enable the communication apparatus to perform the communication method according to any one of the fifth aspect and the possible implementations of the fifth aspect, or to enable the communication apparatus to perform the communication method according to any one of the sixth aspect and the possible implementations of the sixth aspect, or to enable the communication apparatus to perform the communication method according to any one of the seventh aspect and the possible implementations of the seventh aspect, or to enable the communication apparatus to perform the communication method according to any one of the eighth aspect and the possible implementations of the eighth aspect, or to enable the communication apparatus to perform the communication method according to any one of the ninth aspect and the possible implementations of the ninth aspect, or to enable the communication apparatus to perform the communication method according to any one of the tenth aspect and the possible implementations of the tenth aspect, or to enable the communication apparatus to perform the communication method according to any one of the eleventh aspect and the possible implementations of the eleventh aspect, or to enable the communication apparatus to perform the communication method according to any one of the twelfth aspect and the possible implementations of the twelfth aspect, or to enable the communication apparatus to perform the communication method according to any one of the thirteenth aspect and the possible implementations of the thirteenth aspect, or to enable the communication apparatus to perform the communication method according to any one of the fourteenth aspect and the possible implementations of the fourteenth aspect.

According to a thirtieth aspect, a computer-readable storage medium is provided, storing an instruction. When the instructions are run on a computer, to enable the computer to perform the communication method according to any one of the first aspect and the possible implementations of the first aspect, or to enable the computer to perform the communication method according to any one of the second aspect and the possible implementations of the second aspect, or to enable the computer to perform the communication method according to any one of the third aspect and the possible implementations of the third aspect, or to enable the computer to perform the communication method according to any one of the fourth aspect and the possible implementations of the fourth aspect, or to enable the computer to perform the communication method according to any one of the fifth aspect and the possible implementations of the fifth aspect, or to enable the computer to perform the communication method according to any one of the sixth aspect and the possible implementations of the sixth aspect, or to enable the computer to perform the communication method according to any one of the seventh aspect and the possible implementations of the seventh aspect, or to enable the computer to perform the communication method according to any one of the eighth aspect and the possible implementations of the eighth aspect, or to enable the computer to perform the communication method according to any one of the eighth aspect and the possible implementations of the eighth aspect, or to enable the computer to perform the communication method according to any one of the ninth aspect and the possible implementations of the ninth aspect, or to enable the computer to perform the communication method according to any one of the tenth aspect and the possible implementations of the tenth aspect, or to enable the computer to perform the communication method according to any one of the eleventh aspect and the possible implementations of the eleventh aspect, or to enable the computer to perform the communication method according to any one of the twelfth aspect and the possible implementations of the twelfth aspect, or to enable the computer to perform the communication method according to any one of the thirteenth aspect and the possible implementations of the thirteenth aspect, or to enable the computer to perform the communication method according to any one of the fourteenth aspect and the possible implementations of the fourteenth aspect.

According to a thirty-first aspect, a computer program product including instructions is provided. When the instructions are executed by a computer, the computer is enabled to perform the communication method according to any one of the first aspect and the possible implementations of the first aspect, or the computer is enabled to perform the communication method according to any one of the second aspect and the possible implementations of the second aspect, or the computer is enabled to perform the communication method according to any one of the third aspect and the possible implementations of the third aspect, or the computer is enabled to perform the communication method according to any one of the fourth aspect and the possible implementations of the fourth aspect, or the computer is enabled to perform the communication method according to any one of the fifth aspect and the possible implementations of the fifth aspect, or the computer is enabled to perform the communication method according to any one of the eleventh aspect and the possible implementations of the eleventh aspect, or the computer is enabled to perform the communication method according to any one of the twelfth aspect and the possible implementations of the twelfth aspect, or the computer is enabled to perform the communication method according to any one of the thirteenth aspect and the possible implementations of the thirteenth aspect.

According to a thirty-second aspect, a computer program product including instructions is provided. When the instructions are executed by a computer, the computer is enabled to perform the communication method according to any one of the sixth aspect and the possible implementations of the sixth aspect, or the computer is enabled to perform the communication method according to any one of the seventh aspect and the possible implementations of the seventh aspect, or the computer is enabled to perform the communication method according to any one of the eighth aspect and the possible implementations of the eighth aspect, or the computer is enabled to perform the communication method according to any one of the ninth aspect and the possible implementations of the ninth aspect, or the computer is enabled to perform the communication method according to any one of the tenth aspect and the possible implementations of the tenth aspect, or the computer is enabled to perform the communication method according to any one of the fourteenth aspect and the possible implementations of the fourteenth aspect.

### BRIEF DESCRIPTION OF DRAWINGS

FIG. 1 is a schematic diagram of a system architecture according to this application;
FIG. 2 is a schematic diagram of configuration of a guard period between different SRS resources in a same resource set;
FIG. 3 is a schematic flowchart of an information transmission method according to this application;
FIG. 4 is a schematic diagram of configuration of a guard period between different SRS resources according to this application;
FIG. 5 is a schematic flowchart of another information transmission method according to this application;
FIG. 6 is a schematic diagram of configuration of a location distribution of a guard period between different SRS resources according to this application;
FIG. 7 is a schematic flowchart of still another information transmission method according to this application;
FIG. 8 is a schematic flowchart of yet still another information transmission method according to this application;
FIG. 9 is a schematic block diagram of a communication apparatus according to this application; and
FIG. 10 is a schematic block diagram of another communication apparatus according to this application.

### DESCRIPTION OF EMBODIMENTS

The following describes the technical solutions in this application with reference to the accompanying drawings.

The technical solutions in embodiments of this application may be applied to various communication systems such as a global system of mobile communications (global system of mobile communications, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), and a worldwide interoperability for microwave access (worldwide interoperability for microwave access, WiMAX) communication system, a 5th generation (5th generation, 5G) system, a new radio (new radio, NR) system, and another future communication system, for example, a 6th generation (6th generation, 6G) system. This is not specifically limited in this application.

A terminal device in embodiments of this application may include various handheld devices (handset), vehicle-mounted devices, wearable devices, computing devices, or other processing devices connected to a wireless modem (modem), that have a wireless communication function. The terminal device may be a mobile station (mobile station, MS), a subscriber unit (subscriber unit), a cellular phone (cellular phone), a smartphone (smartphone), a wireless data card, a personal digital assistant (personal digital assistant, PDA) computer, a tablet computer, a laptop computer (laptop computer), a machine type communication (machine type communication, MTC) terminal, or the like. The terminal device may alternatively be user equipment (user equipment, UE), an access terminal, a subscriber station, a remote station, a remote terminal, a mobile device, a user terminal, a terminal, a wireless communication device, a user agent, or a user apparatus. The terminal device may alternatively be a cordless phone, a session initiation protocol (session initiation protocol, SIP) phone, a wireless local loop (wireless local loop, WLL) station, a terminal device in a 5G network, a terminal device in a public land mobile communication network (public land mobile network, PLMN), or the like. This is not specifically limited in embodiments of this application.

A network device in embodiments of this application is an apparatus that provides a wireless communication function for a terminal device and that is deployed in a radio access network. The network device may include a macro base station, a micro base station (also referred to as a small cell), a relay station, an access point, and the like in various forms. In systems in which different radio access technologies are used, names of the network device may be different, for example, a base transceiver station (base transceiver station, BTS) in a GSM or CDMA network, a base station (NodeB, NB) in a WCDMA network, and an evolved base station (evolved NodeB, eNodeB) in an LTE system. The network device may alternatively be a wireless controller in a cloud radio access network (cloud radio access network, CRAN) scenario. The network device may alternatively be a base station device in a 5G network or a network device in a PLMN network. The network device may alternatively be a wearable device or a vehicle-mounted device. The network device may alternatively be a transmission and reception node (transmission and reception point, TRP), a relay station, or an access point. This is not specifically limited in embodiments of this application.

It should be understood that, in embodiments of this application, UE is used as a typical example of the terminal device to describe the technical solutions provided in this application, which cannot constitute any limitation or constraint on an actual application scope of the technical solutions provided in this application, and is collectively described herein. Details are not described hereinafter again.

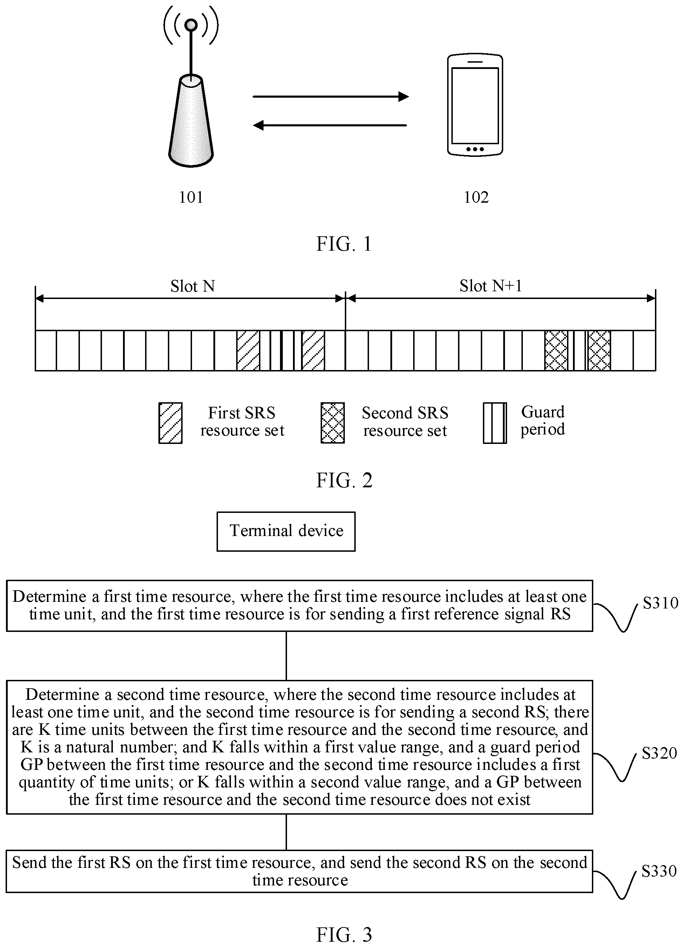

FIG. 1 is a schematic diagram of a communication system 100 applicable to a technical solution in this application. Specifically, as shown in FIG. 1, the communication system 100 includes a network device 101 and a terminal device (UE) 102. The network device 101 may be any one of the network devices enumerated above, and the terminal device (UE) 102 may be any one of the terminal devices enumerated above.

In the communication system 100 shown in FIG. 1, transmission between the network device 101 and the terminal device 102 may be implemented through a radio wave, or may be implemented through a transmission medium, for example, visible light, laser light, an infrared ray, or an optical fiber. This is not specifically limited in this application.

The following describes some concepts in the technical solutions in this application.

It should be understood that, in the release 15 (release 15, Rel-15)/protocol release 16 (release 16, Rel-16), one or more SRS resource sets may be configured for the UE by using a higher layer parameter SRS-Resource Set.

Each configured SRS resource set includes at least one SRS resource. A quantity of SRS resources included in each configured SRS resource set may be determined according to a predefined rule, or may be indicated by using higher layer parameter information.

When an SRS resource set whose higher layer parameter usage is "antennaSwitching" is configured for the UE, the UE is configured as one of the following configurations.
1. For 1T2R, two SRS resource sets whose higher layer parameters resourceType (for configuring a time domain behavior of a resource set) have different values are configured for the UE. Alternatively, a maximum of two SRS resource sets whose higher layer parameters resourceType have different values are configured for the UE.

Specifically, for a same resource type resourceType, a network side configures one SRS resource set for a terminal. For different resource types, two SRS resource sets associated with two resource types resourceType are configured. Alternatively, a maximum of two SRS resource sets associated with two resource types resourceType are configured. Two SRS resources are configured for each resource set, and the two SRS resources respectively correspond to different symbols.

Each SRS resource in one resource set includes one independent SRS port. Specifically, each SRS resource in the resource set is associated with the independent SRS port. A UE antenna port associated with an SRS port of the 2^{nd} resource in the resource set is different from a UE antenna port associated with an SRS port of the 1^{st} resource in the resource set.

2. For 2T4R, two SRS resource sets whose higher layer parameters resourceType have different values are configured for the UE. Alternatively, a maximum of two SRS resource sets whose higher layer parameters resourceType have different values are configured for the UE.

Specifically, only one SRS resource set can be configured for a same resource type resourceType. For different resource types, only a maximum of two SRS resource sets associated with two resource types resourceType can be configured. Two SRS resources are configured for each resource set, and the two resources respectively correspond to different symbols.

Each SRS resource in a resource set includes two SRS ports. Specifically, each SRS resource in the resource set is associated with the two SRS ports. AUE antenna port pair associated with an SRS port pair of the 2^{nd} resource in the resource set is different from a UE antenna port pair associated with an SRS port pair of the 1^{st} resource.

3. For 1T4R, zero or one SRS resource set whose higher layer parameter resourceType has a value that is set to "periodic" or "semi-persistent" (a time domain behavior is periodic or semi-persistent) may be configured for the UE. Four SRS resources are configured for each resource set, and the four SRS resources are respectively corresponding to different symbols.

Each SRS resource in a resource set includes an independent SRS port. Specifically, each SRS resource in the resource set is associated with the SRS port. SRS ports of all the resources are associated with different UE antenna ports.

4. For 1T4R, zero or two SRS resource sets whose higher layer parameters resourceType have values that are set to "aperiodic" (a time domain behavior is aperiodic) may be configured for the UE.

A total of four SRS resources are configured in the two resource sets, and the four SRS resources respectively correspond to different symbols in two different slots. SRS ports of all the resources in the two resource sets are associated with different UE antenna ports.

Two SRS resources are configured in each of the two resource sets, or one SRS resource is configured in one resource set, and three SRS resources are configured in the other resource set.

In the two resource sets, values corresponding to higher layer parameters aperiodicSRS-ResourceTrigger or AperiodicSRS-ResourceTriggerList for triggering are the same, and slot offset parameters slotOffset in each resource set are different.

5. For 1T=1R, 2T=2R, or 4T=4R, a maximum of two SRS resource sets are configured for the UE, each resource set includes an SRS resource, and a quantity of SRS ports of each SRS resource is 1, 2, or 4.

A guard period (guard period, GP) of Y (for ease of differentiation, Y may be considered as S) symbols is configured for the UE. When SRSs corresponding to SRS resources in one resource set are transmitted in a same slot, the UE does not transmit another signal in the guard period, and the GP is configured between different SRS resources in the same SRS resource set.

Table 1 shows a minimum GP between two SRS resources in an SRS resource set for antenna switching. Details are shown in Table 1.

**Table 1**

| µ | Δf=2^{µ}·15 (kHz) | Y (symbol) |
|---|---|---|
| 0 | 15 | 1 |
| 1 | 30 | 1 |
| 2 | 60 | 1 |
| 3 | 120 | 2 |

It should be understood that, in xTyR in the foregoing content, x represents a quantity of transmit antennas, and y represents a quantity of receive antennas.

For example, based on a UE capability supportedSRS-TxPortSwitch, the UE supports 't4r6', that is, the UE supports 4T6R. To be specific, the UE supports using six antenna ports to receive a signal. Four of the six antenna ports are configured to send a signal.

For a case type of "antennaSwitching", the UE expects that a same quantity of SRS ports are configured for each SRS resource in one SRS resource set.

For 1T2R, 1T4R, or 2T4R, the UE does not expect that more than one SRS resource set whose higher layer parameter usage is "antennaSwitching" is configured or triggered in a same slot.

For 1T=1R, 2T=2R, or 4T=4R, the UE does not expect that more than one SRS resource set whose higher layer parameter usage is "antennaSwitching" is configured or triggered in a same symbol.

FIG. 2 is a schematic diagram of configuration of a guard period between different SRS resources in a same resource set.

Specifically, as shown in FIG. 2, a first SRS resource set is configured for UE in a slot N. The first SRS resource set includes two SRS resources. All time domain symbols between the two SRS resources in the first SRS resource set are a GP. The UE does not transmit any other signal in the GP. It should be understood that the UE does not transmit the any other signal, does not transmit any data, or does not transmit any information in the GP.

It should be understood that a guard period GP between a first time resource and a second time resource may be the same as or different from a time unit between the first time resource and the second time resource. For example, the guard period GP between the first time resource and the second time resource is less than the time unit between the first time resource and the second time resource. In other words, a signal or data may be transmitted in a part of the time units between the first time resource and the second time resource, and the signal or the data cannot be transmitted in another part of the time units between the first time resource and the second time resource.

A second SRS resource set is configured for the UE in a slot N+1 adjacent to the slot N in which the first SRS resource set is located. The second SRS resource set includes two SRS resources. All time domain symbols between the two SRS resources in the second SRS resource set are a GP. The UE does not transmit any other signal in the GP.

In the scenario described in FIG. 2, in one aspect, it is stipulated in an existing release Rel-15/Rel-16 that an SRS resource can be only on last six time domain symbols of one slot. Therefore, a maximum quantity of time domain symbols between two SRS resources in a same SRS resource set is 4, and a minimum quantity of time domain symbols between the first SRS resource set and the second SRS resource set is 8.

In an existing protocol, it is stipulated that all time domain symbols between two SRS resources in a same SRS resource set are a GP, and a GP between two SRS resources located in different slots or belonging to different SRS resource sets is not stipulated.

In another aspect, it is stipulated in the existing protocol that only one SRS resource set for antenna switching can be configured for UE in one slot. However, in the release 17 (release 17, Rel-17), an SRS configuration is enhanced. For example, UE can report, based on a capability of the UE, that an SRS can be sent only on last six symbols of one slot, or an SRS can be sent on any time domain symbol of one slot.

For another example, for an aperiodic SRS for antenna switching, in Rel-17, configuration of N≤Nₘₐₓ SRS resource sets is supported.

For example, three SRS resource sets are configured to implement 1T6R antenna switching. When a quantity of uplink (uplink, UL) symbols in one slot is sufficient, the three SRS resource sets may be triggered to be sent in a same slot. When a quantity of UL symbols in one slot is insufficient, the three SRS resource sets may be triggered to be sent in a plurality of slots.

Based on enhancement of the foregoing two SRS configurations, a GP between different SRS resources for antenna switching needs to be re-stipulated, so that the GP meets a requirement in different scenarios,
for example, when one SRS resource may be sent on last six time domain symbols in one slot, or may be sent on any time domain symbol in one slot, how to define a GP between two SRS resources in a same SRS resource set,
for example, if at least two SRS resource sets are configured for the UE in a same slot, whether all time domain symbols between two SRS resources belonging to different SRS resource sets should be considered as the GP, and
for example, if one SRS resource set is separately configured for the UE in two adjacent slots, whether all time domain symbols between two SRS resources that are located in the two adjacent slots and that belong to different SRS resource sets should be considered as a GP, and the like.

In view of the foregoing technical problems, this application provides an information transmission method. According to the method, a GP between different SRS resources can be redefined in this application, so that the requirement in the foregoing different scenarios can be met.

With reference to the accompanying drawings, the following describes the technical solutions provided in this application.

It should be understood that UE does not transmit any other signal or transmit any data on the GP.

It should be understood that, in embodiments of this application, the guard period (guard period, GP) may have another name. For example, the guard period may be one or more time units. The time unit is one or more of the following: a symbol, a slot, a mini-slot (mini-slot), a frame (frame), a subframe (subframe), and a half-frame (half-frame).

The guard period may be a resource. For example, the resource may be one or more of broadband, a subband, a resource including one or more resource blocks (resource blocks, RBs), one or more subcarrier resources, a frequency range, a frequency band, a frequency range, one or more subcarrier spacings, a quantity of subcarrier spacings, a bandwidth part (bandwidth part, BWP), a frequency hopping interval, and a quantity of frequency hopping (frequency hopping, FH) hops. This is not specifically limited in this application.

It should be understood that, in embodiments of this application, there is an association relationship between a location of the guard period and a transmission location of information. In other words, there is also an association relationship between a length of the guard period and a transmission time interval of two adjacent reference signals. The two descriptions have an equivalent meaning.

Specifically, the UE determines the location of the guard period based on the association relationship. The association relationship is predefined, or the association relationship is indicated by a base station. When the association relationship is indicated by the base station, for different UE, association relationships indicated by the base station may be the same or different. For example, for UE with different characteristics, association relationships indicated by the base station are different.

It should be understood that, in embodiments of this application, the information may be an uplink signal, uplink data, a downlink signal, or downlink data. For example, the uplink signal may be an uplink reference signal (uplink reference signal, UL RS). For example, the UL RS is an SRS, a demodulation reference signal (demodulation reference signal, DMRS), or a positioning reference signal. The SRS is for antenna switching (for example, a higher layer parameter usage is configured as antennaSwitching), or the SRS is for beam management (for example, a higher layer parameter usage is configured as beamManagement), or the SRS is for codebook-based uplink data transmission (for example, a higher layer parameter usage is configured as a codebook), or the SRS is for non-codebook-based uplink data transmission (for example, a higher layer parameter usage is configured as a non-codebook), or the SRS is for positioning. In addition, the SRS may be a configured SRS, a triggered SRS, or an SRS sent by the UE. This is not specifically limited in this application.

It should be understood that the uplink data may be data carried on a physical uplink shared channel (physical uplink shared channel, PUSCH), data carried on a PUSCH, data carried on a physical uplink control channel (physical uplink control channel, PUCCH), or data carried on a PUCCH. This is not specifically limited in this application.

For ease of description of the technical solutions in this application, in this application, the technical solutions in this application are described by using an example in which the information is the SRS, the guard period is the time unit, and the time unit is a time domain symbol. However, it should be noted that the technical solutions in this application are also applicable to a case in which the guard period is another resource and/or the information is another type of signal. This description manner has no limitation.

It should be collectively noted that, in embodiments of this application, sending of an SRS is equivalent to sending of an SRS resource, sending of an SRS resource set is also equivalent to sending of an SRS included in the SRS resource set, and transmission of an SRS is also equivalent to transmission of an SRS resource. This description is also applicable to a similar description in embodiments of this application, which is collectively described herein. Details are not described hereinafter again.

It should be collectively noted that, in embodiments of this application, sending and transmission are also equivalent.

It should be further collectively noted that, in embodiments of this application, being between two adjacent time resources should be understood as follows: When the two adjacent time resources each include at least one time unit, a quantity of time units between the last time unit included in a previous time resource and the 1^{st} time unit included in a subsequent time resource constitutes an accurate meaning of being between the two adj acent time resources in embodiments of this application. For example, when a first time resource is adjacent to a second time resource, the first time resource is before the second time resource, the first time resource includes at least one time unit, and the second time resource includes at least one time unit, being between the first time resource and the second time resource means being between the last time unit included in the first time resource and the 1^{st} time unit included in the second time resource. This description is also applicable to being between other time resources in embodiments of this application and being between two adjacent resource sets, which is collectively described herein. Details are not described hereinafter again.

FIG. 3 shows an information transmission method. An execution body of the method is UE. A specific method procedure is shown in FIG. 3.

S310: Determine a first time resource, where the first time resource includes at least one (or one or more) time unit (or time units), and the first time resource is for sending a first RS.

S320: Determine a second time resource, where the second time resource includes at least one (or one or more) time unit (or time units), and the second time resource is for sending a second RS.

S330: Send the first RS on the first time resource, and send the second RS on the second time resource.

It should be understood that, in this embodiment of this application, the first RS and the second RS are RSs of a same type. For example, when the first RS is an SRS, the second RS is also an SRS.

It should be understood that, in this embodiment of this application, the first RS and the second RS are two adjacent RSs. The adjacency is adjacency in a sequence, but is not necessarily adjacency in a time unit.

It should be understood that the UE can determine, based on time domain locations or locations of the first time resource and the second time resource, that a quantity of time units between the first time resource and the second time resource is K, where K is a natural number, or there is an association relationship between K and time domain locations or locations of the first time resource and the second time resource. In addition, the UE can further determine a GP between the first time resource and the second time resource based on the quantity K of time units between the first time resource and the second time resource. Alternatively, there is an association relationship between K and a GP between the first time resource and the second time resource.

In other words, the UE may determine, based on the quantity of time units between the first time resource and the second time resource, whether the GP is configured between the first RS and the second RS.

Specifically, when K falls within a first value range, the GP between the first time resource and the second time resource includes a first quantity of time units; and/or when K falls within a second value range, the GP between the first time resource and the second time resource does not exist.

It should be understood that, when K falls within the second value range, that the GP between the first time resource and the second time resource does not exist may be understood as that the GP includes zero time units.

It should be understood that, that the GP between the first time resource and the second time resource does not exist means that the GP is not configured between the first time resource and the second time resource, or the GP is not defined between the first time resource and the second time resource, or the GP between the first time resource and the second time resource includes zero time units.

That K falls within a first value range means that a value of K is less than or equal to a first threshold. K falls within a second value range means that a value of K is greater than a first threshold.

Alternatively, that K falls within a first value range means that a value of K is less than a first threshold. That K falls within a second value range means that a value of K is greater than or equal to a first threshold.

Alternatively, that K falls within a first value range means that a value of K is greater than 0, and the value of K is less than or equal to a first threshold.

It should be understood that the first threshold is a natural number, and the first threshold is configured by using higher layer signaling or predefined.

For example, the first threshold is 4.

Specifically, the first value range is from 0 to 4, that is, the first value range is 0, 1, 2, 3, and 4. Alternatively, the first value range is from 1 to 4, that is, the first value range is 1, 2, 3, and 4. Alternatively, the first value range is from 0 to 2. Alternatively, the first value range is from 1 to 4. This is not specifically limited in this application.

If an SRS can be sent only on last six symbols in one slot according to a stipulation, and a minimum GP is one symbol or two symbols, a maximum value of a GP between two SRSs is four symbols.

It should be understood that the first threshold is 4, which can ensure protocol compatibility. In addition, a requirement can be met by maintaining a same capability for UE in a previous version specification (for example, Rel-15/16) and UE corresponding to another protocol version. This imposes a lowest complexity requirement on the UE.

Specifically, a value range of the second value range is a value greater than 4, that is, the second value range may be 5, 6, and 7, 5 to 8, 6 to 10, any integer greater than 4, or the like. This is not specifically limited in this application.

In a possible implementation, the first threshold is configured by using a higher layer parameter.

In a possible implementation, the first threshold is one of values greater than 1 and less than or equal to 14.

In a possible implementation, the first threshold is equal to U, where a value of U is 1 or 2.

It should be understood that, when the GP is configured between the first time resource and the second time resource, the U value is the quantity of time units included in the GP. Alternatively, when the GP is configured between the first time resource and the second time resource, a quantity of time units included in the minimum GP is equal to U.

Alternatively, a minimum interval between the first time resource and the second time resource is equal to U symbols. Optionally, the value of U is associated with a value of a subcarrier spacing. For example, U=1 when the subcarrier spacing is 15 kHz, 30 kHz, 60 kHz, or another value less than 120 kHz. For another example, U=2 when the subcarrier spacing is 120 kHz or a value greater than 120 kHz.

It should be understood that, if the minimum interval between the first time resource and the second time resource is equal to the U symbols, a signal or data may be transmitted on the U symbols, or a signal or data may not be transmitted on the U symbols. For example, the signal or the data is transmitted on a part of the U symbols, and the signal or the data is not transmitted on another part of the U symbols.

Optionally, the U value is not limited to 1 or 2, and may alternatively be another value.

In a possible implementation, that K falls within a first value range means that a value of K is less than or equal to a third threshold. That K falls within a second value range means that a value of K is greater than a fourth threshold. The fourth threshold is greater than the third threshold.

It should be understood that both the third threshold and the fourth threshold are natural numbers, and the third threshold and the fourth threshold are configured by using higher layer signaling or predefined.

For example, the third threshold is 13, and the fourth threshold is 26. For example, the first value range is from 0 to 13, that is, the first value range is 0, 1, 2, 3, 4, ..., and 13. Alternatively, the first value range is from 1 to 13, that is, the first value range is 1, 2, 3, 4, ..., and 13. Alternatively, the first value range is 0 to 10. Alternatively, the first value range is 1 to 10. A value range of the second value range is a value greater than 26, that is, the second value range may be 27, 28, and 29, 27 to 30, 28 to 31, or any integer greater than 26. This is not specifically limited in this application.

It should be understood that the third threshold is predefined as 13 and the fourth threshold is predefined as 26. In this application, the quantity of time units included in the GP between the first time resource and the second time resource can be flexibly determined based on the quantity of time units between the first time resource and the second time resource. Alternatively, in this application, whether the GP exists between the first time resource and the second time resource can be flexibly determined based on the quantity of time units between the first time resource and the second time resource. In this way, flexibility of data scheduling is improved.

Specifically, for example, when K is greater than the third threshold and less than or equal to the fourth threshold, and the first time resource and the second time resource belong to different and consecutive slots, the GP exists between the first time resource and the second time resource. For another example, when K is greater than the third threshold and less than or equal to the fourth threshold, and the first time resource and the second time resource belong to inconsecutive slots, the GP does not exist between the first time resource and the second time resource.

According to the foregoing technical solution, the third threshold is equal to 13. This can ensure that the guard period exists between the first time resource and the second time resource when the first time resource and the second time resource belong to a same slot or belong to the different and consecutive slots, thereby ensuring that the UE has sufficient duration to perform antenna switching. In addition, when the first time resource and the second time resource belong to the inconsecutive slots, whether to configure the guard period is not limited. This can reduce a limitation on data scheduling, and when the UE meets a switching condition and a performance requirement, ensures that no additional limitation is caused to data scheduling. The fourth threshold is equal to 26. This can ensure that, when the first time resource and the second time resource belong to the different and inconsecutive slots, because an interval between the first time resource and the second time resource is large enough, the guard period between the first time resource and the second time resource does not exist, thereby ensuring that no additional limitation is caused to data scheduling when the UE meets the switching condition and the performance requirement.

In a possible implementation, the third threshold is a predefined value, or the third threshold is a value configured by using a higher layer parameter; and/or the fourth threshold is a predefined value, or the fourth threshold is a value configured by using a higher layer parameter.

In a possible implementation, the first threshold is equal to 8.

The first threshold is predefined as 8. In this way, in this application, when the first time resource and the second time resource respectively belong to two slots, it can be stipulated that, when the quantity of time units between the first time resource and the second time resource is less than or equal to 8, the GP between the first time resource and the second time resource is configured. When the quantity of time units between the first time resource and the second time resource is greater than 8, the GP between the first time resource and the second time resource is not configured. In this way, it can be ensured that the UE has the sufficient duration to perform antenna switching, and no additional limitation is imposed on data scheduling, to ensure backward compatibility of this solution. An existing protocol and a requirement on a capability of the UE are slightly changed, to reduce a requirement on complexity of the UE.

In a possible implementation, the first time resource and the second time resource belong to two consecutive slots, and the guard period GP between the first time resource and the second time resource includes a third quantity of time units; and/or the first time resource and the second time resource belong to two inconsecutive slots, and the GP between the first time resource and the second time resource does not exist.

It should be understood that consecutive slots are equivalent to adjacent slots. That the first time resource and the second time resource belong to the two consecutive slots means being equivalent to that a slot in which the first time resource is located is adjacent to a slot in which the second time resource is located, or being equivalent to that the first RS and the second RS are transmitted in adjacent slots.

Specifically, that the GP between the first time resource and the second time resource includes the third quantity of time units is determined based on a case that the first time resource and the second time resource belong to the two consecutive slots. When the first time resource and the second time resource belong to the two inconsecutive slots, the time unit between the first time resource and the second time resource is not configured as the GP. In this way, in this embodiment of this application, the GP between the first time resource and the second time resource is better configured based on the two scenarios whether the first time resource and the second time resource belong to the two consecutive slots, to improve flexibility of data scheduling.

According to the foregoing technical solution, when the first time resource and the second time resource belong to the two consecutive slots, in this application, a GP between different SRS resources in a same resource set is redefined, or a GP between different SRS resources in different resource sets is defined, so that the GP can ensure that the UE has the sufficient duration to complete switching. When the first time resource and the second time resource belong to the two inconsecutive slots, in this application, the GP between the first time resource and the second time resource is not configured. In this way, in this application, an existing time interval between the first time resource and the second time resource can be used, to ensure that the UE has the sufficient duration to complete switching. When the first time resource and the second time resource belong to the two inconsecutive slots, the interval between the two time resources is large, and data scheduling is allowed between the two time resources. However, duration used by the UE to perform antenna switching is short, and impact on data scheduling performance is small. Therefore, scheduling efficiency of a network device can be improved.

In a possible implementation, the first time resource and the second time resource belong to two consecutive slots, K falls within the first value range, and the guard period GP between the first time resource and the second time resource includes a third quantity of time units; and/or K falls within the second value range, and the guard period GP between the first time resource and the second time resource includes a fourth quantity of time units.

Specifically, a value of the third quantity is equal to K, and a value of the fourth quantity is less than K.

Optionally, the value of the fourth quantity is equal to U, where a value of U is 1 or 2.

In a possible implementation, the first threshold is greater than or equal to U, and a value of U is 1 or 2.

It should be understood that, when the GP is configured between the first time resource and the second time resource, the U value is the quantity of time units included in the GP. Alternatively, when the GP is configured between the first time resource and the second time resource, a quantity of time units included in the minimum GP is equal to U. For descriptions of the U value, refer to the foregoing descriptions. Details are not described herein again.

Optionally, the U value may alternatively mean that, when the GP is configured between the first time resource and the second time resource, a value of a minimum quantity of time units included in the GP is equal to the U value.

Optionally, the U value is not limited to 1 or 2, and may alternatively be another value.

In a possible implementation, there are K time units between the first time resource and the second time resource, K falls within to the first value range, and the guard period GP between the first time resource and the second time resource includes a fifth quantity of time units; and/or K falls within the second value range, and the guard period GP between the first time resource and the second time resource includes a sixth quantity of time units; and/or K falls within a third value range, and the GP between the first time resource and the second time resource does not exist.

Specifically, a quantity of time units included in the GP between the first time resource and the second time resource depends on a value range within which K falls. For example, when K falls within the first value range, the GP includes the fifth quantity of time units. When K falls within the second value range, the GP includes the sixth quantity of time units. When K falls within the third value range, the GP does not exist.

That K falls within a first value range means that a value of K is less than or equal to the first threshold; that K falls within a second value range means that a value of K is greater than the first threshold, and the value of K is less than or equal to a fifth threshold; or that K falls within a third value range means that a value of K is greater than a fifth threshold, where the first threshold and the fifth threshold are natural numbers.

Specifically, the fifth quantity and the third quantity are the same, that is, are both equal to K, and the sixth quantity and the fourth quantity are the same, that is, are both equal to U. Alternatively, the fifth quantity is greater than or equal to the sixth quantity.

Specifically, when K falls within the first value range, a requirement for data scheduling is low. In this application, data scheduling is not allowed, to ensure high implementation flexibility of the UE. When K falls within the second value range, a requirement for data scheduling is high. In this application, data scheduling is allowed, and the GP is defined, to ensure data transmission performance. When K falls within the third value range, a distance between two SRSs is large long. In this application, antenna switching is performed by the UE, and a loss of data transmission performance is small, to ensure that data scheduling is not limited.

In a possible implementation, the fifth threshold is equal to 8; or the fifth threshold is equal to 14; or the fifth threshold is equal to 26.

Specifically, when the fifth threshold is 8, in this application, when the first time resource and the second time resource respectively belong to two slots, that the GP between the first time resource and the second time resource is configured when the quantity of time units between the first time resource and the second time resource is less than or equal to 8 is defined, to ensure backward compatibility. When the fifth threshold is 14, in this application, a guard period between two resource sets in two consecutive slots is defined, and a guard period between two resource sets in inconsecutive slots is not defined. A minimum distance between two inconsecutive slots is 14. Therefore, the fifth threshold is defined as 14. This can ensure that sufficient duration is reserved between the two resource sets to perform antenna switching. When the fifth threshold is 26, in this application, a guard period between two resource sets in two consecutive slots is defined, and a guard period between two resource sets in inconsecutive slots is not defined. A maximum distance between the two consecutive slots is 26. Therefore, the fifth threshold is defined as 26. This can ensure that sufficient duration is reserved between the two resource sets to perform antenna switching.

It should be understood that the GP between the first time resource and the second time resource is related to the time unit between the first time resource and the second time resource.

It should be understood that a value of the first quantity meets at least one of the following relationships:
the first quantity is a positive integer; or the first quantity is less than or equal to K.

For example, the value of the first quantity is less than K; or the value of the first quantity is equal to K; or the first quantity is less than or equal to K, where the first quantity is a positive integer.

In a possible implementation, when K falls within the second value range, the GP between the first time resource and the second time resource includes a second quantity of time units.

A value of the second quantity meets at least one of the following relationships:
the second quantity is equal to 0; the second quantity is less than or equal to the first quantity; or the second quantity is less than K.

For example, the value of the second quantity is different from the value of the first quantity. The value of the first quantity is greater than or equal to the value of the second quantity.

For example, if the second quantity is 0, it indicates that none of all the time units between the first time resource and the second time resource is the GP. Alternatively, it indicates that none of all the time units between the first time resource and the second time resource is configured as the GP.

In a possible implementation, when K falls within the second value range, the GP between the first time resource and the second time resource includes a fifth quantity of time units.

A value of the fifth quantity meets at least one of the following relationships:
the fifth quantity is less than or equal to the first quantity; the fifth quantity is less than K; or the fifth quantity is equal to U.

For example, the value of the fifth quantity is different from the value of the first quantity. The value of the first quantity is greater than or equal to the value of the fifth quantity.

It should be understood that the value of the fifth quantity may be less than or equal to that of the first quantity, and a value of the sixth quantity may be less than or equal to the value of the fifth quantity.

In a possible implementation, the UE determines, based on any one of the first quantity, the second quantity, the third quantity, the fourth quantity, the fifth quantity, and the sixth quantity, the quantity of time units included in the GP between the first time resource and the second time resource. Alternatively, the UE determines, based on any one of the first value range and the second value range, the quantity of time units included in the GP between the first time resource and the second time resource. In other words, the UE determines, based on one of the two cases enumerated above, the quantity of time units included in the GP between the first time resource and the second time resource.

In a possible implementation, the UE can determine the GP based on a relationship between the first threshold and the quantity of time units between the first time resource and the second time resource. Alternatively, the UE can determine the GP based on a relationship between the third threshold, the fourth threshold, and the quantity of time units between the first time resource and the second time resource. Alternatively, the UE can determine the GP based on the first threshold and the fifth threshold. Alternatively, there is an association relationship between the GP and a relationship between the quantity of time units between the first time resource and the second time resource and the first threshold, the third threshold, the fourth threshold or the fifth threshold.

For example, if the quantity of time units between the first time resource and the second time resource is less than or equal to the first threshold, the GP exists between the first time resource and the second time resource (or the time unit between the first time resource and the second time resource is processed as the GP). If the quantity of time units between the first time resource and the second time resource is greater than the first threshold, the GP does not exist between the first time resource and the second time resource (or the time unit between the first time resource and the second time resource is not processed as the GP). If the quantity of time units between the first time resource and the second time resource is less than or equal to the third threshold, the GP exists between the first time resource and the second time resource (or the time unit between the first time resource and the second time resource is processed as the GP). If the quantity of time units between the first time resource and the second time resource is greater than the fourth threshold, the GP does not exist between the first time resource and the second time resource (or the time unit between the first time resource and the second time resource is not processed as the GP). If the quantity of time units between the first time resource and the second time resource is less than or equal to the first threshold, the GP exists between the first time resource and the second time resource (or the time unit between the first time resource and the second time resource is processed as the GP). If the quantity of time units between the first time resource and the second time resource is greater than the first threshold and less than or equal to the fifth threshold, the GP between the first time resource and the second time resource includes the second quantity of time units. If the quantity of time units between the first time resource and the second time resource is greater than the fifth threshold, the GP does not exist between the first time resource and the second time resource (or the time unit between the first time resource and the second time resource is not processed as the GP).

In a possible implementation, if the first RS belongs to a first resource set, the second RS belongs to a second resource set, and the first resource set and the second resource set are different resource sets, the first time resource is the last time unit occupied by the first resource set, and the second time resource is the 1^{st} time unit occupied by the second resource set. The first time resource is before the second time resource.

It should be understood that the first RS and the second RS may belong to different RS resource sets. For example, the first RS belongs to the first resource set, the second RS belongs to the second resource set, and the first resource set and the second resource set are different resource sets.

It should be understood that the first RS and the second RS may alternatively belong to a same RS resource set. This is not specifically limited in this application.

It should be understood that the first RS and the second RS may be located in a same slot, or may be located in two different slots. This is not specifically limited in this application.

It should be understood that the first RS and the second RS may be located in the same slot. In other words, it indicates that the first RS and the second RS may be configured in the same slot. Alternatively, it indicates that the first RS and the second RS may be triggered in the same slot. Alternatively, it indicates that the first RS and the second RS may be sent in the same slot.

It should be understood that the first RS and the second RS may alternatively be located in two different slots. Content in descriptions is similar to the foregoing content. Details are not described herein again.

It should be understood that the first RS may be located before the second RS.

It should be understood that the quantity of time units between the first time resource and the second time resource may be that, when the first resource set includes at least one RS, and the second resource set includes at least one RS, the first RS is the last RS in the first resource set, and the second RS is the 1^{st} RS in the second resource set.

It should be understood that the quantity of time units between the first time resource and the second time resource is a minimum quantity of time units between resources included in the two resource sets.

In other words, the quantity of time units between the first time resource and the second time resource is a quantity of time units between the first RS and the second RS, or is a quantity of time units between a resource configured for the first RS and a resource configured for the second RS, or is a quantity of time units between a resource for sending the first RS and a resource for sending the second RS.

It should be understood that being between the first RS and the second RS is being between the last time unit in which the first RS is located and the 1^{st} time unit in which the second RS is located.

It should be understood that the 1^{st} RS and the last RS indicate sequential locations of the RSs in time domain.

In a possible implementation, the first time resource belongs to a first slot, and the second time resource belongs to a second slot. The first slot and the second slot are two different slots. Alternatively, the first slot and the second slot are two consecutive slots. Alternatively, the first slot and the second slot are two inconsecutive slots. Alternatively, the first slot and the second slot are two same slots. According to this technical solution, in this application, a GP between SRS resources in two different and consecutive slots is defined, so that the guard period can meet a requirement in another different scenario. This can ensure that the UE has the sufficient duration to complete switching, and improve scheduling flexibility and scheduling efficiency of the network device.

In a possible implementation, the UE may further send first information to the network device. The first information indicates a reference value of the GP between two times of adjacent RS sending of the UE. For example, the reference value may include a quantity of time units included in a GP, that is preferred by the UE, between the first RS and the second RS, or a minimum value of time units included in a GP, for example, a minimum GP being 0, or a value range of the quantity of time units included in the GP, or a first threshold.

It should be understood that the reference value may alternatively be understood as reference information that is for assisting the network device and/or the UE in determining the GP between the first RS and the second RS and that is reported by the UE to a network, for example, the quantity or the minimum value of time units included in the GP preferred by the UE, the value range, a value range of the first threshold preferred by the UE, a minimum value of the first threshold, or a maximum value of the first threshold.

Correspondingly, the network device determines information about a GP configuration of the UE based on the first information reported by the UE to the network device, for example, the quantity of time units included in the GP between the first RS and the second RS, or information for determining the first threshold.

In a possible implementation, the network device configures first information. The first information is for determining the GP between the first RS and the second RS or for determining a reference value of a GP between sending of the first RS and sending of the second RS.

Optionally, the network device can determine the first information based on reference value information reported by the UE. The first information is for determining the GP between the first RS and the second RS or for determining the reference value of the GP between sending of the first RS and sending of the second RS.

In a possible implementation, the UE sends first information to the network device. The first information includes a first value. The first value is for determining the first threshold. An association relationship between the first value and the first threshold is one of the following relationships:
the first value is the first threshold; the first value is a maximum value of the first threshold; or the first value is a minimum value of the first threshold.

It should be understood that the network device may configure the first information based on the information reported by the UE to the network device, or the network device may independently configure the first information. This is not specifically limited in this application.

Optionally, the first information is capability information reported by a terminal device. For example, the first information is information about whether the terminal device can send an RS on all symbols in one slot.

Specifically, when the terminal device can send the RS on all the symbols in the slot, a value of the GP between two times of adjacent RS sending may be flexibly set, to improve scheduling flexibility of the network device. When the terminal device cannot send the RS on all the symbols in the slot, a value of the GP between two times of adjacent RS sending cannot be flexibly set.

According to the foregoing technical solution, in this application, the UE can report, to the network device based on a GP requirement of the UE or the capability of the UE, a threshold or a condition for determining the GP, or report a length or a location of the GP to the network device. Therefore, in this application, a sufficient GP can be reserved for UE with a weak capability or a high GP requirement, to ensure the sufficient duration for antenna switching. A short GP can be reserved for UE with a strong capability or a low GP requirement, to ensure full utilization and scheduling flexibility of a resource.

In a possible implementation, the UE sends fourth information to the network device. The fourth information indicates the first threshold. Alternatively, the fourth information indicates the third threshold and/or the fourth threshold. Alternatively, the fourth information indicates the first threshold and/or the fifth threshold.

Optionally, the fourth information can be for determining the first threshold. Alternatively, the fourth information can be for determining the third threshold and/or the fourth threshold. Alternatively, the fourth information can be for determining the first threshold and/or the fifth threshold.

According to the foregoing technical solution, in this application, the UE can report, to the network device based on a GP requirement of the UE or the capability of the UE, a threshold or a condition for determining the GP. Therefore, in this application, a sufficient GP can be reserved for UE with a weak capability or a high GP requirement, to ensure the sufficient duration for antenna switching. A short GP can be reserved for UE with a strong capability or a low GP requirement, to ensure full utilization and scheduling flexibility of a resource.

Optionally, the fourth information is capability information reported by a terminal device. For example, the fourth information is information about whether the terminal device can send an RS on all symbols in one slot.

Correspondingly, the network device receives the fourth information from the terminal device.

It should be understood that the GP between two times of adj acent RS sending is guard duration, processing duration, or antenna switching duration that is for switching between the two times of adjacent RS sending and that is supported by the UE. A quantity of time units included in the GP should be less than or equal to the quantity of time units included in the GP between the first time resource and the second time resource.

In a possible implementation, the UE may further send third information to the network device. The third information indicates a value range of the first threshold, or the third information indicates a value of the first threshold.

It should be understood that the first information or the third information may also be the capability information reported by the UE to the network device. Indication content of the capability information is consistent with indication content of the first information or the third information. This is not specifically limited in this application.

According to the foregoing method, in this application, the UE can report, to the network device based on a GP requirement of the UE or the capability of the UE, a threshold or a condition for determining the GP. Therefore, in this application, a sufficient GP can be reserved for UE with a weak capability or a high GP requirement, to ensure the sufficient duration for antenna switching. A short GP can be reserved for UE with a strong capability or a low GP requirement, to ensure full utilization of a resource.

According to the foregoing method, in this application, whether the guard period needs to be reserved between the first time resource and the second time resource can be determined based on information about a location at which an RS can be sent and that is reported by the UE. If the UE can send the RS on all the symbols in one slot, when the first time resource and the second time resource belong to the two consecutive slots, the first time resource may be adjacent to the second time resource. By configuring the guard period, it can be ensured that the UE has the sufficient duration to perform antenna switching. If the UE does not have a capability of sending the RS on all the symbols in the slot, that is, the UE can send the RS only on last six symbols, when the first time resource and the second time resource belong to the two consecutive slots, there are at least eight symbols between the first time resource and the second time resource. In this case, the guard period does not need to be configured, and it can also be ensured that the UE has the sufficient duration to perform antenna switching. This reduces a limitation on data scheduling.

In a possible implementation, the UE may further receive first signaling from the network device. The first signaling indicates a value of the first threshold. Alternatively, the first signaling indicates the third threshold and/or the fourth threshold. Alternatively, the first signaling indicates the first threshold and/or the fifth threshold.

In a possible implementation, values of the first threshold, the third threshold, the fourth threshold, and the fifth threshold may be predefined, namely, default values determined by the UE and the network device by using a protocol.

In a possible implementation, the value of the first threshold may be 4.

It should be understood that the first threshold is 4, to ensure compatibility with an existing protocol. In this way, a requirement can be met by maintaining a same capability for the UE corresponding to this application and UE corresponding to an existing mechanism. This imposes a lowest complexity requirement on the UE.

In a possible implementation, the terminal device determines the GP based on the first threshold and the fifth threshold.

According to the foregoing method, in this application, a GP between different SRS resources in a same resource set is redefined, and a GP between different SRS resources in different resource sets is defined. In this way, the GPs can meet a requirement in another different scenario, to ensure that the UE has the sufficient duration to complete switching, and improve scheduling efficiency of the network device.

It should be understood that the network device can also perform the information transmission method shown in FIG. 3 and described above. A specific method procedure is basically consistent with that shown in FIG. 3 and described above. The following only enumerates a technical solution in which the network device is used as an execution body and that is different from the technical solution in which the UE is used as the execution body. Details are as follows.

In a possible implementation, the network device may further receive the first information from the UE. For the indication content of the first information, refer to the foregoing descriptions. Details are not described herein again.

In a possible implementation, the network device may further send the first signaling to the UE. The first signaling indicates the value of the first threshold. Alternatively, the first signaling indicates a value of the third threshold and/or a value of the fourth threshold. Alternatively, the first signaling indicates a value of the first threshold and/or a value of the fifth threshold.

It should be understood that the steps shown in FIG. 3 may be separately performed, or may be in any combination relationship. This is not specifically limited in this application.

It should be understood that the first signaling is higher layer signaling configuration information. For example, the higher layer signaling configuration information may be radio resource control (radio resource control, RRC), or a medium access control-control element (medium access control-control element, MAC CE).

It should be understood that, in this embodiment of this application, that the GP between the first time resource and the second time resource does not exist is equivalent to that a scheduling limitation is not defined in the time unit between the first time resource and the second time resource in this application. Alternatively, that the GP between the first time resource and the second time resource does not exist is equivalent to that, in this application, in the time unit between the first time resource and the second time resource, another signal may be transmitted, or data may be transmitted, or data may be scheduled.

It should be understood that, in this embodiment of this application, that the GP between the first time resource and the second time resource exists is equivalent to that a scheduling limitation is defined in the time unit between the first time resource and the second time resource in this application. Alternatively, that the GP between the first time resource and the second time resource exists is equivalent to that, in this application, in the time unit between the first time resource and the second time resource, another signal cannot be transmitted, or data cannot be transmitted, or data cannot be scheduled.

It should be noted that, in this embodiment of this application, the first threshold is associated with the U value. For example, the first threshold is equal to U+y. Alternatively, the first threshold is equal to 2U. Alternatively, the third threshold and/or the fourth threshold are/is associated with the U value. For example, the third threshold is equal to U. Alternatively, the fourth threshold is greater than U. Alternatively, the first threshold and/or the fifth threshold are/is associated with the value of U. For example, the first threshold is equal to U+y, where y is a positive integer, and the value of U is 1 or 2; or the first threshold is equal to 4; or the first threshold is equal to 8.

It should be specially noted that the related technical solutions shown in FIG. 3 may be combined with each other to form a new technical solution. For the specific technical solution, refer to the summary. Details are not described herein again.

It should be further specially noted that a specific value of each quantity described in each related technical solution shown in FIG. 3 may be predefined or set based on a specific scenario. This is not specifically limited in this application.

It should be further specially noted that, in this embodiment of this application, when parameter names are the same (for example, the first threshold is used in different solutions), same descriptions may be used for the parameter name. Alternatively, when parameter names are different (for example, the fifth quantity and the third quantity, or the fourth quantity and the sixth quantity), but meanings indicated by the parameter names are the same, same descriptions may also be used for the parameter names. For specific descriptions, refer to the descriptions of the summary.

According to the foregoing method, in this application, the GP between the different SRS resources in the same resource set is redefined, and the GP between the different SRS resources in the different resource sets is defined. In this way, the GPs can meet the requirement in the another different scenario, to ensure that the UE has the sufficient duration to complete switching, and improve scheduling efficiency of the network device.

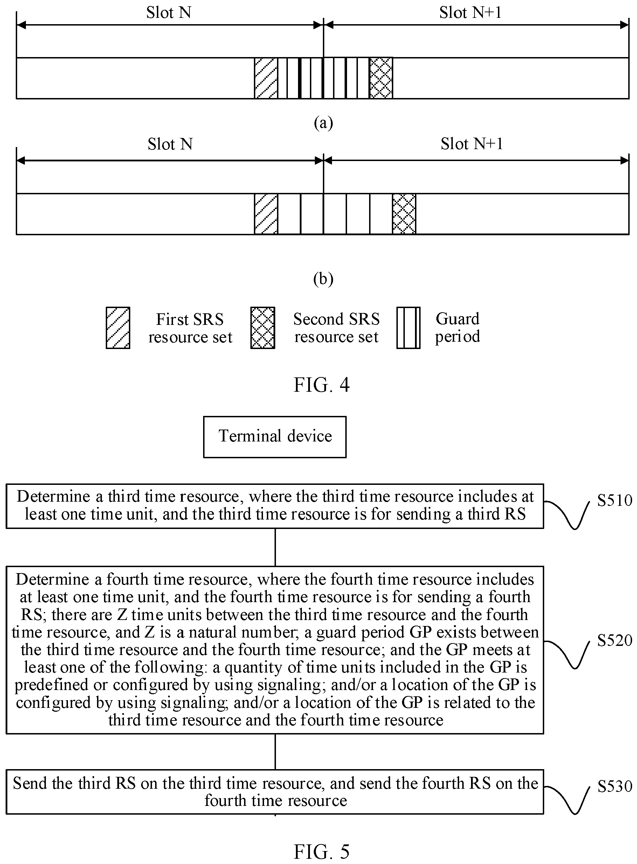

FIG. 4 is a schematic diagram of configuration of a guard period between different SRS resources. Details are shown in FIG. 4.

A first SRS resource set is configured for UE in a slot N, and the SRS resource set includes an SRS resource.

A second SRS resource set is configured for the UE in a slot N+1 adjacent to the slot N in which the first SRS resource set is located, and the SRS resource set includes an SRS resource.

It should be understood that an SRS included in an SRS resource set may be sent in a same slot, or may be sent in different slots, for example, sent in adjacent slots.

In (a) in FIG. 4, there are four time units between a first time resource and a second time resource. In (b) in FIG. 4, there are five time units between the first time resource and the second time resource.

When a first threshold is 4, the case described in (a) in FIG. 4 is a case in which a K value falls within a first value range. In this case, a GP includes a first quantity of time units. In other words, a value of the first quantity may be K, that is, the first quantity is equal to 4. In other words, in the case shown in (a) in FIG. 4, all the time units between the first time resource and the second time resource are the GP.

The case described in (b) in FIG. 4 is a case in which a K value falls within a second value range. In this case, a GP includes a second quantity of time units. In other words, a value of the second quantity is 0. To be specific, it indicates that none of the time units between the first time resource and the second time resource is considered as the GP, or indicates that none of the time units between the first time resource and the second time resource is configured as the GP.

It should be understood that, in the scenario shown in FIG. 4, the first SRS resource set and the second SRS resource set are located in two adjacent slots, but the two SRS resource sets may alternatively be located in a same slot. This is not specifically limited in this application.

It should be understood that the cases described in FIG. 4 is merely an example for understanding, and does not have a limitation function.

FIG. 5 shows another information transmission method according to this application. An execution body of the method is UE. A specific method procedure is shown in FIG. 5.

S510: Determine a third time resource, where the third time resource includes at least one (or one or more) time unit (or time units), and the third time resource is for sending a third RS.

S520: Determine a fourth time resource, where the fourth time resource includes at least one (or one or more) time unit (or time units), and the fourth time resource is for sending a fourth RS.

S530: Send the third RS on the third time resource, and send the fourth RS on the fourth time resource.

The third RS and the fourth RS are RSs of a same type. For example, when the third RS is an SRS, the fourth RS is also an SRS.

It should be understood that a quantity of time units between the third time resource and the fourth time resource may be that, when the third resource set includes at least one RS, and the fourth resource set includes at least one RS, the third RS is the last RS in the third resource set, and the fourth RS is the 1^{st} RS in the fourth resource set.

It should be understood that the quantity of time units between the third time resource and the fourth time resource is a minimum quantity of time units between resources included in the two resource sets.

In other words, the quantity of time units between the third time resource and the fourth time resource is a quantity of time units between the third RS and the fourth RS, or is a quantity of time units between a resource configured for the third RS and a resource configured for the fourth RS, or is a quantity of time units between a resource for sending the third RS and a resource for sending the fourth RS.

It should be understood that a GP between the third time resource and the fourth time resource includes Z time units, and the GP between the third time resource and the fourth time resource meets at least one of the following:
Z is predefined or configured by using higher layer configuration information; a location of the GP is predefined or configured by using higher layer configuration information (for example, RRC or a MAC CE); a location of the GP is related to the third time resource; a location of the GP is related to a fourth time resource; or a location of the GP is related to a value of Z.

It should be understood that the value of Z is predefined, or is indicated by higher layer parameter information, or indicated by the downlink control information. The higher layer parameter information or the downlink control information may be determined based on information reported by the UE.

It should be understood that the signaling configuration manner may be implemented by using first higher layer configuration information. For example, a network device sends the first higher layer configuration information to the UE to indicate the foregoing information about the GP.

It should be understood that the quantity Z of time units included in the GP is an integer.

For example, Z=0, Z=1, Z=2, Z=3, or Z=4.

The value of Z is one of 0, 1, 2, 3, and 4. This can effectively ensure compatibility with an existing protocol (for example, Rel-15/16), and can ensure that there is sufficient switching duration between two RSs, without increasing processing complexity of the UE.

It should be understood that the location of the GP is a time domain location at which the GP is located, or a specific symbol (or symbols) of the GP.

Specifically, in this application, the quantity of time units included in the GP between the third time resource and the fourth time resource may be configured in a predefined manner or by the network device by using signaling. In addition, a location of the time unit included in the GP may also be configured in the predefined manner or by the network device by using signaling. The location may be related to the third time resource and the fourth time resource.

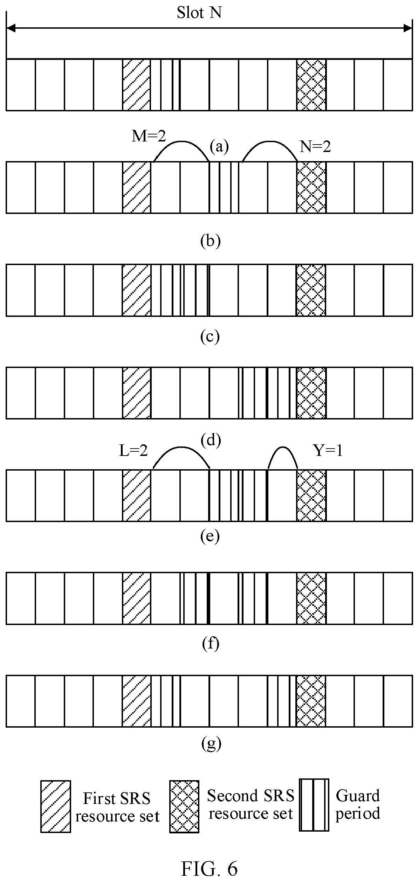

In this application, the location of the time unit included in the GP may be configured based on a time domain location or a location of the third time resource and a time domain location or a location of the fourth time resource. Details are shown in FIG. 6.

In a possible implementation, Z is 1, and the Z time units are adjacent to the third time resource. Alternatively, there are M time units between the Z time units and the third time resource. Alternatively, the Z time units are adjacent to the fourth time resource. Alternatively, there are N time units between the Z time units and the fourth time resource. N and M are positive integers, and N and M are predefined or configured by using signaling.

For example, N is predefined. For example, N=0. M is predefined. For example, M=0.

The signaling may be higher layer signaling (RRC, or a MAC CE), or downlink control information (downlink control information, DCI).

For example, in this application, in the signaling, the Z time units may be configured to be adjacent to the third time resource or the fourth time resource, that is, there are zero symbols or time units between the Z time units and the third time resource or the fourth time resource; or M or N symbols or time units between the Z time units and the third time resource or the fourth time resource are configured.

In this application, a quantity of time units between the Z time units and the third time resource or the fourth time resource may be specifically configured. For example, M=0, M=1, M=2, M=3, or M=4. For example, N=0, N=1, N=2, N=3, or N=4.

The Z time units are adj acent to the third time resource, or the Z time units are adj acent to the fourth time resource. This can effectively reduce a resource fragmentation problem, and facilitate resource scheduling.

An interval between the Z time units and the third time resource or the fourth time resource may be configured by using signaling. This may consider scheduling of a PUSCH or a PUCCH, and semi-statically or dynamically indicate the GP, thereby effectively improving scheduling flexibility.

It should be noted that, in this embodiment of this application, the third time resource is before the fourth time resource. That the Z time units are adjacent to the third time resource should be understood as follows: The Z time units are adjacent to the last time unit included in the third time resource. This description is also applicable to another case, for example, the Z time units are adjacent to the fourth time resource, and there are the M time units between the Z time units and the third time resource, or the like, which is collectively described herein. Details are not described hereinafter again.

In a possible implementation, Z is greater than or equal to 2, and the Z time units are adjacent time units. In other words, it indicates that the Z time units are adjacent together, that is, every two of the Z time units are adjacent. The 1^{st} time unit in the Z time units is adjacent to a third time resource. Alternatively, there are L time units between the 1^{st} time unit in the Z time units and the third time resource. Alternatively, the last time unit in the Z time units is adjacent to the fourth time resource. Alternatively, there are Y time units between the last time unit in the Z time units and the fourth time resource. Both L and Y are positive integers, and L and Y are predefined, or are configured by using higher layer signaling, or are indicated by DCI.

For example, L is predefined. For example, L=0. Y is predefined. For example, Y=0.

The higher layer signaling may be, for example, but is not limited to, one or more of UE-specific radio resource control signaling, cell-specific radio resource control signaling, and a higher layer parameter. In this application, the higher layer configuration information may be RRC signaling, other higher layer signaling, or MAC CE signaling.

For example, in this application, in the RRC signaling or the MAC CE signaling, an adjacency or interval relationship between the Z time units and the third time resource or the fourth time resource may be configured, that is, there are zero or several symbols or time units between the Z time units and the third time resource or the fourth time resource; or when there is an interval relationship between the Z time units and the third time resource or the fourth time resource, in this application, a quantity of time units between the Z time units and the third time resource or the fourth time resource may be specifically configured. For example, Y=0, Y=1, Y=2, Y=3, or Y=4. For example, L=0, L=1, L=2, L=3, or L=4.

It should be understood that the 1^{st} time unit and the last time unit herein mean sequential locations of the time units in time domain. An earliest time unit is the 1^{st} time unit, and a latest time unit is the last time unit.

In a possible implementation, Z is greater than or equal to 2, and the Z time units are in a separate state, that is, two time units are not adjacent. The two time units may be respectively referred to as a first time unit and a second time unit.

Specifically, the first time unit is adjacent to the third time resource, and the second time unit is adjacent to the fourth time resource. Alternatively, the first time unit is adjacent to the third time resource, and there are A time units between the second time unit and the fourth time resource. Alternatively, there are B time units between the first time unit and the third time resource, and the second time unit is adjacent to the fourth time resource. Alternatively, there are C time units between the first time unit and the third time resource, and there are D time units between the second time unit and the fourth time resource.

It should be understood that each quantity of time units is a positive integer, and may be predefined, or may be configured by using signaling, or may be reported by the UE, or may be determined by the UE.

For example, when the first time unit is adjacent to the third time resource, A may be determined in a predefined manner. For example, A=0. When the second time unit is adjacent to the fourth time resource, B may be determined in a predefined manner. For example, B=1. When the first time unit and the third time resource are at an interval, and the second time unit and the fourth time resource are at an interval, C or D may be determined in a predefined manner. For example, C=1 and D=2. This is not specifically limited in this application.

For example, in this embodiment of this application, the quantity of time units can be configured by using the signaling. For example, A=0, B=1, C=2, and D=1. Alternatively, A=0, B=0, C=0, and D=0. This is not specifically limited in this application.

In the foregoing signaling configuration manner, scheduling flexibility of the network device can be improved in this application. In the foregoing manner of reporting by the UE or the foregoing manner of determining by the UE, in this application, the UE can report, to the network device based on a GP requirement of the UE or a capability of the UE, a threshold or a condition for determining the GP. Consequently, corresponding GPs are determined for UE with different capabilities, to ensure full utilization of a resource.

It should be understood that the third RS and the fourth RS may belong to different resource sets. For example, the third RS belongs to the third resource set, the fourth RS belongs to the fourth resource set, and the third resource set and the fourth resource set are different resource sets.

It should be understood that the third RS and the fourth RS may belong to a same resource set.

It should be understood that the third RS and the fourth RS may be located in a same slot, or may be located in two different slots. This is not specifically limited in this application.

It should be understood that the third RS and the fourth RS may be located in a same slot. In other words, it indicates that the third RS and the fourth RS may be configured in the same slot. Alternatively, it indicates that the third RS and the fourth RS may be triggered in the same slot. Alternatively, it indicates that the third RS and the fourth RS may be sent in the same slot.

It should be understood that the third RS and the fourth RS may alternatively be located in the two different slots. Content of descriptions is similar to the foregoing content. Details are not described herein again.

It should be understood that the third RS may be located before the fourth RS.

In a possible implementation, the UE may further send second information to the network device. The second information indicates a reference value of the GP between two times of adjacent RS sending of the UE. For example, the reference value may include a quantity or a minimum value of time units included in a GP, that is preferred by the UE, between the first RS and the second RS, for example, is 0, or a value range of the quantity of time units included in the GP.

It should be understood that the reference value may alternatively be understood as reference information that is for assisting the network device in determining a GP between the third RS and the fourth RS and that is reported by the UE to the network, for example, the quantity or the minimum value of time units included in the GP preferred by the UE, or the value range.

It should be understood that the reference value may alternatively be understood as reference information that is for assisting the network device and/or the UE in determining the GP between the third RS and the fourth RS and that is reported by the UE to the network, for example, a quantity or a minimum value of time units included in a GP preferred by the UE, or a value range.

Correspondingly, the network device determines information about a GP configuration of the UE based on the second information reported by the UE to the network device, for example, information like the quantity of time units included in the GP between the third RS and the fourth RS.

In a possible implementation, the network device configures second information. The second information is for determining a GP between the third RS and the fourth RS.

Optionally, the network device can determine the second information based on reference value information reported by the UE. The second information is for determining the GP between the third RS and the fourth RS.

It should be understood that the network device may configure the second information based on the information reported by the UE to the network device, or the network device may independently configure the second information. This is not specifically limited in this application.

According to the foregoing technical solution, in this application, the UE can report, to the network device based on a GP requirement of the UE or the capability of the UE, a threshold or a condition for determining the GP, or report a length or a location of the GP to the network device. Therefore, in this application, a sufficient GP can be reserved for UE with a weak capability or a high GP requirement, to ensure sufficient duration for antenna switching. A short GP can be reserved for UE with a strong capability or a low GP requirement, to ensure full utilization and scheduling flexibility of a resource.

It should be understood that the GP between two times of adj acent RS sending is guard duration, processing duration, or antenna switching duration that is for switching between the two times of adjacent RS sending and that is supported by the UE. A quantity of time units included in the GP should be less than or equal to the quantity of time units included in the GP between the third time resource and the fourth time resource.

It should be understood that the second information may also be capability information reported by the UE to the network device. Indication content of the capability information is consistent with indication content of the second information. This is not specifically limited in this application.

It should be understood that the steps shown in FIG. 5 may be separately performed, or may be in any combination relationship. This is not specifically limited in this application.

According to the foregoing method, in this application, it can be ensured that there is sufficient switching duration between SRSs for antenna switching. In addition, the GP does not occupy excessive time units. This provides greater scheduling flexibility for the network device.

It should be understood that the method shown in FIG. 5 is also applicable to a case in which the execution body is the network device, and methods are basically consistent.

FIG. 6 is a schematic diagram of location distributions of a guard period between different SRS resources that is applicable to the foregoing method. Details are shown in FIG. 6.

When a GP includes one time unit, as shown in (a) and (b) in FIG. 6, the time unit may be adjacent to a third time resource (as shown in (a) in FIG. 6), or the third time resource may be used as a reference point, and there may be M time units (M=2 in (b) in FIG. 6) between the time unit and the third time resource.

It should be understood that, although (a) in FIG. 6 shows only a scenario in which the time unit is adjacent to the third time resource, a scenario in which the time unit may alternatively be adjacent to the fourth time resource may also be understood by referring to the scenario shown in (a) in FIG. 6.

Similarly, although (b) in FIG. 6 shows only a scenario in which the time unit uses the third time resource used as the reference point, and there are the M time units between the time unit and the third time resource (M=2 in (b) in FIG. 6), a scenario in which the time unit uses a fourth time resource used as a reference point, and there are N time units (N=2 in (b) in FIG. 6) may also be understood by referring to the scenario shown in (b) in FIG. 6.

When a GP includes at least two time units, and the at least two time units are connected together, as shown in (c) to (e) in FIG. 6, the 1^{st} time unit in the at least two time units is adjacent to a third time resource (refer to (c) in FIG. 6). Alternatively, the last time unit in the at least two time units is adjacent to a fourth time resource (refer to (d) in FIG. 6). Alternatively, a third time resource is used as a reference point, and there are L time units (L=2 in (e) in FIG. 6) between the 1^{st} time unit in the at least two time units and a third time resource. Alternatively, a fourth time resource is used as a reference point, and there are Y time units (Y=1 in (e) in FIG. 6) between the last time unit in the at least two time units and a fourth time resource.

When a GP includes two time units, and the two time units are in a separate state, it is shown in (f) and (g) in FIG. 6.

Specifically, in the at least two time units, a first time unit uses a third time resource as a reference point, and there is at least one time unit between the first time unit and the third time resource, and a second time unit uses a fourth time resource used as a reference point, and there is at least one time unit between the second time unit and the fourth time resource (refer to (f) in FIG. 6). Alternatively, the at least two time units may be respectively adjacent to a third time resource and a fourth time resource (refer to (g) in FIG. 6).

In a possible implementation, when the first time unit in the at least two time units is adjacent to the third time resource, the second time unit in the at least two time units can use the fourth time resource as the reference point, and there is the at least one time unit between the second time unit and the fourth time resource.

Similarly, when the second time unit in the at least two time units is adjacent to the fourth time resource, the first time unit in the at least two time units can use the third time resource as the reference point, and there is the at least one time unit between the first time unit and the third time resource.

It should be understood that each quantity of time units is a positive integer, and may be predefined, or may be configured by using signaling, or may be determined by the UE.

It should be understood that the seven cases shown in FIG. 6 should be understood as examples, and do not have a limitation function. A specific distribution manner of the guard period is not specifically limited in this application.

It should be understood that the seven cases shown in FIG. 6 are not only applicable to a same slot, but also applicable to two different slots. This is not specifically limited in this application.

It should be specially noted that, in embodiments of this application, in the related technical solution shown in FIG. 3, when the GP between the first time resource and the second time resource includes the first quantity of time units, and the first quantity is not equal to K, that is, a part of the time units between the first time resource and the second time resource are used as the GP, a specific configuration of the time units included in the GP between the first time resource and the second time resource may be configured based on the related technical solution shown in FIG. 5. In other words, when the first quantity is not equal to K, the related technical solution shown in FIG. 3 and the related technical solution shown in FIG. 5 can be combined to constitute a new technical solution. In addition, when the GP between the first time resource and the second time resource includes the second quantity of time units, and the second quantity, the third quantity, the fourth quantity, the fifth quantity, and the sixth quantity are not equal to K, that is, a part of the time units between the first time resource and the second time resource are configured as the GP, a specific configuration of the time units included in the GP between the first time resource and the second time resource may be configured based on the related technical solution shown in FIG. 5. In other words, when the second quantity, the third quantity, the fourth quantity, the fifth quantity, and the sixth quantity are not equal to K, the related technical solution shown in FIG. 3 and the related technical solution shown in FIG. 5 can be combined to constitute a new technical solution.

In other words, when the first quantity is not equal to K, the related solution shown in FIG. 3 and the related solution shown in FIG. 5 are combined to constitute the new technical solution. To be specific, when a part of time units in all the time units between the first time resource and the second time resource are configured as the GP, a specific configuration of the part of time units are configured by using the related technical solution shown in FIG. 5. When the second quantity, the third quantity, the fourth quantity, the fifth quantity, and the sixth quantity are not equal to K, the related solution shown in FIG. 3 and the related solution shown in FIG. 5 are combined to constitute the new technical solution. To be specific, when a part of time units in all the time units between the first time resource and the second time resource are configured as the GP, a specific configuration of the part of time units is configured by using the related technical solution shown in FIG. 5.

More specifically, the related technical solution shown in FIG. 3 focuses on resolving a technical problem of how to configure the GP between a first time resource and a second time resource. The related technical solution shown in FIG. 5 focuses on resolving a problem of how to specifically configure, when the GP is configured between the first time resource and the second time resource and the GP does not occupy all the time units between the first time resource and the second time resource, the time unit included in the GP. When the GP exists between the first time resource and the second time resource in the solution shown in FIG. 3, and the GP does not occupy all the time units between the first time resource and the second time resource, a problem of how to specifically configure the time unit included in the GP configured between the first time resource and the second time resource can be resolved by using the related technical solution shown in FIG. 5.

It should be understood that, Rel-17 is used as an example, and the UE may send an aperiodic SRS in a (t+1)^{th} available slots (available slots) obtained through calculation from a reference slot.

For the reference slot, in one possible manner, the reference slot is a slot in which downlink control information (downlink control information, DCI) for triggering the aperiodic SRS is located. In another possible manner, the reference slot is a slot obtained through calculated based on a trigger offset definition in an existing mechanism, that is, a slot offset is configured by using higher layer signaling. The reference slot is a slot obtained by adding a slot offset to a slot in which DCI is located.

The available slot needs to meet the following conditions: based on an RRC configuration, there are sufficient UL symbols or flexible symbols in time domain locations corresponding to all SRS resources included in an SRS resource set, and a time interval between a PDCCH for triggering and all the SRS resources included in the SRS resource set meets a minimum time requirement.

However, when two or more SRS resource sets are configured for the UE for antenna switching, to implement complete channel measurement, and one or more time units need to be reserved between the two SRS resource sets as the GP, if a time interval between the two SRS resource sets does not meet a requirement of the GP, at least one of the two SRS resource sets cannot be sent based on the configuration, or at least one of the two SRS resource sets cannot be sent based on the configuration.

The time interval between the two SRS resource sets is a quantity of shortest time units between an SRS resource included in one SRS resource set and an SRS resource included in the other SRS resource set.

Therefore, in this application, the available slot is further stipulated, to ensure that a time interval between sending of at least two SRS resource sets meets the GP requirement, so as to ensure that the UE has the sufficient duration to perform antenna switching.

It should be noted that the redefined available slot in this application is not limited to the scenario in which the redefined available slot is applicable only to Rel-17, and may be further applicable to another scenario.

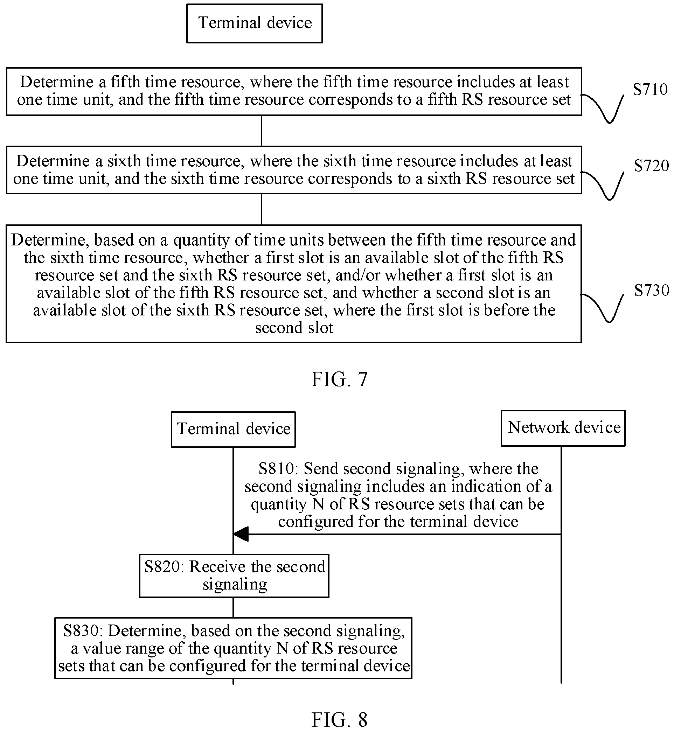

FIG. 7 shows a still another information transmission method according to this application. An execution body of the method is UE. A specific method procedure is shown in FIG. 7.

S710: Determine a fifth time resource, where the fifth time resource includes at least one (or one or more) time unit (or time units), and the fifth time resource corresponds to a fifth resource set.

S720: Determine a sixth time resource, where the sixth time resource includes at least one (or one or more) time unit (or time units), and the sixth time resource corresponds to a sixth resource set.

S730: Determine, based on a quantity of time units between the fifth time resource and the sixth time resource, whether a first slot is an available slot of the fifth resource set and the sixth resource set, and/or whether a first slot is an available slot of the fifth resource set, and whether a second slot is an available slot of the sixth resource set. The first slot is before the second slot, the fifth time resource is included in the first slot, and the sixth time resource is included in the second slot. Alternatively, both the fifth time resource and the sixth time resource are included in the first slot.

It should be understood that, when both the fifth time resource and the sixth time resource are included in the first slot, the UE/the terminal device determines, based on the quantity of time units between the fifth time resource and the sixth time resource, whether the first slot is the available slot of the fifth resource set and the sixth resource set. Alternatively, when the fifth time resource is included in the first slot, and the sixth time resource is included in the second slot, the UE determines, based on the quantity of time units between the fifth time resource and the sixth time resource, whether the first slot is the available slot of the fifth resource set, and whether the second slot is the available slot of the sixth resource set.

It should be noted that, that the fifth time resource corresponds to the fifth resource set means that the UE may send the fifth resource set on the fifth time resource, or may not send the fifth resource set on the fifth time resource. In other words, when the slot in which the fifth time resource is located is the available slot of the fifth resource set, the UE sends the fifth resource set on the fifth time resource. Alternatively, when the slot in which the fifth time resource is located is not the available slot of the fifth resource set, the UE does not send the fifth resource set on the fifth time resource. The sixth time resource is similar, which is collectively described herein. Details are not described hereinafter again.

It should be understood that sending for the fifth resource set is for all RSs included in the fifth resource set, and this description is also applicable to subsequent sending for the sixth resource set.

It should be understood that, in step S730, the UE can determine, based on a quantity of time units between the last time unit included in the fifth time resource and the 1^{st} time unit included in the sixth time resource, whether the first slot and/or the second slot are/is the available slots/available slot.

It should be understood that, that the UE determines, based on the quantity of time units between the fifth time resource and the sixth time resource, whether the first slot is the available slot of the fifth resource set and the sixth resource set, and/or whether the second slot is an available slot of the fifth resource set or the sixth resource set includes the following several cases, which are specifically as follows.
(1) The first slot is the available slot of the fifth resource set and the sixth resource set, and the quantity of time units between the fifth time resource and the sixth time resource is greater than or equal to a second threshold.
(2) The first slot is the available slot of the fifth resource set, the second slot is the available slot of the sixth resource set, and the quantity of time units between the fifth time resource and the sixth time resource is greater than or equal to a second threshold.
(3) The first slot is the available slot of the fifth resource set, the second slot is not the available slot of the sixth resource set, and the quantity of time units between the fifth time resource and the sixth time resource is less than a second threshold.
(4) The first slot is not the available slot of the fifth resource set, the second slot is the available slot of the sixth resource set, and the quantity of time units between the fifth time resource and the sixth time resource is less than a second threshold.
(5) The first slot is the available slot of the fifth resource set or the sixth resource set, and the quantity of time units between the fifth time resource and the sixth time resource is less than a second threshold.

It should be understood that, in the foregoing descriptions, the UE determines, based on a relationship between the second threshold and the quantity of time units between the fifth time resource and the sixth time resource, whether the first slot and the second slot are the available slots.

It should be understood that whether the first slot is the available slot of the fifth resource set means whether the first slot is an available slot for the fifth resource set. This description is also applicable to whether the second slot is the available slot in the sixth resource set, which is collectively described herein. Details are not described hereinafter again.

In a possible implementation, the first slot includes the fifth time resource and the sixth time resource, that is, it indicates that both the fifth time resource and the sixth time resource are in the first slot. In this case, for the fifth resource set and the sixth resource set, the first slot may be the available slot of the fifth resource set and the sixth resource set, or may be an available slot of one of the fifth resource set and the sixth resource set.

Specifically, if the first slot is the available slot of the fifth resource set and the sixth resource set, the UE can send the fifth resource set and the sixth resource set in the first slot. Alternatively, if the first slot is the available slot of the one of the fifth resource set and the sixth resource set, the UE can send the one of the resource sets in the first slot.

For example, if the first slot is the available slot of the fifth resource set, but is not the available slot of the sixth resource set, first DCI for triggering the fifth resource set is before second DCI for triggering the sixth resource set.

For another example, if the first slot is the available slot of the fifth resource set, but is not the available slot of the sixth resource set, the fifth time resource is before the sixth time resource.

For still another example, when a fifth RS is before a sixth RS, the fifth RS is the 1^{st} RS of the fifth resource set, the sixth RS is the 1^{st} RS of the sixth resource set, and the first slot is the available slot of the fifth resource set, but is not the available slot of the sixth resource set.

Further, in a possible implementation, the UE does not send the fifth resource set and the sixth resource set in the first slot; or the UE sends the fifth resource set but does not send the sixth resource set in the first slot; or the UE sends the fifth resource set in the first slot, and sends the sixth resource set in a third slot. The first slot is before the third slot.

In another possible implementation, the first slot includes the fifth time resource, and the second slot includes the sixth time resource. In other words, it indicates that the fifth time resource and the sixth time resource are respectively located in two different slots. In this case, the first slot and the second slot may be respectively the available slots of the fifth resource set and the sixth resource set, or only one of the two slots is an available slot of one of the two resource sets.

Specifically, if the first slot is the available slot of the fifth resource set, and the second slot is the available slot of the sixth resource set, the UE sends the fifth resource set in the first slot, and sends the sixth resource set in the second slot. Alternatively, if the first slot is the available slot of the fifth resource set, and the second slot is not the available slot of the sixth resource set, the UE sends the fifth resource set in the first slot, and sends the sixth resource set in another slot (not the second slot). Alternatively, if the first slot is not the available slot of the fifth resource set, and the second slot is the available slot of the sixth resource set, the UE sends the sixth resource set in the second slot, and sends the fifth resource set in another slot (not the first slot).

For example, when a fifth RS is before a sixth RS, the fifth RS is the 1^{st} RS in the fifth resource set, and the sixth RS is the 1^{st} RS in the sixth resource set, the first slot is the available slot of the fifth resource set, and the second slot is not the available slot of the sixth resource set.

For example, if the first slot is the available slot of the fifth resource set, and the second slot is not the available slot of the sixth resource set, the fifth time resource is before the sixth time resource.

For another example, when first DCI for triggering the fifth resource set is before second DCI for triggering the sixth resource set, the first slot is the available slot of the fifth resource set, and the second slot is not the available slot of the sixth resource set.

Further, in a possible implementation, the UE does not send the fifth resource set and the sixth resource set in the first slot; or the UE sends the fifth resource set but does not send the sixth resource set in the first slot; or the UE sends the fifth resource set in the first slot, and sends the sixth resource set in a fourth slot. The first slot is before the fourth slot.

In a possible implementation, the second threshold meets at least one of the following: The second threshold is related to a quantity of time units included in a GP; the second threshold is predefined, or is configured by using a higher layer parameter; or a value of the second threshold is an integer greater than or equal to 0 and less than 5.

According to the foregoing technical solution, in this application, the available slot is further stipulated. This can ensure that a time interval for sending two or more SRS resource sets meets a GP requirement, thereby ensuring that the UE has sufficient duration to perform antenna switching. In addition, an SRS sending manner used when the time interval between the two or more SRS resource sets does not meet the GP requirement is stipulated. This ensures that the two or more SRS resource sets can be separately sent in a proper slot.

It should be understood that the foregoing described technical solution is one set of the technical solutions provided in this application for the available slot, and the following describes another technical solution provided in this application for the available slot. Details are described below.

S710a: A terminal device determines a seventh time resource, where the seventh time resource includes at least one time unit, and the seventh time resource is for sending a seventh resource set.

S710b: The terminal device determines an eighth time resource, where the eighth time resource includes at least one time unit, and the eighth time resource is for sending an eighth resource set. A quantity of time units between the seventh time resource and the eighth time resource is greater than or equal to a second threshold.

S710c: The terminal device sends the seventh resource set on the seventh time resource, and sends the eighth resource set on the eighth time resource.

In a possible implementation, the second threshold meets at least one of the following: The second threshold is related to a quantity of time units included in a GP; the second threshold is predefined, or is configured by using a higher layer parameter; or a value of the second threshold is an integer greater than or equal to 0 and less than 5.

In a possible implementation, both the seventh resource set and the seventh resource set are sent in a first slot.

Specifically, UE can determine, based on an RRC message configured by a network device, whether to first send the seventh resource set or the eighth resource set in the first slot.

In a possible implementation, both the seventh time resource and the eighth time resource are included in the first slot.

In a possible implementation, the seventh resource set and the eighth resource set meet at least one of the following: The seventh time resource is before the eighth time resource; third DCI for triggering the seventh resource set is before fourth DCI for triggering the eighth resource set; or a seventh RS is the 1^{st} RS of the seventh RS resource set, an eighth RS is the 1^{st} RS of the eighth RS resource set, and the seventh RS is before the eighth RS.

In a possible implementation, the seventh RS resource set is sent in a first slot, and the eighth RS resource set is sent in a second slot. The first slot is before the second slot.

In a possible implementation, the seventh time resource is included in a first slot, and the eighth time resource is included in a second slot. The first slot is before the second slot.

Further specifically, when a seventh RS is before an eighth RS, the seventh RS is the 1^{st} RS of the seventh RS resource set, and the eighth RS is the 1^{st} RS of the eighth RS resource set, the first slot is an available slot of the seventh RS resource set, but is not an available slot of the eighth RS resource set, and the second slot is the available slot of the eighth RS resource set.

Further specifically, if the first slot is the available slot of the seventh RS resource set, but is not the available slot of the eighth RS resource set, the seventh time resource is before the eighth time resource, and the second slot is the available slot of the eighth RS resource set.

Further specifically, when third DCI for triggering the seventh resource set is before fourth DCI for triggering the eighth resource set, the first slot is the available slot of the seventh resource set, but is not the available slot of the eighth resource set, and the second slot is the available slot of the eighth resource set.

It should be understood that the seventh resource set and the eighth resource set meet at least one of the following: The seventh time resource is before the eighth time resource; the third DCI for triggering the seventh resource set is before the fourth DCI for triggering the eighth resource set; or the seventh RS is the 1^{st} RS of the seventh resource set, the eighth RS is the 1^{st} RS of the eighth resource set, and the seventh RS is before the eighth RS.

According to the foregoing technical solution, in this application, the available slot is further stipulated. This can ensure that a time interval for sending two or more SRS resource sets meets a GP requirement, thereby ensuring that the UE has sufficient duration to perform antenna switching. In addition, an SRS sending manner used when the time interval between the two or more SRS resource sets does not meet the GP requirement is stipulated. This ensures that the two or more SRS resource sets can be separately sent in a proper slot.

Alternatively, the UE can determine, based on a quantity of time units between a ninth time resource and a tenth time resource, whether the first slot and/or the second slot are/is available slots/an available slot.

The ninth time resource is for sending a ninth resource set, and the tenth time resource is for sending the tenth resource set. The ninth time resource includes at least one time unit, and the tenth time resource includes at least one time unit.

Optionally, the UE can determine, based on the quantity of time units between the ninth time resource and the tenth time resource, whether the first slot and/or the second slot are/is the available slots/the available slot.

In a possible implementation, both the ninth time resource and the tenth time resource are included in the first slot. Alternatively, the first slot is an available slot for the fifth resource set and the sixth resource set.

In a possible implementation, the ninth time resource is included in the first slot, and the tenth time resource is included in the second slot. The first slot and the second slot are different slots. Alternatively, the first slot is an available slot for the ninth resource set, and the second slot is an available slot for the tenth resource set.

In a possible implementation, the UE determines, based on the quantity of time units between the ninth time resource and the tenth time resource, that the ninth resource set and the tenth resource set are sent in the first slot and/or the second slot.

In a possible implementation, the UE determines, based on a relationship between the quantity of time units included in the GP and the quantity of time units between the ninth time resource and the tenth time resource, that both the ninth time resource and the tenth time resource are included in the first slot.

In a possible implementation, the UE determines, based on a relationship between the quantity of time units included in the GP and the quantity of time units between the ninth time resource and the tenth time resource, whether the first slot is an available slot for the ninth resource set and the tenth resource set.

In a possible implementation, the UE determines, based on a relationship between the quantity of time units included in the GP and the quantity of time units between the ninth time resource and the tenth time resource, that the ninth time resource is included in the first slot and the sixth time resource is included in the second slot.

In a possible implementation, the UE determines, based on a relationship between the quantity of time units included in the GP and the quantity of time units between the ninth time resource and the tenth time resource, whether the first slot is an available slot for the ninth resource set and whether the second slot is an available slot for the tenth resource set.

In a possible implementation, the UE determines, based on a relationship between the quantity of time units included in the GP and the quantity of time units between the ninth time resource and the tenth time resource, that the ninth resource set and the tenth resource set are sent in the first slot.

In a possible implementation, the UE determines, based on a relationship between the quantity of time units included in the GP and the quantity of time units between the ninth time resource and the tenth time resource, that the ninth resource set is sent in the first slot and the tenth resource set is sent in the second slot.

It should be understood that both the ninth time resource and the tenth time resource may be included in the first slot, or the ninth time resource is included in the first slot, the tenth time resource is included in the second slot, and the first slot is before the second slot.

Specifically, if both the ninth time resource and the tenth time resource are in the first slot, the UE can determine, based on the quantity of time units between the ninth time resource and the tenth time resource, that the first slot is an available slot or not an available slot for the ninth resource set and/or the tenth resource set.

Specifically, if the ninth time resource and the tenth time resource are respectively located in the first slot and the second slot, the UE can determine, based on the quantity of time units between the ninth time resource and the tenth time resource, that the first slot and/or the second slot are/is available slot or not an available slot for the ninth resource set and/or the tenth resource set. For example, the first slot is an available slot for the ninth resource set, and the second slot is not an available slot for the tenth resource set. Alternatively, the first slot is an available slot for the ninth resource set, and the second slot is an available slot for the tenth resource set. Alternatively, the first slot is not an available slot for the ninth resource set, and the second slot is not an available slot for the tenth resource set. Alternatively, the first slot is not the available slot for the ninth resource set, and the second slot is an available slot for the tenth resource set.

It should be understood that, regardless of whether the ninth time resource and the tenth time resource are both included in the first slot, or are separately in the first slot and the second slot, the UE needs to determine, based on the quantity of time units between the ninth time resource and the tenth time resource, which slot is an available slot for the ninth resource set and the tenth resource set. Therefore, for ease of description of this embodiment of this application, in this application, an example in which both the ninth time resource and the tenth time resource are included in the first slot is used to describe the technical solutions provided in this application.

It should be understood that, if the first slot separately meets requirements of the ninth resource set and the tenth resource set for available slots, that is, when the tenth resource set is not considered, the first slot is the available slot of the ninth resource set; or if the ninth resource set is not considered, the first slot is the available slot of the tenth resource set.

In a possible implementation, the UE can determine, based on the quantity of time units between the ninth time resource and the tenth time resource, whether the ninth resource set and/or the tenth resource set may be sent in the first slot and/or the second slot. In other words, the UE can determine, based on the quantity of time units between the ninth time resource and the tenth time resource, that the ninth resource set and/or the tenth resource set can be sent in the first slot and/or the second slot, or determine that the ninth resource set and/or the tenth resource set cannot be sent in the first slot and/or the second slot. For specific descriptions, refer to the following.

Specifically, if the quantity of time units between the ninth time resource and the tenth time resource meets a requirement for configuring the GP, both the ninth resource set and the tenth resource set may be sent in the first slot and/or the second slot. If the quantity of time units between the ninth time resource and the tenth time resource does not meet a requirement for configuring the GP, only one of the ninth resource set and the tenth resource set can be sent in the first slot and/or the second slot. For specific content, refer to the following descriptions. Details are not described herein again.

Optionally, the UE can determine, based on the quantity of time units between the ninth time resource and the tenth time resource, whether the first slot and/or the second slot are/is available slots/an available slot for the ninth resource set and/or the tenth resource set. Alternatively, the UE can determine, based on the quantity of time units between the ninth time resource and the tenth time resource, that the first slot and/or the second slot are/is available slots/an available slot for the ninth resource set and/or the tenth resource set.

Specifically, if the quantity of time units between the ninth time resource and the tenth time resource meets a requirement for configuring the GP, the first slot and/or the second slot are/is available slots/an available slot for both the ninth resource set and the tenth resource set. If the quantity of time units between the ninth time resource and the tenth time resource does not meet a requirement for configuring the GP, the first slot and/or the second slot are/is available slots/an available slot for one of the ninth resource set and the tenth resource set. For specific content, refer to the following descriptions. Details are not described herein again.

In a possible implementation, the UE determines, based on a relationship between the quantity of time units included in the GP and the quantity of time units between the ninth time resource and the tenth time resource, whether the ninth resource set and the tenth resource set may be sent in the first slot and/or the second slot.

Specifically, if the quantity of time units between the ninth time resource and the tenth time resource is greater than or equal to the second threshold, the first slot is an available slot for both the ninth resource set and the tenth resource set. To be specific, the UE can send the ninth resource set and the tenth resource set in the first slot.

If the quantity of time units between the ninth time resource and the tenth time resource is less than the second threshold, the first slot is an available slot for one of the two resource sets, and is not an available slot for the other resource set. In this case, the UE can send only one resource set in the first slot.

It should be understood that, if the first slot is an available slot for the ninth resource set and the tenth resource set, both the ninth time resource and the tenth time resource are included in the first slot, and the quantity of time units between the ninth time resource and the tenth time resource is greater than or equal to the second threshold. If the first slot is an available slot for one of the ninth resource set and the tenth resource set, a time resource corresponding to the one of the resource sets is included in the first slot, and the quantity of time units between the ninth time resource and the tenth time resource is less than the second threshold.

Specifically, if the quantity of time intervals between the ninth time resource and the tenth time resource is less than the second threshold, the first slot is an available slot for the ninth resource set, or is an available slot for the tenth resource set.

It should be understood that, if the first slot is an available slot for the ninth resource set, and the second slot is an available slot for the tenth resource set, the quantity of time units between the ninth time resource and the tenth time resource is greater than or equal to the second threshold. If the first slot is an available slot for the ninth resource set, and the second slot is not an available slot for the tenth resource set, the quantity of time units between the ninth time resource and the tenth time resource is less than the second threshold. Alternatively, if the first slot is not an available slot for the ninth resource set, and the second slot is an available slot for the tenth resource set, the quantity of time units between the ninth time resource and the tenth time resource is less than the second threshold. The first slot is before the second slot.

Specifically, if the quantity of time intervals between the ninth time resource and the tenth time resource is less than the second threshold, the first slot is an available slot for the ninth resource set, and the second slot is not an available slot for the tenth resource set. Alternatively, the first slot is not an available slot for the ninth resource set, and the second slot is an available slot for the tenth resource set.

It should be understood that the second threshold is for limiting the quantity of time units between the ninth time resource and the tenth time resource. Specifically, a value of the second threshold may be 1, 2, or 0. In this case, the value of the second threshold may be set in a specific case. This is not specifically limited in this application.

According to the foregoing technical solution, in this application, the available slot is further stipulated. This can ensure that a time interval for sending two or more SRS resource sets meets a GP requirement, thereby ensuring that the UE has sufficient duration to perform antenna switching. In addition, an SRS sending manner used when the time interval between the two or more SRS resource sets does not meet the GP requirement is stipulated. This ensures that the two or more SRS resource sets can be separately sent in a proper slot.

It should be understood that the second threshold is related to the GP. For example, the second threshold is equal to the quantity of time units included in the GP. Alternatively, the second threshold is configured by using higher layer signaling.

It should be understood that the UE determines, according to a predefined rule or by using higher layer signaling, a resource set sent in the first slot and the second slot.

For example, the UE sends the ninth resource set in the first slot, and sends the tenth resource set in the second slot after the first slot. The second slot is the available slot of the tenth resource set. Alternatively, the UE does not send the ninth resource set and the tenth resource set in the first slot. Alternatively, the UE sends the ninth resource set and does not send the tenth resource set in the first slot.

The predefined rule may be the following rules.

Rule 1: If fifth DCI for triggering the ninth resource set is before sixth DCI for triggering the tenth resource set, the first slot is an available slot for the ninth resource set, and the first slot is not an available slot for the tenth resource set. In this case, the UE sends the ninth resource set in the first slot, and sends the tenth resource set in the second slot after the first slot. In this case, the second slot is an available slot for the tenth resource set. Alternatively, the UE does not send the ninth resource set and the tenth resource set in the first slot. Alternatively, the UE sends the ninth resource set and does not send the tenth resource set in the first slot.

Rule 2: If a ninth RS is the 1^{st} RS in the ninth resource set, a tenth RS is the 1^{st} RS in the tenth resource set, and the ninth RS is before the tenth RS, the first slot is an available slot for the ninth resource set, and is not an available slot for the tenth resource set. In this case, the UE sends the ninth resource set in the first slot, and sends the tenth resource set in the second slot after the first slot. Alternatively, the UE does not send the ninth resource set and the tenth resource set in the first slot, where the second slot is an available slot for the tenth resource set. Alternatively, the UE does not send the ninth resource set and the tenth resource set in the first slot. Alternatively, the UE sends the ninth resource set and does not send the tenth resource set in the first slot.

It should be understood that the higher layer signaling may indicate priority information. For example, if the higher layer signaling indicates that a priority of the ninth resource set is higher than that of the tenth resource set, the first slot is an available slot for the ninth resource set, and the UE sends the ninth resource set in the first slot, and sends the tenth resource set in the second slot after the first slot, where the second slot is an available slot of the tenth resource set. Alternatively, the UE does not send the ninth resource set and the tenth resource set in the first slot. Alternatively, the UE sends the ninth resource set and does not send the tenth resource set in the first slot.

It should be understood that the steps shown in FIG. 7 may be separately performed, or may be in any combination relationship. This is not specifically limited in this application.

It should be noted that a resource set in this application is an RS resource set, for example, an SRS resource set. To be specific, the first resource set to the tenth resource set are a first RS resource set to a tenth RS resource set, for example, the first SRS resource set to a tenth SRS resource set. This is collectively described herein.

According to the foregoing technical solution, in this application, the available slot is further stipulated. This can ensure that the time interval for sending the two or more SRS resource sets meets the GP requirement, thereby ensuring that the UE has the sufficient duration to perform antenna switching.

It should be understood that, when a quantity of receive antennas is 6 or a quantity of receive antennas is 8, a quantity of aperiodic SRS resource sets that are allowed to be configured needs to comply with the following rule.

For 1T6R, a total of six SRS resources are configured, and Nmax=3.

For 1T8R, a total of eight SRS resources are configured, and Nmax=4.

For 2T6R, a total of three SRS resources are configured, and Nmax=3.

For 2T8R, a total of four SRS resources are configured, and Nmax=4.

For 4T8R, a total of two SRS resources are configured, and Nmax=2.

Nmax is a maximum quantity of SRS resource sets that can be configured for a piece of xTyR.

In view of this, this application provides an information transmission method. According to the method, in this application, a quantity of SRS resource sets that can be configured for UE for different UE capabilities and/or different configurations such as 1T6R, 1T8R, 2T6R, 2T8R, 4T6R, and 4T8R can be determined.

FIG. 8 shows a yet still another information transmission method according to this application. Execution bodies of the method are UE and a network device. A specific method procedure is shown in FIG. 8.

S810: The network device sends second signaling to a terminal device, where the second signaling includes an indication of a quantity N of reference signal RS resource sets that can be configured for the terminal device.

Optionally, the second signaling indicates a value range of the quantity N of reference signal RS resource sets that can be configured for the terminal device.

S820: The terminal device receives the second signaling from the network device.

S830: The terminal device determines, based on the second signaling, the value range of the quantity N of RS resource sets that can be configured for the terminal device.

It should be understood that the indication of N herein is a value of N, a minimum value of N, or a maximum value of N.

In a possible implementation, the second signaling can further indicate the minimum value of N.

It should be understood that the second signaling is higher layer signaling configuration information. Alternatively, the second signaling is downlink control information.

In a possible implementation, the network device determines (or configures) the minimum value of N, where the minimum value of N corresponds to (or is associated with) a characteristic parameter.

Optionally, the network device sends, to UE, the minimum value of N configured by the network device.

In a possible implementation, the network device determines (or configures) the value range of N, where the value range of N corresponds to (or is associated with) a characteristic parameter.

Optionally, the network device sends, to the UE, the value range of N configured by the network device.

In a possible implementation, the UE can determine the value of the quantity N of resource sets that can be configured for the UE or a minimum value of N, where the minimum value of N corresponds to (or is associated with) a characteristic parameter.

In a possible implementation, the UE can determine the value range of the quantity N of resource sets that can be configured for the UE, where the value range of N corresponds to (or is associated with) a characteristic parameter.

In a possible implementation, the UE may further receive configuration information from the network device, where the configuration information indicates value information of N, for example, includes the minimum value or the value range of N; and determine the value, the minimum value, or the value range of N based on the configuration information.

It should be understood that the characteristic parameter includes at least one (or one or more) of the following parameters: a combination of a transmit antenna and a receive antenna, a quantity of transmit antennas, a quantity of receive antennas, a quantity of antenna ports, a quantity of receive channels, a quantity of transmit channels, a start location of an SRS resource mapping, a value range of a start location of an SRS resource mapping, a quantity of symbols of an SRS resource mapping, a value range of a quantity of symbols of an SRS resource mapping, a repetition factor of an SRS resource mapping, or a value range of a repetition factor of an SRS resource mapping.

According to the foregoing technical solution, in this application, it can be ensured that required resources are allocated to UE with different capabilities or configurations in a plurality of resource sets. This can ensure that more slots meet a requirement for sending an SRS to perform antenna switching, thereby improving scheduling flexibility of the network device.

For example, for the different UE capabilities and/or the different configurations, the minimum N values are different. The specific implementation method is one or more of the following manners.

Manner 1: The value range of N, the value of N, or the minimum value of N is applicable to all UE.

Specifically, for any characteristic parameter, in the higher layer signaling, value ranges of N are the same. To be specific, value ranges of the quantity N of SRS resource sets that can be configured for the UE are the same.

For example, for any piece of xTyR, the value range of the quantity N of SRS resource sets that can be configured for the UE is 1, 2, 3, or 4. Alternatively, the maximum value of the quantity N of SRS resource sets that can be configured for the UE is 4. Alternatively, the minimum value of the quantity N of SRS resource sets that can be configured for the UE is 1.

For example, the quantity N of SRS resource sets that may be supported by the UE is related to a time domain location at which the UE may send the SRS.

The time domain location at which the UE may send the SRS is determined based on a capability information reported by the UE. Alternatively, the time domain location at which the UE may send the SRS is determined according to a predefined rule or by using higher layer signaling.

The time domain location at which the UE may send the SRS means that, for example, the UE can send the SRS on any symbol in a slot, or the UE can send the SRS on last six symbols in a slot, or the UE can send the SRS on the last symbol in a slot.

When the UE can send the SRS on the any symbol in the slot, the minimum value of N is Ni, that is, the UE does not expect the value of N to be less than N₁. When the UE can send the SRS on the last six symbols in the slot, the minimum value of N is N₂, that is, the UE does not expect the value of N to be less than N₂. N₁≤ N₂. N₁ or N₂ is included in the value range of N.

In other words, when the UE can send the SRS only on the last six symbols in the slot, in comparison with that the UE can send the SRS on the any symbol in the slot, it is more likely that a quantity of available symbols in the slot is insufficient for sending an SRS resource set. Therefore, more SRS resource sets need to be configured for the UE.

In addition, for a specific configuration, the UE does not expect the value of N to be less than M. For example, for UE for which 1T8R is configured, because eight resources need to be configured, and there is a GP of at least one symbol between every two resources, at least 15 uplink symbols are required to complete one time of complete 1T8R measurement. Therefore, a minimum value of a quantity of SRS resource sets of the UE for which 1T8R is configured is 2.

More specifically, when the UE can send the SRS on the any symbol in the slot, the minimum value of the quantity N of SRS resource sets configured for the UE for which 1T8R is configured is 2. In this case, M=2. When the UE can send the SRS on the last six symbols in the slot, the minimum value of the quantity N of SRS resource sets configured for the UE for which 1T8R is configured is 3. In this case, M=3.

Manner 2: The value range of N, the value of N, or the minimum value of N is applicable to some UE.

Specifically, for an xTyR configuration or UE, in the higher layer signaling, value ranges of the quantity N of SRS resource sets that can be configured for the UE are different.

For example, the value range of N is related to x and y in xTyR, or the value range of N is related to a time domain location at which the UE may send the SRS.

The quantity N of SRS resource sets that may be supported is related to a time domain location at which the UE may send the SRS.

The time domain location at which the UE may send the SRS is determined based on a capability information reported by the UE. Alternatively, the time domain location at which the UE may send the SRS is determined according to a predefined rule or by using higher layer signaling.

The time domain location at which the UE may send the SRS means that, for example, the UE can send the SRS on any symbol in a slot, or the UE can send the SRS on last six symbols in a slot, or the UE can send the SRS on the last symbol in a slot.

When the UE can send the SRS on the any symbol in the slot, the value range of N is that N1≤N≤Nmax. When the UE can send the SRS on the any symbol in the slot, the value range of N is that N2≤N≤Nmax. N1≤N2.

In other words, when the UE can send the SRS only on the last six symbols in the slot, in comparison with that the UE can send the SRS on the any symbol in the slot, it is more likely that a quantity of available symbols in the slot is insufficient for sending an SRS resource set. Therefore, more SRS resource sets need to be configured for the UE.

In addition, for a specific configuration, the value range of N is that Nmin≤N≤Nmax.

For example, for 1T8R, eight resources need to be configured, and there is a GP of at least one symbol between every two resources. Therefore, a minimum value of a quantity N of SRS resource sets configured for UE for which 1T8R is configured is 2, that is, Nmin=2.

More specifically, when the UE can send the SRS on the any symbol in the slot, the minimum value of the quantity N of SRS resource sets configured for the UE for which 1T8R is configured is 2. When the UE can send the SRS on the last six symbols in the slot, the minimum value of the quantity N of SRS resource sets configured for the UE for which 1T8R is configured is 3, that is, Nmin=3.

According to the foregoing technical solution, in this application, different minimum values of N are stipulated for UE having different characteristic parameters, or the network device indicates different minimum values of N for UE with different characteristic parameters. This can ensure that required resources are allocated to the UE with the different UE capabilities or the different characteristic parameters in the plurality of resource sets, and ensure that more slots are available for a single resource set, that is, ensure that the more slots meet the requirement for sending the SRS, thereby improving scheduling flexibility.

The following describes the technical solutions in this application with reference to the accompanying drawings.

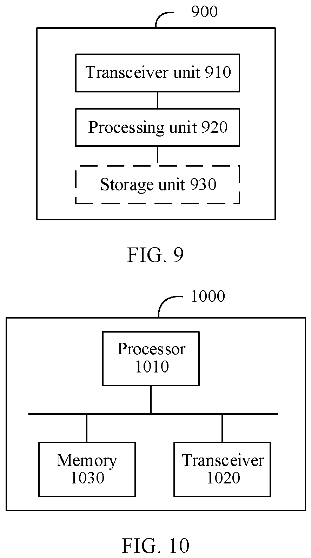

FIG. 9 is a schematic block diagram of a communication apparatus 900 according to this application. As shown in the figure, the communication apparatus 900 may include a transceiver unit 910 and a processing unit 920.

In a possible design, the communication apparatus 900 may be the UE in the foregoing method embodiment, or may be a chip configured to implement functions of the UE in the foregoing method embodiment.

It should be understood that the communication apparatus 900 may correspond to the UE in the method embodiments of this application, and the communication apparatus 900 may include units configured to perform the method performed by the UE in the foregoing method embodiment.

It should be understood that the units in the communication apparatus 900 and the foregoing other operations and/or functions are respectively for implementing corresponding procedures in FIG. 3, FIG. 5, FIG. 7, and FIG. 8.

It should be understood that a specific process of performing the foregoing corresponding step by each unit is described in detail in the foregoing method embodiment. For brevity, details are not described herein again.

In an example description, the communication apparatus 900 can implement UE-related actions, steps, or methods in S310, S320, and S330 in the foregoing method embodiment.

It should be understood that the foregoing content is merely an example for understanding. The communication apparatus 900 can further implement other UE-related steps, actions, or methods in the foregoing method embodiments. Details are not described herein again.

In another possible design, the communication apparatus 900 may be the network device in the foregoing method embodiment, or may be a chip configured to implement functions of the network device in the foregoing method embodiment.

It should be understood that the communication apparatus 900 may correspond to the network device in the method embodiment of this application, and the communication apparatus 800 may include units configured to perform the method performed by the network device in the foregoing method embodiment.

It should be understood that a specific process of performing the foregoing corresponding step by each unit is described in detail in the foregoing method embodiment. For brevity, details are not described herein again.

It should be understood that a specific process of performing the foregoing corresponding step by each unit is described in detail in the foregoing method embodiment. For brevity, details are not described herein again.

It should be further understood that the transceiver unit 910 in the communication apparatus 900 may correspond to a transceiver 1020 in a communication device 1000 shown in FIG. 10, and the processing unit 920 in the communication apparatus 900 may correspond to a processor 1010 in the communication device 1000 shown in FIG. 10.

It should be further understood that when the communication apparatus 900 is a chip, the chip includes a transceiver unit and a processing unit. The transceiver unit may be an input/output circuit or a communication interface. The processing unit may be a processor, a microprocessor, or an integrated circuit integrated on the chip.

The transceiver unit 910 is configured to implement a signal receiving/sending operation of the communication apparatus 900, and the processing unit 920 is configured to implement a signal processing operation of the communication apparatus 900.

Optionally, the communication apparatus 900 further includes a storage unit 930, and the storage unit 930 is configured to store instructions.

FIG. 10 is a schematic block diagram of the communication device 1000 according to an embodiment of this application. As shown in the figure, the communication device 1000 includes at least one processor 1010 and the transceiver 1020. The processor 1010 is coupled to a memory, and is configured to execute instructions stored in the memory, to control the transceiver 1020 to send a signal and/or receive a signal.

Optionally, the communication device 1000 further includes a memory 1030, configured to store instructions.

It should be understood that the processor 1010 and the memory 1030 may be combined into one processing apparatus, and the processor 1010 is configured to execute program code stored in the memory 1030, to implement the foregoing functions. During specific implementation, the memory 1030 may alternatively be integrated into the processor 1010, or may be independent of the processor 1010.

It should be further understood that the transceiver 1020 may include a receiver (or referred to as a receiver machine) and a transmitter (or referred to as a transmitter machine).

The transceiver 1020 may further include an antenna, and there may be one or more antennas. The transceiver 1020 may alternatively be a communication interface or an interface circuit.

When the communication device 1000 is a chip, the chip includes a transceiver unit and a processing unit. The transceiver unit may be an input/output circuit or a communication interface. The processing unit may be a processor, a microprocessor, or an integrated circuit integrated on the chip.

An embodiment of this application further provides a processing apparatus, including a processor and an interface. The processor may be configured to perform the method in the foregoing method embodiment.

It should be understood that the processing apparatus may be a chip. For example, the processing apparatus may be a field programmable gate array (field programmable gate array, FPGA), an application-specific integrated chip (application-specific integrated circuit, ASIC), a system on a chip (system on a chip, SoC), a central processing unit (central processing unit, CPU), a network processor (network processor, NP), a digital signal processing circuit (digital signal processor, DSP), a microcontroller (microcontroller unit, MCU), a programmable controller (programmable logic device, PLD), or another integrated chip.

In an implementation process, the steps of the foregoing methods may be completed by a hardware integrated logic circuit in the processor or by using instructions in a form of software. The steps of the methods disclosed with reference to embodiments of this application may be directly performed by a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in a memory, and the processor reads information in the memory and completes the steps in the foregoing methods in combination with hardware of the processor. To avoid repetition, details are not described herein again.

An embodiment of this application further provides a computer-readable storage medium. The computer-readable storage medium stores computer instructions that are for implementing the method performed by the network device in the foregoing method embodiment.

For example, when the computer program is executed by a computer, the computer can be enabled to implement the method performed by the network device in the foregoing method embodiment.

An embodiment of this application further provides a computer-readable storage medium. The computer-readable storage medium stores computer instructions that are for implementing the method performed by the UE in the foregoing method embodiment.

For example, when the computer program is executed by a computer, the computer can be enabled to implement the method performed by the UE in the foregoing method embodiment.

An embodiment of this application further provides a computer program product including instructions. When the instructions are executed by a computer, the computer is enabled to implement the method performed by the UE in the foregoing method embodiment.

An embodiment of this application further provides a computer program product including instructions. When the instructions are executed by a computer, the computer is enabled to implement the method performed by the network device in the foregoing method embodiment.

An embodiment of this application further provides a chip system. A processor is configured to invoke a computer program from a memory and run the computer program, to enable a communication device provided with the chip system to perform a method that should be performed by UE, or performs a method that should be performed by a network device.

It may be clearly understood by a person skilled in the art that, for ease and brevity of description, for explanations and beneficial effects of related content in any communication apparatus provided above, refer to those in the corresponding method embodiments provided above. Details are not described herein again.

A specific structure of the execution body of the method provided in embodiments of this application is not particularly limited in embodiments of this application provided that a program that records code of the method provided in embodiments of this application can be run, to perform communication according to the method provided in embodiments of this application. For example, an execution body of the method provided in embodiments of this application may be UE or a network device, or may be a functional module that can invoke and execute the program and that is in UE or a network device.

Various aspects or features in this application may be implemented as a method, an apparatus, or a product that uses standard programming and/or an engineering technology. The term "product" used in this specification may cover a computer program that can be accessed from any computer-readable component, carrier, or medium.

The computer-readable storage medium may be any usable medium accessible by a computer, or a data storage device, for example, a server or a data center, integrating one or more usable media. The usable medium (or the computer-readable medium) may include, for example, but is not limited to, a magnetic medium or a magnetic storage component (for example, a floppy disk, a hard disk (for example, a removable hard disk), or a magnetic tape), an optical medium (for example, an optical disc, a compact disc (compact disc, CD), or a digital versatile disc (digital versatile disc, DVD)), a smart card, a flash memory component (for example, an erasable programmable read-only memory (erasable programmable read-only memory, EPROM), a card, a stick, or a key drive), and any medium that can store program code, for example, a semiconductor medium (for example, a solid-state drive (solid-state drive, SSD), a USB flash drive, a read-only memory (read-only memory, ROM), or a random access memory (random access memory, RAM)).

Various storage media described in this specification may represent one or more devices and/or other machine-readable media configured to store information. The term "machine-readable medium" may include but is not limited to a radio channel and various other media that can store, include, and/or carry an instruction and/or data.

It should be understood that the memory mentioned in embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By ways of example but not limitation, the RAM may be in a plurality of following forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that, when the processor is a general-purpose processor, a DSP, an ASIC, an FPGA, or another programmable logic device, a discrete gate or a transistor logic device, or a discrete hardware component, the memory (a storage module) may be integrated into the processor.

It should be further noted that the memory described in this specification is intended to include but is not limited to these memories and any other memory of an appropriate type.

In the several embodiments provided in this application, it should be understood that the disclosed apparatus and method may be implemented in other manners. For example, the apparatus embodiments described above are merely examples. For example, division into the units is merely a logical function division and may be other division during actual implementation. For example, a plurality of units or components may be combined or integrated into another system, or some features may be ignored or may not be performed. In addition, the displayed or discussed mutual couplings or direct couplings or communication connections may be implemented through some interfaces. The indirect couplings or the communication connections between the apparatuses or the units may be implemented in electrical, mechanical, or other forms.

The units described as separate parts may or may not be physically separate, and parts displayed as units may or may not be physical units, may be located in one position, or may be distributed on a plurality of network elements. Some or all of the units may be selected based on an actual requirement to implement the solutions provided in this application.

In addition, functional units in embodiments of this application may be integrated into one unit, or each unit may exist alone physically, or two or more units are integrated into one unit.

All or some of the foregoing embodiments may be implemented by using software, hardware, firmware, or any combination thereof.

When software is for implementing the foregoing embodiments, the foregoing embodiments may be implemented completely or partially in a form of a computer program product. The computer program product includes one or more computer instructions. When the computer program instruction is loaded and executed on a computer, the procedures or functions according to embodiments of this application are all or partially generated. The computer may be a general-purpose computer, a dedicated computer, a computer network, or another programmable apparatus. For example, the computer may be a personal computer, a server, or a network device. The computer instruction may be stored in a computer-readable storage medium or may be transmitted from a computer-readable storage medium to another computer-readable storage medium. For example, the computer instruction may be transmitted from a website, computer, server, or data center to another website, computer, server, or data center in a wired (for example, a coaxial cable, an optical fiber, or a digital subscriber line) or wireless (for example, infrared, radio, and microwave, or the like) manner. For the computer-readable storage medium, refer to the foregoing descriptions.

It should be understood that, in embodiments of this application, the numbers "first", "second", and the like are merely for distinguishing between different objects, for example, distinguishing between different network devices, and constitute no limitation on the scope of embodiments of this application. This embodiment of this application is not limited thereto.

It should be further understood that, in this application, "when", "if", and "if" all mean that a network element performs corresponding processing in an objective case, are not intended to limit a time point, do not require the network element to necessarily have a determining action during implementation, and do not mean that there is another limitation.

It should be further understood that, in embodiments of this application, "B corresponds to A" indicates that B is associated with A, and B may be determined based on A. However, it should be further understood that determining B based on A does not mean that B is determined based on A, and B may be alternatively determined based on A and/or other information.

It should be further understood that the term "and/or" in this specification describes only an association relationship of associated objects and indicates that three relationships may exist. For example, A and/or B may indicate the following three cases: Only A exists, both A and B exist, and only B exists. In addition, the character "/" in this specification generally indicates an "or" relationship between associated objects.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An information transmission method, comprising:
determining, by a terminal device, a first time resource, wherein the first time resource comprises at least one time unit, and the first time resource is for sending a first reference signal RS;
determining, by the terminal device, a second time resource, wherein the second time resource comprises at least one time unit, and the second time resource is for sending a second RS;
there are K time units between the first time resource and the second time resource, and K is a natural number; and
K falls within a first value range, and a guard period GP between the first time resource and the second time resource comprises a first quantity of time units; or
K falls within a second value range, and a GP between the first time resource and the second time resource does not exist; and
sending, by the terminal device, the first RS on the first time resource, and sending the second RS on the second time resource.

2. The method according to claim 1, wherein
the first RS belongs to a first resource set, the second RS belongs to a second resource set, and the first resource set and the second resource set are different resource sets; or
the first RS and the second RS belong to a same resource set.

3. The method according to claim 1 or 2, wherein
that K falls within a first value range means that a value of K is less than or equal to a first threshold; or
that K falls within a second value range means that a value of K is greater than a first threshold, wherein
the first threshold is a natural number.

4. The method according to any one of claims 1 to 3, wherein a value of the first quantity meets at least one of the following:
the first quantity is a positive integer; or
the first quantity is less than or equal to K.

5. The method according to claim 3 or 4, wherein the method comprises:
determining, by the terminal device, the GP based on K and the first threshold.

6. The method according to any one of claims 1 to 5, wherein the method further comprises:
sending, by the terminal device, first information to a network device, wherein the first information indicates a reference value of the GP between two times of adj acent RS sending of the terminal device.

7. The method according to any one of claims 1 to 5, wherein the method further comprises:
receiving, by the terminal device, first signaling, wherein the first signaling indicates the first threshold.

8. The method according to any one of claims 1 to 5, wherein the first threshold is a predefined value.

9. The method according to any one of claims 3 to 8, wherein the first threshold is equal to 4.

10. An information transmission method, comprising:
determining, by a terminal device, a third time resource, wherein the third time resource comprises at least one time unit, and the third time resource is for sending a third reference signal RS;
determining, by the terminal device, a fourth time resource, wherein the fourth time resource comprises at least one time unit, and the fourth time resource is for sending a fourth RS;
a guard period GP between the third time resource and the fourth time resource comprises Z time units, and Z is a natural number;
the GP meets at least one of the following:
a quantity of the time units comprised in the GP is predefined or configured by using signaling;
a location of the GP is configured by using signaling; or
a location of the GP is related to the third time resource and the fourth time resource; and
sending, by the terminal device, the third RS on the third time resource, and sending the fourth RS on the fourth time resource.

11. The method according to claim 10, wherein
the third RS belongs to a third resource set, the fourth RS belongs to a fourth resource set, and the third resource set and the fourth resource set are different resource sets; or
the third RS and the fourth RS belong to a same resource set.

12. The method according to claim 10 or 11, wherein Z is 1; and
the Z time units are adjacent to the third time resource; or
there are M time units between the Z time units and the third time resource; or
the Z time units are adjacent to the fourth time resource; or
there are N time units between the Z time units and the fourth time resource, wherein
N and M are natural numbers, and N and M are predefined or configured by using signaling.

13. The method according to claim 10 or 11, wherein Z is greater than or equal to 2, and the Z time units are adjacent time units; and
the 1^{st} time unit in the Z time units is adjacent to the third time resource; or
there are L time units between the 1^{st} time unit in the Z time units and the third time resource; or
the last time unit in the Z time units is adjacent to the fourth time resource; or
there are Y time units between the last time unit in the Z time units and the fourth time resource, wherein
both L and Y are natural numbers, and L and Y are predefined or configured by using signaling.

14. The method according to any one of claims 10 to 13, wherein the method further comprises:
sending, by the terminal device, second information to a network device, wherein the second information indicates a reference value of the GP between two times of adj acent RS sending of the terminal device.

15. An information transmission method, comprising:
determining, by a network device, a first time resource, wherein the first time resource comprises at least one time unit, and the first time resource is for sending a first reference signal RS;
determining, by the network device, a second time resource, wherein the second time resource comprises at least one time unit, and the second time resource is for sending a second RS;
there are K time units between the first time resource and the second time resource, and K is a natural number; and
K falls within a first value range, and a guard period GP between the first time resource and the second time resource comprises a first quantity of time units; or
K falls within a second value range, and a GP between the first time resource and the second time resource does not exist; and
receiving, by the network device, the first RS on the first time resource, and receiving the second RS on the second time resource.

16. The method according to claim 15, wherein
the first RS belongs to a first resource set, the second RS belongs to a second resource set, and the first resource set and the second resource set are different resource sets; or
the first RS and the second RS belong to a same resource set.

17. The method according to claim 15 or 16, wherein
that K falls within a first value range means that a value of K is less than or equal to a first threshold; or
that K falls within a second value range means that s value of K is greater than a first threshold, wherein
the first threshold is a natural number.

18. The method according to any one of claims 15 to 17, wherein a value of the first quantity meets at least one of the following:
the first quantity is a positive integer; or
the first quantity is less than or equal to K.

19. The method according to claim 17 or 18, wherein the method comprises:
determining, by the network device, the GP based on K and the first threshold.

20. The method according to any one of claims 15 to 19, wherein the method further comprises:
receiving, by the network device, first information from a terminal device, wherein the first information indicates a reference value of the GP between two times of adjacent RS sending of the terminal device.

21. The method according to any one of claims 15 to 20, wherein the method further comprises:
sending, by the network device, first signaling, wherein the first signaling indicates the first threshold.

22. The method according to any one of claims 15 to 20, wherein the first threshold is a predefined value.

23. The method according to any one of claims 17 to 20, wherein the first threshold is equal to 4.

24. An information transmission method, comprising:
determining, by a network device, a third time resource, wherein the third time resource comprises at least one time unit, and the third time resource is for sending a third reference signal RS;
determining, by the network device, a fourth time resource, wherein the fourth time resource comprises at least one time unit, and the fourth time resource is for sending a fourth RS;
a guard period GP between the third time resource and the fourth time resource comprises Z time units, and Z is a natural number;
the GP meets at least one of the following:
a quantity of the time units comprised in the GP is predefined or configured by using signaling;
a location of the GP is configured by using signaling; or
a location of the GP is related to the third time resource and the fourth time resource; and
receiving, by the network device, the third RS on the third time resource, and receiving the fourth RS on the fourth time resource.

25. The method according to claim 24, wherein
the third RS belongs to a third resource set, the fourth RS belongs to a fourth resource set, and the third resource set and the fourth resource set are different resource sets; or
the third RS and the fourth RS belong to a same resource set.

26. The method according to claim 24 or 25, wherein Z is 1; and
the Z time units are adjacent to the third time resource; or
there are M time units between the Z time units and the third time resource; or
the Z time units are adjacent to the fourth time resource; or
there are N time units between the Z time units and the fourth time resource, wherein
N and M are natural numbers, and N and M are predefined or configured by using signaling.

27. The method according to claim 24 or 25, wherein Z is greater than or equal to 2, and the Z time units are adjacent time units; and
the 1^{st} time unit in the Z time units is adjacent to the third time resource; or
there are L time units between the 1^{st} time unit in the Z time units and the third time resource; or
the last time unit in the Z time units is adjacent to the fourth time resource; or
there are Y time units between the last time unit in the Z time units and the fourth time resource, wherein
both L and Y are natural numbers, and L and Y are predefined or configured by using signaling.

28. The method according to any one of claims 24 to 27, wherein the method further comprises:
receiving, by the network device, second information from a terminal device, wherein the second information indicates a reference value of the GP between two times of adjacent RS sending of the terminal device.

29. A communication apparatus, comprising:
a processing unit, configured to determine a first time resource, wherein the first time resource comprises at least one time unit, and the first time resource is for sending a first reference signal RS;
the processing unit is further configured to determine a second time resource, wherein the second time resource comprises at least one time unit, and the second time resource is for sending a second RS;
there are K time units between the first time resource and the second time resource, and K is a natural number; and
K falls within a first value range, and a guard period GP between the first time resource and the second time resource comprises a first quantity of time units; or
K falls within a second value range, and a GP between the first time resource and the second time resource does not exist; and
a transceiver unit, configured to: send the first RS on the first time resource, and send the second RS on the second time resource.

30. The apparatus according to claim 29, wherein
the first RS belongs to a first resource set, the second RS belongs to a second resource set, and the first resource set and the second resource set are different resource sets; or
the first RS and the second RS belong to a same resource set.

31. The apparatus according to claim 29 or 30, wherein
that K falls within a first value range means that a value of K is less than or equal to a first threshold; or
that K falls within a second value range means that a value of K is greater than a first threshold, wherein
the first threshold is a natural number.

32. The apparatus according to any one of claims 29 to 31, wherein a value of the first quantity meets at least one of the following:
the first quantity is a positive integer; or
the first quantity is less than or equal to K.

33. The apparatus according to claim 31 or 32, wherein the processing unit is further configured to:
determine the GP based on K and the first threshold.

34. The apparatus according to any one of claims 29 to 33, wherein the transceiver unit is further configured to:
send first information to a network device, wherein the first information indicates a reference value of the GP between two times of adjacent RS sending of the terminal device.

35. The apparatus according to any one of claims 29 to 33, wherein the transceiver unit is further configured to:
receive first signaling, wherein the first signaling indicates the first threshold.

36. The apparatus according to any one of claims 29 to 33, wherein the first threshold is a predefined value.

37. The apparatus according to any one of claims 31 to 36, wherein the first threshold is equal to 4.

38. A communication apparatus, comprising:
a processing unit, configured to determine a third time resource, wherein the third time resource comprises at least one time unit, and the third time resource is for sending a third reference signal RS;
the processing unit is further configured to determine a fourth time resource, wherein the fourth time resource comprises at least one time unit, and the fourth time resource is for sending a fourth RS;
a guard period GP between the third time resource and the fourth time resource comprises Z time units, and Z is a natural number;
the GP meets at least one of the following:
a quantity of the time units comprised in the GP is predefined or configured by using signaling;
a location of the GP is configured by using signaling; or
a location of the GP is related to the third time resource and the fourth time resource; and
a transceiver unit, configured to: send the third RS on the third time resource, and send the fourth RS on the fourth time resource.

39. The apparatus according to claim 38, wherein
the third RS belongs to a third resource set, the fourth RS belongs to a fourth resource set, and the third resource set and the fourth resource set are different resource sets; or
the third RS and the fourth RS belong to a same resource set.

40. The apparatus according to claim 38 or 39, wherein Z is 1; and
the Z time units are adjacent to the third time resource; or
there are M time units between the Z time units and the third time resource; or
the Z time units are adjacent to the fourth time resource; or
there are N time units between the Z time units and the fourth time resource, wherein
N and M are natural numbers, and N and M are predefined or configured by using signaling.

41. The apparatus according to claim 38 or 39, wherein Z is greater than or equal to 2, and the Z time units are adjacent time units; and
the 1^{st} time unit in the Z time units is adjacent to the third time resource; or
there are L time units between the 1^{st} time unit in the Z time units and the third time resource; or
the last time unit in the Z time units is adjacent to the fourth time resource; or
there are Y time units between the last time unit in the Z time units and the fourth time resource, wherein
both L and Y are natural numbers, and L and Y are predefined or configured by using signaling.

42. The apparatus according to any one of claims 38 to 41, wherein the transceiver unit is further configured to:
send second information to a network device, wherein the second information indicates a reference value of the GP between two times of adj acent RS sending of the terminal device.

43. A communication apparatus, comprising:
a processing unit, configured to determine a first time resource, wherein the first time resource comprises at least one time unit, and the first time resource is for sending a first reference signal RS;
the processing unit is further configured to determine a second time resource, wherein the second time resource comprises at least one time unit, and the second time resource is for sending a second RS;
there are K time units between the first time resource and the second time resource, and K is a natural number; and
K falls within a first value range, and a guard period GP between the first time resource and the second time resource comprises a first quantity of time units; or
K falls within a second value range, and a GP between the first time resource and the second time resource does not exist; and
a transceiver unit, configured to: receive the first RS on the first time resource, and receive the second RS on the second time resource.

44. The apparatus according to claim 43, wherein
the first RS belongs to a first resource set, the second RS belongs to a second resource set, and the first resource set and the second resource set are different resource sets; or
the first RS and the second RS belong to a same resource set.

45. The apparatus according to claim 43 or 44, wherein
that K falls within a first value range means that a value of K is less than or equal to a first threshold; or
that K falls within a second value range means that a value of K is greater than a first threshold, wherein
the first threshold is a natural number.

46. The apparatus according to any one of claims 43 to 45, wherein a value of the first quantity meets at least one of the following:
the first quantity is a positive integer; or
the first quantity is less than or equal to K.

47. The apparatus according to claim 45 or 46, wherein the processing unit is further configured to:
determine the GP based on K and the first threshold.

48. The apparatus according to any one of claims 43 to 47, wherein the transceiver unit is further configured to:
receive first information from a terminal device, wherein the first information indicates a reference value of the GP between two times of adj acent RS sending of the terminal device.

49. The apparatus according to any one of claims 45 to 48, wherein the transceiver unit is further configured to:
sending first signaling, wherein the first signaling indicates the first threshold.

50. The apparatus according to any one of claims 45 to 48, wherein the first threshold is a predefined value.

51. The apparatus according to any one of claims 45 to 48, wherein the first threshold is equal to 4.

52. A communication apparatus, comprising:
a processing unit, configured to determine a third time resource, wherein the third time resource comprises at least one time unit, and the third time resource is for sending a third reference signal RS;
the processing unit is further configured to determine a fourth time resource, wherein the fourth time resource comprises at least one time unit, and the fourth time resource is for sending a fourth RS;
a guard period GP between the third time resource and the fourth time resource comprises Z time units, and Z is a natural number;
the GP meets at least one of the following:
a quantity of the time units comprised in the GP is predefined or configured by using signaling;
a location of the GP is configured by using signaling; or
a location of the GP is related to the third time resource and the fourth time resource; and
a transceiver unit, configured to: receive the third RS on the third time resource, and receive the fourth RS on the fourth time resource.

53. The apparatus according to claim 52, wherein
the third RS belongs to a third resource set, the fourth RS belongs to a fourth resource set, and the third resource set and the fourth resource set are different resource sets; or
the third RS and the fourth RS belong to a same resource set.

54. The apparatus according to claim 52 or 53, wherein Z is 1; and
the Z time units are adjacent to the third time resource; or
there are M time units between the Z time units and the third time resource; or
the Z time units are adjacent to the fourth time resource; or
there are N time units between the Z time units and the fourth time resource, wherein
N and M are natural numbers, and N and M are predefined or configured by using signaling.

55. The apparatus according to claim 52 or 53, wherein Z is greater than or equal to 2, and the Z time units are adjacent time units; and
the 1^{st} time unit in the Z time units is adjacent to the third time resource; or
there are L time units between the 1^{st} time unit in the Z time units and the third time resource; or
the last time unit in the Z time units is adjacent to the fourth time resource; or
there are Y time units between the last time unit in the Z time units and the fourth time resource, wherein
both L and Y are natural numbers, and L and Y are predefined or configured by using signaling.

56. The apparatus according to any one of claims 52 to 55, wherein the transceiver unit is further configured to:
receive second information from a terminal device, wherein the second information indicates a reference value of the GP between two times of adjacent RS sending of the terminal device.

57. A communication apparatus, comprising a processor and a memory, wherein the processor is coupled to the memory, the memory is configured to store a computer program, and the processor is configured to execute the computer program stored in the memory, to enable the communication apparatus to perform the communication method according to any one of claims 1 to 9; or
to enable the communication apparatus to perform the communication method according to any one of claims 10 to 14; or
to enable the communication apparatus to perform the communication method according to any one of claims 15 to 23; or
to enable the communication apparatus to perform the communication method according to any one of claims 24 to 28.

58. A computer-readable storage medium, storing instructions, wherein when the instructions are run on a computer,
the computer is enabled to perform the communication method according to any one of claims 1 to 9; or
the computer is enabled to perform the communication method according to any one of claims 10 to 14; or
the computer is enabled to perform the communication method according to any one of claims 15 to 23; or
the computer is enabled to perform the communication method according to any one of claims 24 to 28.
